**Europäisches Patentamt**

**European Patent Office**

**Office européen des brevets**

(19)

(11) **EP 1 591 182 A2**

(12) **EUROPÄISCHE PATENTANMELDUNG**

(43) Veröffentlichungstag:
**02.11.2005  Patentblatt 2005/44**

(51) Int Cl.⁷: **B23B 51/02**

(21) Anmeldenummer: **05102946.0**

(22) Anmeldetag: **14.04.2005**

(84) Benannte Vertragsstaaten:
**AT BE BG CH CY CZ DE DK EE ES FI FR GB GR
HU IE IS IT LI LT LU MC NL PL PT RO SE SI SK TR**
Benannte Erstreckungsstaaten:
**AL BA HR LV MK YU**

(30) Priorität: **28.04.2004  DE 102004020672**

(71) Anmelder: **HILTI Aktiengesellschaft
9494 Schaan (LI)**

(72) Erfinder: **Würsch, Christoph
9470, Werdenberg (CH)**

(74) Vertreter: **Wildi, Roland
Hilti Aktiengesellschaft,
Corporate Intellectual Property,
Feldkircherstrasse 100,
Postfach 333
9494 Schaan (LI)**

(54) **Bohrkrone, Bohrsystem und Verfahren zur Bestimmung des elektromagnetischen Umfeldes einer Bohrkrone**

(57)      Erfindungsgegenstand ist eine Bohrkrone, ein Bohrsystem und ein Verfahren zur Bestimmung des elektromagnetischen Umfeldes einer Bohrkrone, insbesondere zum Detektieren von Bewehrungen in einem abzubauenden Untergrundmaterial. Zu diesem Zweck ist der Bohrkrone eine Sensorvorrichtung zugeordnet, die das elektromagnetische Umfeld der Bohrkrone oder dessen Änderung im Laufe eines Bohrvorgangs erfaßt und ein für unterschiedliche Maßnahmen oder Betriebsparameter-Einstellungen auswertbares Signal generiert.

FIG. 2D

EP 1 591 182 A2

**Beschreibung**

**HINTERGRUND DER ERFINDUNG**

**Gebiet der Erfindung**

Die Erfindung betrifft ein Verfahren zur Bestimmung des elektromagnetischen Umfeldes einer Bohrkrone, insbesondere zur Detektierung von Armierungen, sowie ein entsprechendes Bohrsystem und eine Bohrkrone bei deren Einsatz sich Armierungseisen unter Anwendung des Verfahrens rasch detektieren lassen.

**Beschreibung des einschlägigen Standes der Technik**

Beim Bohren mit Diamantkronen auf armierten Beton kommt es oft vor, daß die Bewehrung (Armierungseisen) angebohrt wird. Dies kann die Sicherheit von besonders stark belasteten Elementen beeinträchtigen, da die Struktur geschwächt wird. Außerdem ist es vorteilhaft für den Anwender, zu wissen, wodurch er gerade bohrt. Aus dem Bohrfortschritt allein kann er nicht feststellen, ob er auf ein Armierungseisen gestoßen ist oder nicht, denn eine Reduktion der Abbaugeschwindigkeit kann durch vielerlei Faktoren wie eine stumpfe Krone, ein Armierungseisen oder eine Änderung der Härte, der Zusammensetzung, etc. des Gefüges verursacht werden.

Wüßte der Anwender genau, welches die Ursache einer Reduktion des Bohrfortschrittes ist, so könnte er geeignete Gegenmaßnahmen treffen. Bei einer stumpfen Krone würde er die Krone ersetzen. Bei einer Änderung des Gefüges könnte er die Bohrparameter wie Drehmoment, Schnittgeschwindigkeit, Wasserzufuhr, Anpreßkraft, Bohrleistung, etc. entsprechend anpassen und/oder die Bohrkrone durch eine zum Bohren des vorliegenden Gefüges besser geeigneten Bohrkrone ersetzen. Nähert er oder stößt er auf ein Armierungseisen könnte er den Bohrvorgang abbrechen. Ist ein Durch- oder Anbohren einer Bewehrung beispielsweise aus Sicherheitsgründen unzulässig, so müßte er den Bohrprozeß abbrechen. Anderenfalls könnte er die Bohrparameter oder die Bohrkrone, wie oben beschrieben, anpassen bzw. austauschen, um ein schnelles Durchbohren der Bewehrung zu gewährleisten oder um die Bohrkrone zu schonen.

Aus der DE 33 24 615 A1 ist ein Bohrsystem bekannt, bei dem ein Metallsuchgerät und/oder ein Spannungsprüfer an einem Ausleger befestigt sind, der seinerseits an eine Bohrmaschine in Richtung des Bohrlochs ausrichtbar fixiert werden kann. Zweck des Metallsuchgerätes ist es, ein Anbohren von Wasserrohren oder stromführenden Leitung zu vermeiden, indem die Stelle, an der gebohrt werden soll, mit Hilfe des Metallsuchgerätes zuerst geprüft wird. Der Spannungsprüfer ermöglicht es einem Benutzer, festzustellen, ob Leitungen an der Bohrstelle unter Spannung stehen.

Dieses bekannte Bohrsystem erlaubt jedoch keine Bestimmung des elektromagnetischen Umfeldes einer Bohrkrone, die sich in einem Bohrloch befindet.

DE 40 27 020 C2 lehrt ein Verfahren und beschreibt eine Vorrichtung zur Feststellung des Vorhandenseins von metallischen Bewehrungselementen im Inneren eines Betonbauteils. Dabei ist eine längliche elektromagnetische Sonde vorgesehen, die in ein vorher gebohrtes Loch eingeführt werden kann, um Auskunft über die Tiefe von etwaigen Bewehrungselementen zu liefern. Auf diese Weise ist es möglich, Hinterschnittbohrungen in ausreichendem Abstand von etwaigen Bewehrungselementen auszuführen. Nachteilig ist, daß Löcher auf herkömmlicher Weise vorgebohrt werden müssen, und daß Messungen im Inneren des Bohrteils somit erst nach dem Bohren ausgeführt werden können.

DE 39 16 856 A1 offenbart eine Vorrichtung zum Auffinden und zum Schutz gegen das Anbohren von in Beton oder dergleichen verlegten Metallteilen, bei der ein Schwachstromkreis geschlossen wird, wenn die Bohrspritze auf eine Spannhülse, einen Spanndraht oder dergleichen trifft. Wird der Stromkreis geschlossen, so kann das Bohrgerät über Schaltkontakte in dessen Stromversorgung automatisch stillgesetzt werden. Es wird dabei angenommen, daß die verlegten Metallteile mindestens teilweise zugänglich sind und an einem Pol des Stromkreises angeschlossen werden können. Diese Vorrichtung bietet somit keine Möglichkeit, beispielsweise Bewehrungen, die vollständig im Beton eingebettet sind, zu detektieren und Eisentreffer zu verhindern.

DE 101 29 597 C1 beschreibt ein Werkzeug für Werkzeugmaschinen, bei dem die Form und/oder die Abmessung von Markierungen im Schneidbelag ein Kennzeichen für den Grad von Verschleiß bildet. Dadurch kann ein Verschleißgrad mit einem Sensor erfaßt und in einer Steuereinheit zu einem Signal verarbeitet werden, beispielsweise zu einem optischen, akustischen und/oder elektrischen Signal, über das eine das Werkzeug antreibende Maschine abgestellt werden kann. Hierdurch wird lediglich das Werkzeug, nicht jedoch das zu bearbeitende Stück geschützt bzw. überwacht.

DE 196 34 533 A1 beschreibt ein Verfahren und eine Vorrichtung zur Bestimmung von physikalischen und chemischen Parametern in mineralischen festen Medien, bei dem bzw. der eine Meßlösung während des Bohrens durch das Bohrloch gespült und anschließend untersucht wird. Die Meßlösung kann mittels elektrochemischen Sensoren für Durchflußanalysen untersucht werden, die beispielsweise in den die Meßlösung führenden Schlauchleitungen am Ausgang eines Bohrfußes angebracht sein können. Der beschriebene Aufbau ist komplex und erlaubt eine Untersuchung von lediglich einigen wenigen Bohrlöchern pro Stunde, insbesondere wenn physikalische und chemische Parameter des Mediums auch in Abhängigkeit von der Bohrtiefe bestimmt werden sollen.

EP 1 092 988 und EP 1 092 989 beschreiben einen induktiven Sensorkopf für Metalldetektoren bzw. eine induktive Sensoranordnung sowie ein Verfahren zur Detektierung eisenhaltiger Gegenstände, die sich in ein leichtes Werkzeug, beispielsweise in einen elektrisch betriebenen Bohrhammer, integrieren lassen.

Ähnlich der Lehre der DE 33 24 615 A1 erlauben jedoch auch diese Vorrichtungen keine Bestimmung des elektromagnetischen Umfeldes einer Bohrkrone, die sich in einem Bohrloch befindet.

In Anbetracht des oben genannten Standes der Technik liegt der Erfindung die Aufgabe zugrunde, eine Vorrichtung sowie ein Verfahren bereitzustellen, mit denen sich auf einfache Weise physikalische Parameter eines insbesondere mittels eines Bohrers mit Diamantkrone abzubauenden Mediums oder deren Änderung bestimmen lassen. Insbesondere sollen in Beton eingebettete ferromagnetische Armierungen rechtzeitig erkannt werden können, um sog. "Eisentreffer", d.h. ein Anbohren einer Armierung, zu verhindern.

## ZUSAMMENFASSUNG DER ERFINDUNG

Erfindungsgemäß wird die oben genannte Aufgabe durch eine Bohrkrone, ein Bohrsystem und ein Verfahren gelöst, bei denen eine Bestimmung des elektromagnetischen Umfelds einer Bohrkrone bzw. eine Bestimmung von Änderungsgrößen dieses Umfelds erfolgt.

Ebenfalls erfindungsgemäß wird eine Bohrkrone mit einer Sensorvorrichtung versehen, deren physikalische Kenngröße(n) vom elektromagnetischen Umfeld der Bohrkrone abhängt bzw. abhängen.

Im Sinne der Erfindung umfaßt der Begriff "elektromagnetisches Umfeld" sämtliche die Elektrizität und/oder den Magnetismus betreffenden Parameter, d.h. elektrische, magnetische, elektrochemische, elektromagnetische, etc. Parameter des Umfelds. Grundsätzlich wird keine Einschränkung bezüglich der Art der vom elektromagnetischen Umfeld der Bohrkrone beeinflußten physikalischen Kenngröße(n) der Sensorvorrichtung vorausgesetzt. Bevorzugt wird jedoch eine Sensorvorrichtung gewählt, deren optische oder elektrische Eigenschaften (oder Änderungen dieser Eigenschaften) Rückschlüsse auf den momentanen Zustand des elektromagnetischen Umfelds ermöglichen, da sich optische und elektrische Eigenschaften in ein gegebenenfalls bearbeitbares Signal zwecks Auswertung leicht umwandeln lassen.

Der Begriff "Umfeld der Bohrkrone" ist vorzugsweise als die der Bohrkrone unmittelbar oder mittelbar benachbarten Materialien zu verstehen, die sich in einem Umkreis der Bohrkrone befinden, dessen Radius (ungefähr) dem Bohrradius der Bohrkrone entspricht. Je nach Aufgabenstellung kann der Radius des erfaßten Umkreises zwischen 0,1 bis 1 mal dem Radius der Bohrkrone oder zwischen einem einfachen und einem dreifachen Wert des Radius der Bohrkrone liegen. Ein kleiner Umkreis führt zu einer hohen Empfindlichkeit, während ein großer Umkreis definitionsgemäß ein großes Gebiet erfaßt, was beispielsweise im Falle eines bevorstehenden "Eisentreffers" eine entsprechend große Vorwarnzeit ermöglicht. Selbstverständlich ist auch eine Erfassung eines asymmetrischen Umfelds möglich. Die hierzu geeigneten Konfigurationen der Sensorvorrichtung und/oder einer mit der Sensorvorrichtung verbundenen Meß- und/oder Auswerteschaltung entnimmt der Fachmann der auf dem Gebiet der Sensorvorrichtungen, Meß- und Auswerteschaltungen einschlägigen Literatur.

Durch die Erfindung wird eine "intelligente" Bohrkrone geschaffen, die beispielsweise eine geeignete, mit der Sensorvorrichtung verbundene Meß- und Auswerteschaltung in die Lage versetzt, einem Anwender kurz vor dem Anbohren eines Armierungseisens oder direkt beim Anbohren eines Armierungseisen ein entsprechendes Signal zu geben. Ebenfalls kann ein entsprechendes Signal der Sensorvorrichtung oder der mit der Sensorvorrichtung verbundenen Schaltung einer Steuereinheit direkt oder indirekt zugeführt werden, welche Bohrparameter wie Drehzahl, Drehmoment, Zusatzkinematik, etc. an aktuelle Bohrbedingungen anpaßt.

Gegenstände wie Armierungseisen, Wasserrohre, stromführende Leitungen, etc., deren Detektion mittels einer solch "intelligenten" Bohrkrone ermöglicht wird, werden in dieser Beschreibung unter anderem als "Target" bezeichnet.

Vorzugsweise sieht die Erfindung ein Bohrsystem mit einer eine Sensorvorrichtung aufweisenden Bohrkrone sowie mit einer entsprechenden, mit der Sensorvorrichtung verbundene Meß- und Auswerteschaltung, wobei die Sensorvorrichtung und die Meß- und Auswerteschaltung so gewählt und konfiguriert sind, daß die ferromagnetischen Eigenschaften und/oder die Leitfähigkeit eines Armierungseisens als Meßgrößen erfaßt werden können. Ein Vorteil einer Erfassung dieser Größen liegt darin, daß diese weitgehend unabhängig von beispielsweise wasserbedingter Feuchtigkeit, von der Temperatur und vom Schmutz sind. Ein großer Vorteil einer magnetischen, d.h. einer induktiven, Meßmethode ist, daß ein Armierungseisen kontaktlos und daher im voraus detektiert werden kann. Dies ist auch Meßverfahren auf der Basis des Wirbelstromeffekts der Fall. Da das Signal eines Wirbelstromaufnehmers sowohl von der Permeabilität $\mu$ als auch von der Leitfähigkeit $\sigma$ des zu detektierenden Materials abhängt, kann mit dieser Meßmethode beispielsweise sogar unterschieden werden, ob es sich um bei einem detektierten Metall um Eisen oder Nicht-Eisen Metalle handelt.

Die Erfindung eignet sich grundsätzlich für jede Art von Bohrkronen, insbesondere für solche mit folgenden charakteristischen Merkmalen:

- •   Bohrer mit einem Durchmesser unter einem Meter
- •   Bohrer mit einem Durchmesser unter einem halben Meter
- •   Bohrer mit einem Durchmesser zwischen 10 und 45 cm
- •   Bohrer mit Diamantkrone
- •   Bohrkronen mit lediglich einem abbauenden Element
- •   Bohrkronen, deren abbauende Elemente mit gleichem radialen Abstand zur Drehachse konzentrisch angeordnet

Erfindungsgemäß hängt eine physikalische Kenngröße, d.h. der Zustand, der Sensorvorrichtung vom elektromagnetischen Umfeld der Bohrkrone ab. Somit kann der Zustand der Sensorvorrichtung unter anderem auch von einem oder mehreren der folgenden Faktoren abhängen:

- •   der elektrischen Impedanz, insbesondere der elektrischen Leitfähigkeit, der Kapazität oder der Induktivität des der Bohrkrone bzw. dem Bohrloch benachbarten, umgebenden oder naheliegenden Materials
- •   der relativen Dielektrizität des der Bohrkrone benachbarten, umgebenden Untergrund-Materials
- •   der magnetischen Permeabilität des der Bohrkrone benachbarten, umgebenden oder naheliegenden Materials
- •   der magnetischen Flußdichte am Ort der Sensorvorrichtung
- •   der elektrischen Feldstärke am Ort der Sensorvorrichtung
- •   der Ausrichtung eines elektrischen oder magnetischen Feldes am Ort der Sensorvorrichtung

Ebenfalls kann das elektromagnetische Umfeld der Bohrkrone beim Bohrvorgang und somit der Zustand der Sensorvorrichtung unter anderem von einem oder mehreren der folgenden Faktoren abhängen:

- •   der Dichte des der Bohrkrone benachbarten, oder diese umgebenden oder naheliegenden Untergrundmaterials
- •   der Feuchtigkeit des der Bohrkrone benachbarten, oder diese umgebenden oder naheliegenden Materials
- •   der chemischen Zusammensetzung des der Bohrkrone benachbarten, oder diese umgebenden oder naheliegenden Materials
- •   metallische, elektrisch leitende, magnetische und/oder ferromagnetische Gegenstände in der Nähe der Bohrkrone
- •   stromführende und/oder magnetisierte Gegenstände in der Nähe der Bohrkrone

Besonders vorteilhaft ist es, wenn eine beispielsweise für den Bohrvorgang relevante Komponente der chemischen Zusammensetzung des der Bohrkrone beim Bohrvorgang benachbarten, umgebenden oder naheliegenden Materials mindestens aber eine die dessen elektromagnetische Eigenschaften maßgeblich bestimmt, erfaßt wird, und das elektromagnetische Umfeld der Bohrkrone somit Rückschlüsse über den Anteil dieser Komponente in der Zusammensetzung liefert.

Vorzugsweise enthält die Sensorvorrichtung mindestens einen Magnetfeldsensor, insbesondere einen Halbleitermagnetfeldsensor.

Ferromagnetische Bewehrungselement lassen sich besonders gut durch einen Magnetfeldsensor erkennen, dessen Ausgangsgröße von der Größe des durch den Sensor verlaufenden magnetischen Flusses oder von Änderungen des durch den Sensor verlaufenden magnetischen Flusses abhängt. Neben Halbleitermagnetfeldsensoren und Spulen mit oder ohne ferromagnetischen Kern können beispielsweise Fluxgate-Anordnungen als Magnetfeldsensor eingesetzt werden.

Vorzugsweise wird ein oder eine Mehrzahl von Magnetfeldsensor(en) in der Nähe der Schneid- oder Abbauelemente also möglichst nahe am Ort des Abbaus angebracht. Insbesondere Halbleitermagnetfeldsensor lassen sich als Miniaturbauelementen herstellen, was eine Montage in der Nähe der Abbauelemente erleichtert. Zur Familie der Halbleitermagnetfeldsensoren gehören Hall-Elemente, magnetoresistive (MR) Sensoren sowie Giant Magnetoresistive (GMR) Sensoren. Hall-Elemente reagieren auf eine Änderung der magnetischen Flußdichte am Ort des Sensors mit einer Strom- oder Spannungsänderung, welche ausgewertet werden kann. Magnetoresistive Sensoren und GMR-Sensoren reagieren mit einer Widerstandsänderung.

Hall-Sensoren sind heutzutage kostengünstiger, zuverlässiger und einfacher in eine Bohrkrone zu integrieren als Spulen. Ihre Empfindlichkeit ist jedoch geringer, außerdem werden Permanentmagnete oder ein Erregerfeld benötigt, um Armierungseisen detektieren zu können.

Vorzugsweise werden die Halbleitermagnetfeldsensoren jeweils auf einer der bevorzugten Drehrichtung der Bohrkrone entgegengesetzten Seite eines jeweiligen Abbauelements angeordnet. Auf diese Weise befinden sich die Halbleitermagnetfeldsensoren während einer abbauenden Drehung der Bohrkrone in bevorzugter Drehrichtung sozusagen "im Schatten" des jeweiligen Abbauelements, was die Halbleitermagnetfeldsensoren vor einer Beschädigung während des Bohrvorgangs schützt.

Vorzugsweise kann die Bohrkrone mit einem Permanentmagneten oder einem Elektromagneten versehen sein, dessen Magnetfeld vom elektromagnetischen Umfeld der Bohrkrone beeinflußt und von der Sensorvorrichtung erfaßt wird.

Durch einen Permanentmagneten oder einen Elektromagneten läßt sich ein statisches Magnetfeld oder ein magnetisches Wechselfeld generieren, welches beispielsweise bei Anwesenheit eines ferromagnetischen Armierungseisens verändert wird, und eine meßbare Änderung des magnetischen Flusses oder der magnetischen Flußdichte am Ort der Sensorvorrichtung hervorruft. Die Verwendung eines magnetischen Wechselfelds zur "Abtastung" des elektromagnetischen Umfelds der Bohrkrone ist besonders vorteilhaft, da sich die vom Wechselfeld hervorgerufene Beeinflussung des elektromagnetischen Umfelds der Bohrkrone, die von der Sensorvorrichtung erfaßt werden kann, ebenfalls zeitlich verändert und mit entsprechender Filterung eines über die Sensorvorrichtung gewonnenen Signals beispielsweise von "natürlich" vorkommenden elektromagnetischen Störgrößen unterschieden werden kann. Dies ermöglicht eine Erhöhung der Detektionsempfindlichkeit.

Ein statisches Magnetfeld kann natürlich vorkommende elektromagnetische Störgrößen "übertönen" und somit ebenfalls eine Erhöhung der Detektionsempfindlichkeit ermöglichen.

Vorzugsweise enthält die Sensorvorrichtung mindestens eine Spule. Diese kann sowohl als Detektionselement als auch als signalgebendes Element dienen.

Im Falle einer Nutzung als Detektionselement können durch Änderungen des elektromagnetischen Umfeldes der Spule hervorgerufene Änderungen der Induktivität oder Impedanz der Spule als Meßgröße zur Bestimmungen des elektromagnetischen Umfeldes der Bohrkrone dienen. Im Falle einer Nutzung als signalgebendes Element kann die Spule zur Generierung eines statischen Magnetfeldes oder eines magnetischen Wechselfeldes verwendet werden, wie oben beschrieben.

Neben ihrem Einsatz als magnetisch-induktives Element kann eine Spule auch zur Erzeugung von Wirbelströmen verwendet werden, deren Ausprägung von der elektromagnetischen Beschaffenheit der die Spule umgebenden Materialien abhängt. Folglich kann durch entsprechende Gestaltung oder Auswertung des die Spule treibenden Signals sowie durch entsprechende Auswertung der über die Spule abfließenden Wirbelstromverluste Auskunft über die elektromagnetische Beschaffenheit der die Spule umgebenden Materialien ermittelt werden. Hierdurch läßt sich die elektromagnetische Beschaffenheit auch von nicht-ferromagnetischen Materialien im Umfeld einer Bohrkrone bestimmen.

Eine Bifunktionalität der Spule, bei der sie sowohl als Detektionselement als auch als signalgebendes Element fungiert, ist in der schaltungstechnischen Realisierung aufwendig, erlaubt jedoch eine besonders einfache Realisierung eines aktiven Signalgebers und des Detektionselements.

Spulen haben den Vorteil, daß sie sowohl sehr günstig als auch sehr robust ausführbar sind. Zudem sind Spulen nach wie vor die besten "Spürnasen" für Eisen. Sie weisen eine extrem hohe Meßempfindlichkeit auf. Außerdem wirken sie auch als Antennen und können somit einen 50 Hz-Brummen (60 Hz in den USA) mitdetektieren. Entsprechend kann ein Bohrsystem auf der Basis einer mit einer Spule ausgestatteten Bohrkrone mit wenig Aufwand gleichzeitig als Livewire-Detektor ausgeführt werden. Zum Beispiel können stromführende Leitungen dadurch detektiert werden, indem das von der Spule aufgenommene Signal über einen schmalbandigen Paßbandfilter mit Mittelfrequenz bei f=50 Hz verstärkt und anschließend gleichgerichtet wird. Übersteigt das gleichgerichtete Signal einen bestimmten Schwellwert, so weist dies auf die Nähe einer stromführenden Leitung hin.

Vorzugsweise umfaßt die Sensorvorrichtung mindestens eine um die Rotationsachse der Bohrkrone gewickelte Spule, die in oder an der Bohrkrone angeordnet ist. Die Spule weist mindestens eine Windung auf und ist vorzugsweise in der Nähe der abbauenden Elemente der Krone angeordnet. "In der Nähe" heißt hier in der gleichen "vordersten" Hälfte, Drittel, Viertel, Fünftel oder Sechstel der Krone, in der sich die abbauenden Elemente befinden.

Die Bohrkrone selbst kann teilweise, primär oder vollständig aus ferromagnetischem Material, insbesondere aus Eisen bzw. Eisenlegierung, bestehen, so daß ein Pfad geringen magnetischen Widerstands von der Spule bis zu den abbauenden Elementen und umgekehrt realisiert ist.

Nähert sich die Bohrkrone einem ferromagnetischen Material, so ändert sich die Induktivität bzw. Impedanz der Spule. Mit verschiedenen bekannten Verfahren läßt sich die Induktivität bzw. Impedanz der Spule bzw. deren Änderung messen und auswerten, zum Beispiel durch Verstimmen eines elektrischen Schwingkreises oder durch Veränderung des Abgleichs einer Brückenschaltung. Somit kann die Spule eine Aussage über das elektromagnetische Umfeld der Bohrkrone liefern.

Vorzugsweise umfaßt die Sensorvorrichtung mindestens eine Erregerspule, insbesondere mindestens eine um die Rotationsachse der Bohrkrone gewickelte Erregerspule, sowie mindestens eine Sensorspule, insbesondere mindestens eine parallel zur Mantelfläche der Bohrkrone gewickelte Sensorspule, die in oder an der Bohrkrone angeordnet sind. In diesem Falle ist die Bohrkrone vorzugsweise aus nicht-ferromagnetischem und/oder schlecht leitendem Material, insbesondere aus nicht-ferromagnetischem Stahl, gefertigt. Die Erregerspule(n) und die Sensorspule(n) stehen vorzugsweise orthogonal zu einander.

Die für eine schlecht leitende Bohrkrone geforderte spezifische Leitfähigkeit s=1/r kann über die Eindringtiefe (Engl: skin depth) abgeschätzt werden. Hier bieten sich beispielsweise folgende Materialien an, bei denen sich eine Eindringtiefe z.B. bei 10 kHz ergibt, die größer als die übliche Wanddicke einer Bohrkrone ist.

| Materialbezeichnung | Leitfähigkeit σ ($10^6$ S/m) | Leitfähigkeit relativ zu Kupfer | Eindringtiefe bei 10 kHz in $\mu$m |
|---|---|---|---|
| 304 SS | 1.3 | 0.022 | 4400 |
| Titanlegierung | 0.59 | 0.010 | 6600 |

Vorzugsweise weist das Material der Bohrkrone einen spezifischen Widerstand von > $8\times10^{-7}$ Ωm auf. Je höher desto besser.

Wird ein magnetisches Wechselfeld durch eine beispielsweise um die Rotationsachse der Bohrkrone verlaufende Erregerspule, z.B. der oben beschriebenen Art, aufgebaut, so wird in einer oder mehreren beispielsweise kleinen und am Rande der Bohrkrone angebrachten Sensorspulen eine Spannung induziert. Diese ist um so größer, je größer die Kopplung zwischen der Sensor- und der Erregerspule ist. Befindet sich eine Bewehrung in der Nähe der Sensorspule, so bündelt diese die magnetischen Feldlinien und die Kopplung zwischen Erreger- und Sensorspule verändert sich, was gemäß der Erfindung gemessen und ausgewertet werden kann. Um die Kopplung zwischen Erreger- und Sensorspulen in Abwesenheit von externem, ferromagnetischem Material gering zu halten, werden die Erreger- und Sensorspulen vorzugsweise orthogonal zueinander angeordnet. Zudem sollte die Bohrkrone im Falle dieser Detektionsart zumindest im wesentlichen aus nicht-ferromagnetischem Material gefertigt sein, um eine Kopplung der Erreger- und Sensorspulen durch die Bohrkrone selbst zu unterdrücken. Aus gleichem Grunde sollte die Bohrkrone zumindest im wesentlichen aus schlecht leitendem Material gefertigt sein. Hier deutet der Ausdruck "im wesentlichen" darauf hin, daß der Hauptkörper der Bohrkrone aus dem bevorzugten Material gefertigt sein sollte, während Einzelteile wie abtragende Elemente, Teile der Sensorvorrichtung, Signalleitungen, eventuelle Befestigungsteile zur Verbindung der Bohrkrone an eine Antriebsmaschine, etc. aus einem nicht bevorzugten Material gefertigt sein können.

Vorzugsweise umfaßt die Sensorvorrichtung mindestens eine kapazitive Elektrode.

Kapazitive Elektroden können beispielsweise paarweise in der Nähe eines abbauenden Elements der Bohrkrone angebracht werden. Änderungen des elektromagnetischen Umfeldes der Bohrkrone rufen Änderungen zwischen den kapazitiven Elektroden hervor. Zum Beispiel kann die Anwesenheit eines Armierungseisen in der Nähe der Bohrkrone eine Änderung der Kapazität zwischen den Elektroden bewirken, da hinsichtlich der relativen Elektrizitätskonstanten gilt: $\varepsilon_{Beton} \approx 6$ bzw. $\varepsilon_{Eisen} \approx \infty$. Ebenfalls kann die Bohrkrone selbst als kapazitive Elektrode wirken. Berührt die Bohrkrone beispielsweise ein Armierungseisen, so vergrößert sich die Kapazität des die Bohrkrone als kapazitive Elektrode umfassenden elektrischen Systems.

Solche Änderungen der Kapazität lassen sich mittels bekannter Meßverfahren und -schaltungen beispielsweise nach dem Ladungstransferprinzips, durch eine Oszillatorschaltung oder eine Brückenschaltung messen.

Vorzugsweise umfaßt die Sensorvorrichtung mindestens zwei elektrisch leitende Bereiche, die voneinander elektrisch isoliert sind. Diese sind vorzugsweise in einem abtragenden bzw. abbauenden Bereich der Bohrkrone angeordnet.

Abhängigkeit von den elektromagnetischen Eigenschaften des die elektrisch leitenden Bereiche elektrisch verbindenden Materials, das beispielsweise das der Bohrkrone benachbarten Material umfassen kann, verhält sich die elektrische Impedanz zwischen den elektrisch leitenden Bereichen. Durch bekannte Meßverfahren und -schaltungen läßt sich diese Impedanz bestimmen, was Auskunft über das elektromagnetische Umfeld der Bohrkrone liefert.

Berührt zum Beispiel eine so gestaltete Bohrkrone ein Armierungseisen, so können zwei oder mehrere der elektrisch leitenden Bereiche durch das Armierungseisen selbst kurzgeschlossen werden.

Die elektrisch leitenden Bereiche können in einem abtragenden Bereich der Bohrkrone integriert werden oder gar durch die Bohrkrone selbst gebildet sein. Zum Beispiel kann eine elektrisch leitende Bohrkrone selbst als Kontakt dienen, so daß nur eine von der Bohrkrone elektrisch isolierte elektrische Verbindung zu einer entsprechenden Meß- und/oder Auswerteeinheit zurückgeführt werden muß.

Es ist sinnvoll, solche Kontakte, d.h. elektrisch leitenden Bereiche, an der vordersten Front der Bohrkrone anzuordnen, wenn ein elektrischer Kontakt über ein Armierungseisen möglichst früh geschlossen werden soll, um das Armierungseisen möglichst früh zu detektieren. Die Kontakte können allerdings durch den beim Abbau stattfindenden Abrieb der Bohrkrone abgerieben werden. Es kann daher vorteilhaft sein, sie federnd oder beweglich zu lagern, so daß sie sich immer auf der Höhe der abbauenden Elemente der Bohrkrone befinden.

Unter welchen Umständen welche Änderung der Impedanz zwischen welcher der elektrisch leitenden Bereiche auftritt, hängt unter anderem von der Gestalt der elektrisch leitenden Bereiche ab. Dies gilt auch für die an anderer Stelle erwähnten Elektroden, Spulen, usw. mutatis mutandis.

Eine Sensorvorrichtung auf der Basis von elektrisch leitenden Bereichen, die beispielsweise einer Widerstandsmessung und/oder als ohmsche Kontaktschalter dienen, hat den Nachteil, daß sie ein Armierungseisen erst dann detektieren, wenn dieses bereits berührt wird. Jedoch stehen diesem Nachteil die Vorteile von geringen Fertigungskosten und einer einfachen Auswerteelektronik entgegen. Die Kontaktelemente müssen nicht mal mit einer Feder vorgespannt sein, sondern können auch, wie oben erwähnt, Verschleißkontakte sein, die durch den Bohrprozeß selbst abgeschliffen werden.

Enthält die Bohrkrone Kontakte, Elektroden, Spulen oder Ähnliches, die mit einer Auswerteeinheit oder Meßschaltung elektrisch verbunden werden müssen, die nicht in oder an der Bohrkrone angeordnet ist, so muß eine entsprechende Verbindung in einer dem Fachmann bekannten Art und Weise geschaffen werden, z. B. eine Verbindung zwischen der sich drehenden Bohrkrone und einem quasistatischen System, beispielsweise der Antriebsmaschine. Eine solche Verbindung kann beispielsweise über Schleifkontakte hergestellt werden, die sinnvollerweise in der Nähe des Bohrfutters, d.h. der Werkzeugaufnahme, der Antriebsmaschine anzuordnen wären.

Vorzugsweise sind die elektrisch leitenden Bereiche derart im abtragenden Bereich angeordnet, daß sie auch bei einer Abnutzung des abtragenden Bereichs voneinander elektrisch isoliert bleiben.

Eine solche Anordnung der elektrisch leitenden Bereiche stellt sicher, daß ihre Funktionalität erhalten bleibt, auch wenn sie während des Bohrvorgangs teilweise abgenutzt werden. Ebenfalls kann eine solche Anordnung dem Schutz einer mit den elektrisch leitenden Bereichen verbundenen Meßschaltung dienen, d.h. insbesondere vor Kurzschlüssen in einer Meßschaltung schützen.

Vorzugsweise umfaßt die Sensorvorrichtung mindestens zwei elektrisch leitende Elemente, die elektrisch voneinander getrennt in Höhe der abtragenden Elemente federnd oder beweglich gelagert sind.

Auf diese Art und Weise kann vermieden werden, daß sich die elektrisch leitenden Elemente während des Bohrvorgangs übermäßig stark abnutzen, da sie mit weniger Kraft an das abzutragende Material gedrückt werden können, als die abbauenden Elemente der Bohrkrone. Jedoch kann bei entsprechender Lagerung der elektrisch leitenden Elemente sichergestellt werden, daß ein elektrischer Kontakt zwischen den jeweiligen elektrisch leitenden Elementen und dem abzutragenden Material stets besteht.

Vorzugsweise umfaßt die Bohrkrone eine Kommunikationsvorrichtung, die Sensorsignale von der Sensorvorrichtung direkt oder indirekt erhält, und diese in serielle Signale umwandelt, die über eine einzige Signalleitung kommunizierbar sind.

Im üblichen Betrieb werden ein oder mehrere Sensorsignale dem Sensorvorrichtung abgegriffen und einer Meß- und/oder Auswertevorrichtung zugeführt, die aus Kostengründen separat von der Bohrkrone, insbesondere in einer Antriebsmaschine, ausgeführt wird. Werden keine Gegenmaßnahmen ergriffen, besteht die Notwendigkeit eines rotatorischen Übertragungspfades für jedes der abgegriffenen Sensorsignale. Rotatorische Signalübertragungspfade sind nicht nur Rauschquellen, sondern häufig auch teuer, wartungsbedürftig und unzuverlässig. Zudem ist beispielsweise in einer Werkzeugaufnahme, wo solche rotatorische Schnittstellen vorzugsweise vorgesehen werden, nur begrenzt Platz für solche Vorrichtungen. Eine mögliche Lösung dieses Problems stellt eine Ausstattung der Bohrkrone mit einer seriellen Kommunikationsvorrichtung dar, die beispielsweise als Schnittstelle zwischen der Sensorvorrichtung und einer entsprechenden Meßvorrichtung oder als Schnittstelle zwischen einer mit der Sensorvorrichtung direkt verbundenen Meßvorrichtung und einer entsprechenden Auswertevorrichtung fungiert. Auf dieser Weise läßt sich die notwendige rotatorische Signalübertragung mittels einer oder wenigen Signalleitungen, d.h. insbesondere mit einer reduzierten Anzahl von Signalleitungen, bewerkstelligen. Zudem kann eine solche Kommunikationsvorrichtung, zur Reduktion von Übertragungsfehlern bzw. -rauschen beitragen, indem die Ausgangssignale beispielsweise mit einer ggf. informationsredundanten Fehlerreduzierungscode digital kommuniziert werden. Alternative könnten die Ausgangssignale in der Kommunikationsvorrichtung gespeichert werden, bis ein entsprechendes Bestätigungssignal vom Kommunikationspartner erhalten wird, damit sie anderen Falls erneut kommuniziert werden könnten. Entsprechende Kommunikationsvorrichtungen sind dem Fachmann bekannt und bedürfen hier keiner Erläuterung. Entsprechend wird auf die einschlägige Literatur zur seriellen Kommunikationsvorrichtungen verwiesen.

Vorzugsweise weist die Bohrkrone eine Meßvorrichtung auf, die Sensorsignale von der Sensorvorrichtung direkt oder indirekt erhält, und diese in Meßsignale umwandelt. Die Umwandlung der Sensorsignale in Meßsignale umfaßt vorzugsweise eine Verstärkung und/oder eine Meßgrößenumwandlung. Durch eine entsprechende, bohrkronenseitige Umwandlung der Sensorsignale kann eine Verfälschung der Sensorsignale auf deren Übertragungsweg unterdrückt werden. Insbesondere in Zusammenhang mit einer bohrkronenseitigen seriellen Kommunikationsvorrichtung zur Übertragung der Meßsignale bietet eine bohrkronenseitige Anordnung der Meßvorrichtung Vorteile bei der Unverfälschtheit der Meßergebnisse.

Um der Kommunikationsvorrichtung und/oder der Meßvorrichtung und/oder der Sensorvorrichtung mit Strom zu versorgen, weist die Bohrkrone vorzugsweise eine Spannungsversorgungsvorrichtung auf, die allein aus der rotatorischen Bewegung der Bohrkrone, beispielsweise relativ zu einem in der Antriebsmaschine angeordneten Permanentmagneten oder Elektromagneten, Energie gewinnt, die zur Stromversorgung einer oder mehrerer dieser Vorrichtungen dient. Auch hierdurch wird die Notwendigkeit einer rotatorischen elektrischen Verbindung vermieden. Entsprechende Spannungsversorgungsvorrichtung, insbesondere induktiv gekoppelte, stromrichtende und energiespeichernde Schaltungsanordnungen, sind dem Fachmann bekannt und bedürfen hier keine Erläuterung. Entsprechend wird auf die einschlägige Literatur zur kontaktlosen Stromversorgung verwiesen.

Die oben genanntem Kommunikations-, Meß- und/oder Stromversorgungsvorrichtungen lassen sich als integrierte Halbleiteranordnung beispielsweise in einstückiger Bauweise extrem kostengünstig, d.h. zu einem Preis der die Kosten einer Bohrkrone kaum beeinflußt, realisieren. Gleichwohl könnten diese Vorrichtungen beispielsweise als Modul realisiert werden, das derart in der Bohrkrone angeordnet ist, d.h. an entsprechenden Kontakte der Bohrkrone befestigt ist, das es sich mit üblichem Werkzeug aus einer "verbrauehten" Bohrkrone entfernen und in eine neue Bohrkrone einsetzen ließe. Entsprechendes gilt für als abbauende Elemente ausgeführte Sensorvorrichtung. Diese sind vorzugsweise so ausgeführt, daß sie nach "Verbrauch" mit üblichem Werkzeug von der Bohrkrone entfernt und an ihrer Stelle neue Sensorvorrichtungen eingesetzt werden können. Demgemäß können entsprechende Kontaktvorrichtungen sowohl an den als abbauende Elemente ausgestalteten Sensorvorrichtungen als auch am Hauptkronenteil der Bohrkrone versehen werden.

Vorzugsweise sieht die Erfindung vor, daß eine Bohrkrone gemäß den obigen Ausführungen in einem Bohrsystem Verwendung findet, das eine Meß- und/oder Auswerteschaltung bzw. -vorrichtung umfaßt, die den Zustand der Sensorvorrichtung derart mißt bzw. auswertet, daß ferromagnetisches Material in der Nähe der Bohrkrone erkannt und ein entsprechendes Signal ausgegeben werden kann.

Erfindungsgemäß kann die Meß- bzw. Auswertevorrichtung sowohl integral mit als auch separat von der Bohrkrone implementiert werden. Vorzugsweise wird die Meß- bzw. Auswertevorrichtung gänzlich oder im wesentlichen separat von der sich abnutzenden Bohrkrone ausgeführt.

Eine Ausführung der Meß- bzw. Auswertevorrichtung gänzlich oder im wesentlichen separat von der Bohrkrone ermöglicht Systemmodularität, was einerseits die Versatilität erhöht, die Kosten senkt und andererseits die Funktionalität des Bohrsystems erweitert. Die Systemkosten werden dadurch gesenkt, daß auf eine Meßvorrichtung in der Bohrkrone selbst verzichtet werden kann. Ebenfalls kostensenkend ist, wenn eine beispielsweise im Gehäuse der Antriebsmaschine des Bohrsystems angeordnete Meßvorrichtung derart gestaltet wird, daß eine Kompatibilität zu verschiedenen Sensorvorrichtungen gewährleistet ist. Dies ermöglicht einen Austausch der Bohrkrone, ohne einen entsprechenden Austausch der Meßvorrichtung zu erzwingen. Die Möglichkeit, die Bohrkrone den Bohrverhältnissen durch Austausch anzupassen, erweitert wiederum die Funktionalität des Bohrsystems. Wird die Meßvorrichtung gänzlich oder im wesentlichen separat von der als Verbrauchsmaterial einzustufenden Bohrkrone ausgeführt, so ergeben sich weniger Nachteile, wenn die Meßvorrichtung hochwertig und/oder vielseitig ausgeführt wird, was die Systemleistung verbessert.

Das Erkennen eines ferromagnetischen Materials in der Nähe einer Sensorvorrichtung ist beispielsweise aus dem Bereich der Metalldetektoren bekannt. Je nach Ausführungsart der Sensorvorrichtung stehen verschiedene bekannte Meß- und Auswerteverfahren und -schaltungen zur Verfügung. Entsprechend wird bezüglich der Implementierung einer Meß- und/oder Auswerteschaltung auf die einschlägige Literatur hingewiesen.

Erfindungsgemäß kann das von der Auswertevorrichtung ausgegebene Signal sowohl informativen als auch instruktiven Charakter haben. Zum Beispiel könnte das Signal dazu dienen, einem Benutzer des Bohrsystems darüber zu informieren, daß sich eine Bewehrung oder sonstiger metallischer Gegenstand in der Nähe der Bohrkrone befindet. Ebenfalls könnte signalisiert werden, daß eine Bewehrung angebohrt wurde, daß die Bohrkrone für das gegenwärtig abzubauende Material ungeeignet ist, daß sich eine Strom- oder Wasserleitung in der Nähe der Bohrkrone befindet, oder daß eine plötzliche Erhöhung des Feuchtigkeitsgrades des Bohrgrunds aufgetreten ist. Das Signal könnte dazu dienen, dem Benutzer eine Anpassung der Bohrparameter an die Bohrverhältnisse zu empfehlen oder eine solche Anpassung gar automatisch zu initiieren. Zum Beispiel könnte das Bohrsystem das Drehmoment, die Schnittgeschwindigkeit, der Wasserzufuhr, die Anpreßkraft, die Bohrleistung, etc. mittels des von der Auswertevorrichtung abgegebenen Signals automatisch an die Bohrverhältnisse anpassen.

In einer bevorzugten Ausführungsform umfaßt die Erfindung ein Bohrsystem mit einer Bohrkrone gemäß einer der obigen Ausführungen, wobei die Sensorvorrichtung mindestens eine Spule aufweist, eine Erregerschaltung, die die mindestens eine Spule derart erregt, daß Wirbelströme in dem die Spule umgebenden Material auftreten; und eine Meß- und Auswerteeinrichtung, die Wirbelstromverluste der Spule derart mißt und auswertet, daß die Beschaffenheit des der Spule benachbarten Materials ermittelt und ein entsprechendes Signal ausgegeben werden kann.

Eine Auswertung der über die Bohrkrone auftretenden Wirbelstromverluste ist insbesondere deshalb vorteilhaft, weil u. a. auch ein Detektieren von nicht-ferromagnetischen Materialien in der Nähe der Bohrkrone möglich ist.

Bezüglich der Implementierung der Meß- und Auswertevorrichtung wird auch hier auf die einschlägige Literatur, insbesondere die Literatur zu Wirbelstromverlusten und Detektionsschaltungen hingewiesen.

In einer bevorzugten Ausführungsform betrifft die Erfindung ein Bohrsystem, bei dem die Bohrkrone mit einem Potential gegenüber Erde beaufschlagt und ein Leckstrom gemessen wird, der über die Bohrkrone und den Bohrgrund (Masse) fließt.

Berührt die Bohrkrone eine Bewehrung, so ändert sich der elektrische Widerstand zwischen dem definierten Potential der Bohrkrone, beispielsweise eines Diamantgeräts, und Masse. Der elektrische Widerstand kann durch die Messung der Leckströme durch die Bohrkrone zur Erde gemessen werden. Durch den direkten ohmschen Kontakt zum Armierungseisen vergrößert sich die effektive leitende Berührungsfläche zwischen Bohrkrone und Untergrund, da die Oberfläche des gesamten Netzwerks der Bewehrung zur Oberfläche der Bohrkrone hinzukommt. Vorteilhaft ist, wenn der Hauptkörper der Bohrkrone selbst elektrische isoliert ist, und nur die abbauenden Elemente der Bohrkrone elektrisch leitend und mit einer entsprechenden Sensorvorrichtung, Meßvorrichtung und/oder Auswertevorrichtung kontaktiert sind.

In einer bevorzugten Ausführungsform betrifft die Erfindung ein Bohrsystem, bei dem die Bohrkrone mit einer Wechselspannung oder Wechselstrom beaufschlagt wird und die von der Bohrkrone abgestrahlte Leistung gemessen wird.

Gemäß dieser Ausführungsform wird der Bohrkrone eine elektrische Wechselspannung oder ein Wechselstrom aufgeprägt, deren bzw. dessen Frequenz vorzugsweise im kHz- bis MHz-Bereich liegt. Trifft die Bohrkrone auf ein Armierungseisen, so wirkt die Bewehrung als Antenne, und die abgestrahlte Leistung des Systems nimmt zu. Diese Änderung der abgestrahlten Leistung kann entsprechend den obigen Ausführungen gemessen und ausgewertet werden. Demgemäß umfaßt das Bohrsystern vorzugsweise eine Meß- und Auswertevorrichtung, die den gemessenen Leckstrom bzw. die gemessene Abstrahlleistung derart mißt und auswertet, daß ferromagnetisches Material in der Nähe der Bohrkrone erkannt und ein entsprechendes Signal generiert werden kann.

Vorzugsweise umfaßt das Bohrsystem eine Signalisierungsvorrichtung, die in Abhängigkeit von dem Signal eine Anpassung eines oder mehreren Bohrparameters automatisch vornimmt, und/oder einem Nutzer eine Anpassung eines oder mehrerer Bohrparameters wahrnehmbar signalisiert, und/oder einem Nutzer die Detektion eines Targets wahrnehmbar, insbesondere visuell und winkeltreu, signalisiert, und/oder einem Nutzer einen Austausch der Bohrkrone wahrnehmbar signalisiert, und/oder den Bohrvorgang automatisch abbricht. Vorzugsweise umfaßt die Anpassung eines oder mehreren Bohrparameters eine Anpassung des Drehmoments, der Schnittgeschwindigkeit, der Wasserzufuhr, der Anpreßkraft und/oder der Bohrleistung.

Die Vorzüge solcher Ausgestaltungen der erfindungsgemäßen Bohrsystems wurden oben schon ausführlich erläutert.

Zusammenfassend kann die Erfindung unter anderem in einer Bohrkrone gesehen werden, die mit einer Sensorvorrichtung ausgestattet ist. Die in der Bohrkrone implementierte Sensorvorrichtung basiert vorzugsweise auf eine oder mehrere der folgenden Meßprinzipien:

- induktiv
- ohmsch
- magnetisch
- wirbelstrom-basiert
- leckstrom-basiert
- antennenwirkung-basiert

Entsprechend läßt sich ein Meßwert der Sensorvorrichtung vorzugsweise über eine oder mehrere der folgenden Meßgrößen oder deren Änderung bestimmen:

- Frequenz
- Impedanz
- Spannung
- Widerstand
- Strom
- Güte Q
- elektrische Verlustleistung

Erfindungsgemäß stellen die folgenden Schaltungsanordnungen:

- eine Oszillatorschaltung
- einen induktiven oder ohmschen Spannungsteiler
- eine Voll-, Halb- oder Viertelbrückenschaltung
- eine Verstärkerschaltung

eine jeweils bevorzugte Meßschaltung für die von der Sensorvorrichtung gelieferte(n) Meßgröße(n) dar.

Eine Auswertung der von der Meßschaltung gelieferten, als Meßsignale bezeichneten Meßwerte umfaßt beispielsweise:

- eine Filterung der Meßsignale mit einem nachfolgenden Schwellwertvergleich zwecks Auslösung eines Trigger-Signals

- eine Mittelwertbildung aus den Meßsignalen oder eine Summation der Meßsignale mit einem nachfolgenden Schwellwertvergleich zwecks Auslösung eines Trigger-Signals
- Bildung eines Histogramms in Abhängigkeit vom Rotationswinkel der Bohrkrone mit einem nachfolgenden Schwellwertvergleich zwecks Auslösung eines Trigger-Signals

Die Bohrkrone kann Teil eines Bohrsystems sein, das die Meßschaltung und eine entsprechende Auswertevorrichtung vorzugsweise in einer Antriebsmaschine separat von der Bohrkrone umfaßt. Um die von der Sensorvorrichtung gelieferten Meßgrößen zur Antriebsmaschine, d.h. zur Meßschaltung, zu übertragen sieht die Erfindung unter anderem die Verwendung von

- induktiven (Koppeltransformator, induktiver Übertrager)
- ohmschen (Schleifringe)
- kapazitiven (kapazitiver Koppelkondensator)

Kopplern vor.

Es können eine oder mehrere Maßnahmen gegebenenfalls abhängig vom Auswertungsergebnis ergriffen werden. Hierzu gehören

- Anzeige des ausgewerteten Meßwerts, beispielsweise als Hinweis auf die Nähe eines Armierungseisens und insbesondere in winkeltreuer Darstellung
- Stoppen der Antriebsmaschine
- Änderung der Bohrparameter wie Drehzahl, Anpreßkraft, zusätzlicher Kinematik, usw.

Zwecks der besseren Verdeutlichung der Funktionsweise der Erfindung wird eine eventuelle Messung der von einer in der Bohrkrone gelagerten Sensorvorrichtung gelieferten Meßgrößen, d.h. die Erzeugung von Meßsignalen, an vielen Stellen der Beschreibung separat von einer eventuellen Auswertung dieser Meßsignale beschrieben. Selbstverständlich sind die Grenzen zwischen den Begriffen Messung, Auswertung und Detektion fließend. Entsprechend kann eine erfindungsgemäße Auswertung eine entsprechende Messung umfassen, und umgekehrt, sowie eine erfindungsgemäße Detektion sowohl eine Messung als auch eine Auswertung umfassen kann.

Der Signalweg von der Sensorvorrichtung über eine eventuelle Meßvorrichtung und eine eventuelle Auswertevorrichtung wird vorzugsweise in zwei Teile aufgeteilt werden, nämlich in einen analogen Teil und einen digitalen Teil. Dabei kann es eine Aufgabe des analogen Teils sein, die Signale der Sensorvorrichtung in eine beispielsweise für die Auswertevorrichtung oder eine Steuereinrichtung des Bohrsystems günstige Form zu bringen. Dies kann beispielsweise in Form einer analogen Verstärkung, Übertragung (z.B. durch induktive oder kapazitive Kopplung) und/ oder Filterung erfolgen. An der Schnittstelle des analogen Teils zum digitalen Teil erfolgt eine Analog-Digital-Wandlung nach bekannter Art. Zum Beispiel können analoge Spannungen mittels eines A/D-Wandlers in digitale Spannungen oder analoge Frequenzanteile in "digitale" Spannungspulsen einer gegebenen Frequenz umgewandelt werden. Vorzugsweise umfaßt der digitale Teil eine digitale Signalauswertung beispielsweise mittel Software, deren Aufgabe es sein kann, aus den detektierten, gegebenenfalls noch mit Fehlern und Rauschen behafteten Meßsignalen mit hoher Wahrscheinlichkeit abzuleiten, ob sich tatsächlich ein Armierungseisen vor der Bohrkrone befindet. Ebenso kann zum digitalen Teil ein Entscheidungsprozeß bezüglich der Maßnahmen gehören, die beispielsweise nach einer Detektion eines Armierungseisens ergriffen werden sollen (Anzeige, Motor herunterfahren,...).

## KURZE BESCHREIBUNG DER FIGUREN

Die Erfindung und vorteilhafte Einzelheiten derselben werden nachfolgend unter Bezug auf die Zeichnung in beispielhaften Ausführungsformen näher erläutert ohne daß der jeweils grundsätzliche Erfindungsgedanke dadurch in irgendeiner Weise beschränkt sein soll, da dem Fachmann aufgrund der mit der Erfindung vermittelten Lehre zahlreiche Gestaltungsvarianten zur Verfügung gestellt werden ohne den Rahmen der Erfindung zu verlassen. Es zeigen:

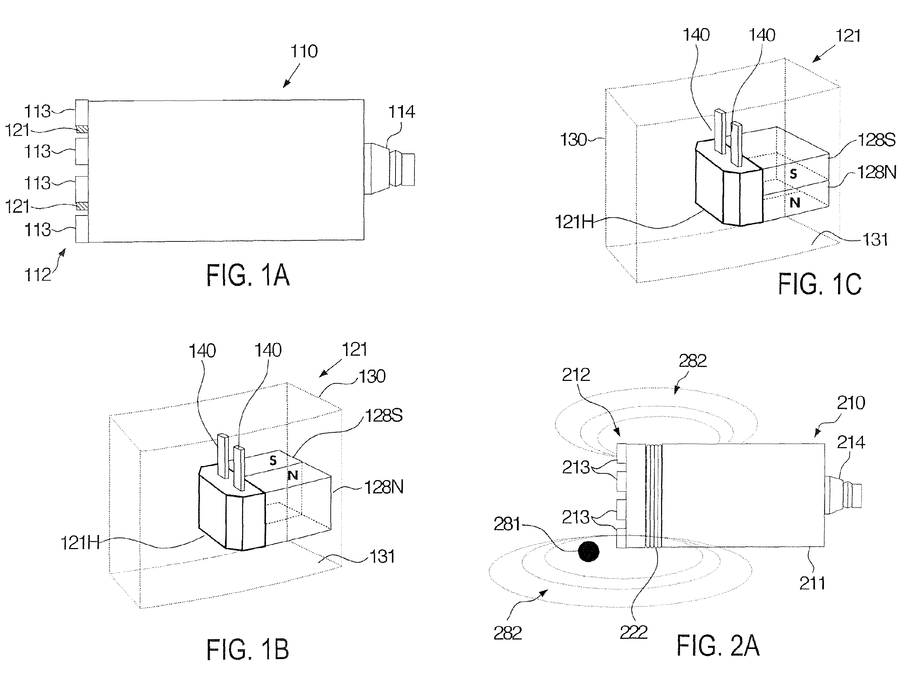

Figur 1A     eine Bohrkrone gemäß einem ersten Ausführungsbeispiel der Erfindung;
Figur 1     Bein Halbleitermagnetfeldsensor gemäß einem weiteren Ausführungsbeispiel der Erfindung;
Figur 1C     ein Halbleitermagnetfeldsensor gemäß einem weiteren Ausführungsbeispiel der Erfindung;
Figur 2A     eine Bohrkrone gemäß einem weiteren Ausführungsbeispiel der Erfindung;
Figur 2B     ein induktives Element gemäß einem weiteren Ausführungsbeispiel der Erfindung;
Figur 2C     ein induktives Element gemäß einem weiteren Ausführungsbeispiel der Erfindung;
Figur 2D     eine Bohrkrone mit einer Sensorvorrichtung gemäß dem Ausführungsbeispiel der Figur 2C;

Figur 2E    eine Abwandlung des Ausführungsbeispiels der Figur 2D;

Figur 3A    eine Bohrkrone gemäß einem weiteren Ausführungsbeispiel der Erfindung;

Figur 3B    ein Ausführungsbeispiel eines induktiven Elements gemäß einem weiteren Ausführungsbeispiel der Erfindung;

Figur 3C    eine Bohrkrone gemäß einem weiteren Ausführungsbeispiel der Erfindung;

Figur 4A    Details eines Bohrsystems gemäß einem weiteren Ausführungsbeispiel der Erfindung;

Figur 4B    ein abbauendes Element einer Bohrkrone gemäß einem weiteren Ausführungsbeispiel der Erfindung;

Figur 4C    ein abbauendes Element einer Bohrkrone gemäß einem weiteren Ausführungsbeispiel der Erfindung;

Figur 4D    ein abbauendes Element einer Bohrkrone gemäß einem weiteren Ausführungsbeispiel der Erfindung;

Figur 4E    ein abbauendes Element einer Bohrkrone gemäß einem weiteren Ausführungsbeispiel der Erfindung;

Figur 4F    eine Bohrkrone gemäß einem weiteren Ausführungsbeispiel der Erfindung;

Figur 5A    eine Bohrkrone gemäß einem weiteren Ausführungsbeispiel der Erfindung;

Figur 5B    eine Sensorvorrichtung gemäß einem weiteren Ausführungsbeispiel der Erfindung;

Figur 6A    ein Bohrsystem gemäß einem weiteren Ausführungsbeispiel der Erfindung;

Figur 6B    eine Kopplung eines Oszillators an einen Parallelschwingkreis mittels eines transformatorischen Übertragers gemäß einem weiteren Ausführungsbeispiel der Erfindung;

Figur 6C    ein Ersatzschaltbild der in Figur 6B dargestellten Schaltung;

Figur 6D    der Frequenzverlauf der Oszillatorimpedanz aus der Schaltungsanordnung der Figur 6C;

Figur 6E    ein vereinfachtes Ersatzschaltbild der in Figur 6C dargestellten Schaltung;

Figur 6F    ein reduziertes Ersatzschaltbild der in Figur 6E dargestellten Schaltung;

Figur 6G    Änderung der Resonanzfrequenz der Schaltung der Figur 6F als Funktion der Sensorinduktivität;

Figur 6H    Impedanz der Schaltung der Figur 6F für verschiedene Sensorinduktivitäten;

Figur 6I    eine an einen LC-Oszillator gekoppelte Bohrkrone gemäß einem weiteren Ausführungsbeispiel der Erfindung;

Figur 6J    ein reduziertes Schaltbild der in Figur 6I dargestellten Schaltung;

Figur 7A    ein Bohrsystem gemäß einem weiteren Ausführungsbeispiel der Erfindung;

Figur 7B    ein Bohrsystem gemäß einem weiteren Ausführungsbeispiel der Erfindung;

Figur 7C    eine Kopplung eines Oszillators an einen Serienschwingkreis mittels eines transformatorischen Übertragers gemäß einem weiteren Ausführungsbeispiel der Erfindung;

Figur 7D    ein reduziertes Ersatzschaltbild der in Figur 7C dargestellten Schaltung;

Figur 7E    den Frequenzverlauf der Oszillatorimpedanz bei der Schaltungsanordnung der Figur 7D;

Figur 7F    Änderung der Resonanzfrequenz der Schaltung der Figur 7D als Funktion der Sensorinduktivität;

Figur 8A    ein Bohrsystem gemäß einem weiteren Ausführungsbeispiel der Erfindung;

Figur 8B    eine Kopplung eines Oszillators an einen Serienschwingkreis mittels eines kapazitiven Übertragers gemäß einem weiteren Ausführungsbeispiel der Erfindung;

Figur 9A    eine allgemeine Anordnung zur Wirbelstrommessung; ;

Figur 9B    ein Bohrsystem gemäß einem weiteren Ausführungsbeispiel der Erfindung;

Figur 9C    den allgemeinen Verlauf der Induktivität und des äquivalenten Verlustwiderstandes als Funktion des Abstandes bei einer Wirbelstrommessung;

Figur 9D    eine Treiberschaltung für einen Wirbelstromsensor;

Figur 9E    eine Meß- und Auswerteschaltung für einen Wirbelstromsensor;

Figur 10    ein Bohrsystem gemäß einem weiteren Ausführungsbeispiel der Erfindung;

Figur 11    ein Bohrsystem gemäß einem weiteren Ausführungsbeispiel der Erfindung;

Figur 12    einen Spannungsteiler mit Spule;

Figur 13A    einen Serienschwingkreis;

Figur 13B    einen Parallelschwingkreis;

Figur 14    einen Relaxationsoszillator;

Figur 15A    den simulierten Umriß einer Bohrkrone sowie fünf Armierungseisen;

Figur 15B    die gemäß Figur 15A simulierte, normierte Widerstandsänderung eines mittels ohmscher Kontakte gewonnenen Meßsignals als Funktion des Drehwinkels der Bohrkrone;

Figur 15C    die gemäß Figur 15A simulierte, normierte Spannungswerte eines mittels eines Hall-Sensors gewonnenen Meßsignals als Funktion des Drehwinkels der Bohrkrone;

Figur 15D    die gemäß Figur 15A simulierten, normierten Frequenzänderungen eines mittels eines induktiven Näherungssensors gewonnenen Meßsignals als Funktion des Drehwinkels der Bohrkrone;

Figur 16    eine Signalisierungsvorrichtung eines erfindungsgemäßen Bohrsystems gemäß einem weiteren Ausführungsbeispiele;

**BESCHREIBUNG DER BEVORZUGTEN AUSFÜHRUNGSBEISPIELE**

## 1. BOHRKRONEN MIT SENSORVORRICHTUNG

### 1.1. Halbleitermagnetfeldsensor

Figur 1A zeigt ein erstes Ausführungsbeispiel einer erfindungsgemäßen Bohrkrone 110 mit einem Hauptkronenteil 111, einem abbauenden Bereich 112, mehreren abbauenden Elementen 113 und einem Befestigungsteil 114 und mehrere Halbleitermagnetfeldsensoren 112 als erfindungsgemäße Sensorvorrichtung, die im abbauenden Bereich 112 angeordnet sind. Der Zustand der jeweiligen Halbleitermagnetfeldsensoren 121 hängt vom elektromagnetischen Umfeld der Bohrkrone 110 ab. Über das Befestigungsteil 114 läßt sich die Bohrkrone 110 beispielsweise mit der Antriebswelle einer Antriebsmaschine koppeln. Die abbauenden Elemente 113 können integral mit dem Hauptkronenteil 111 ausgeführt, oder aber als separate Einheiten implementiert sein, die mittels eines entsprechenden Befestigungsverfahren oder entsprechender Fixierelemente lösbar oder nichtlösbar an den Hauptkronenteil 111 befestigt werden.

Als Halbleitermagnetfeldsensor 121 können zum Beispiel Hall-Elemente, magnetoresistive Sensoren und sogenannte Giant Magnetoresistive (GMR-) Sensoren verwendet werden. Vorzugsweise sind die Halbleitermagnetfeldsensoren 121 jeweils auf einer der bevorzugten Drehrichtung der Bohrkrone 110 entgegengesetzten Seite eines jeweiligen abbauenden Elements 113 angeordnet, befinden sich also während einer abbauenden Drehung der Bohrkrone 110 in bevorzugter Drehrichtung sozusagen "im Schatten" des jeweiligen abbauenden Elements 113 und sind so vor Beschädigung während des Bohrvorgangs geschützt.

Durch die Anordnung der Halbleitermagnetfeldsensoren 121 im abbauenden Bereich 112 der Bohrkrone 110 kann insbesondere das elektromagnetische Umfeld der Bohrkrone 110, das sich in unmittelbarer Nähe des abbauenden Bereichs 112 der Bohrkrone 110 befindet, untersucht bzw. ausgewertet werden.

Figuren 1B und 1C zeigen jeweilige schematische Detailansichten einer möglichen Anordnung eines Hall-Sensors 121H mit zwei Permanentmagneten 128S, 128N, die beispielsweise als Halbleitermagnetfeldsensoren 121 in einer Bohrkrone gemäß Figur 1A Anwendung finden könnte. Der Hall-Sensor 121H sowie die beiden Permanentmagnete 128S, 128N sind in einen Kunststoffmantel, beispielsweise in eine Vergußmasse 130, oder in ein nicht-ferromagnetisches Metall zwecks Formgebung eingebettet. Das Feld, das die beiden Permanentmagneten 128S, 128N generieren, durchflutet den Hall-Sensor 121H senkrecht zu seiner sensitiven Achse, d.h. wenn kein Eisen in der Nähe ist, so mißt der Hall-Sensor 121H kein Feld. Durch ein Armierungseisen in der Nähe werden die Feldlinien abgelenkt. Es entsteht eine Komponente, die in die Richtung der sensitiven Achse des Hall-Sensors 121H zeigt. Diese wird vom Hall-Sensor 121H wahrgenommen.

Es ist vorteilhaft, wie gezeigt, einen Zwei-Draht-Hall-Sensor 121H anstatt eines Drei-Draht-Hall-Sensors zu verwenden, um den Verdrahtungs- und Übertragungsaufwand zu verringern.

In Figur 1B sind die beiden Permanentmagneten 128S, 128N so angeordnet, daß ihre respektive magnetische Hauptachse senkrecht zu einer als Verschleißfläche 131 vorgesehene Seite des durch die Vergußmasse 130 gebildeten Halbleitermagnetfeldsensors 121 ausgerichtet sind. In der Figur 1C sind die beiden Permanentmagneten 128S, 128N so angeordnet, daß ihre respektive magnetische Hauptachse parallel zur Verschleißfläche ausgerichtet sind. Je nach Anordnung des Hall-Sensors 121H und der Orientierung des magnetischen Erregerfelds läßt sich eine relativ zur vorgesehenen Verschletβfläche richtungsabhängige Empfindlichkeit der Sensorvorrichtung einstellen.

Erfindungsgemäß sind selbstverständlich auch andere, nicht gezeigte Anordnungen des Hallsensors 121H zu einem Permanentmagneten 128 möglich und sinnvoll. Insbesondere sind diejenigen Anordnungen vorteilhaft, bei denen der Hall-Sensor 121 H in Abwesenheit eines Armierungseisens in seiner Meßrichtung im wesentlichen kein Feld mißt, d.h. eine Nullfeldposition einnimmt, aber bei der das Feldlinienbild verzerrt wird, und der Hall-Sensor eine Komponente dieses verzerrten Feldes mißt, sobald sich ein Armierungseisen dem Halbleitermagnetfeldsensoren 121 auf beispielsweise ein paar Millimeter nähert.

### 1.2. Spule

Figur 2A zeigt ein weiteres Ausführungsbeispiel der Erfindung, wobei eine Bohrkrone 210 analog der in Figur 1 gezeigten Bohrkrone 110 einen Hauptkronenteil 211, einen Befestigungsteil 214 sowie einen abbauenden Bereich 212 mit mehreren abbauenden Elementen 213 aufweist. Gemäß dem dargestellten Ausführungsbeispiel ist die Bohrkrone 210 mit einer Spule 222 ausgestattet, die als erfindungsgemäße Sensorvorrichtung fungiert.

Die Spule 222 wird vorzugsweise mit einer Detektorschaltung verbunden, die gemäß dem bekannten Prinzip eines Metalldetektors die Spule 222 erregt und deren Impedanzänderungen mißt und auswertet. Nähert sich die Bohrkrone 210 einem Armierungseisen 281, so ändert sich der Verlauf und die Stärke das durch die erregte Spule 222 induzierte Magnetfeld 282, was wiederum eine Änderung der Impedanz der Spule 222 hervorruft. So läßt sich beispielsweise die Nähe eines Armierungseisens zur Bohrkrone 210 feststellen.

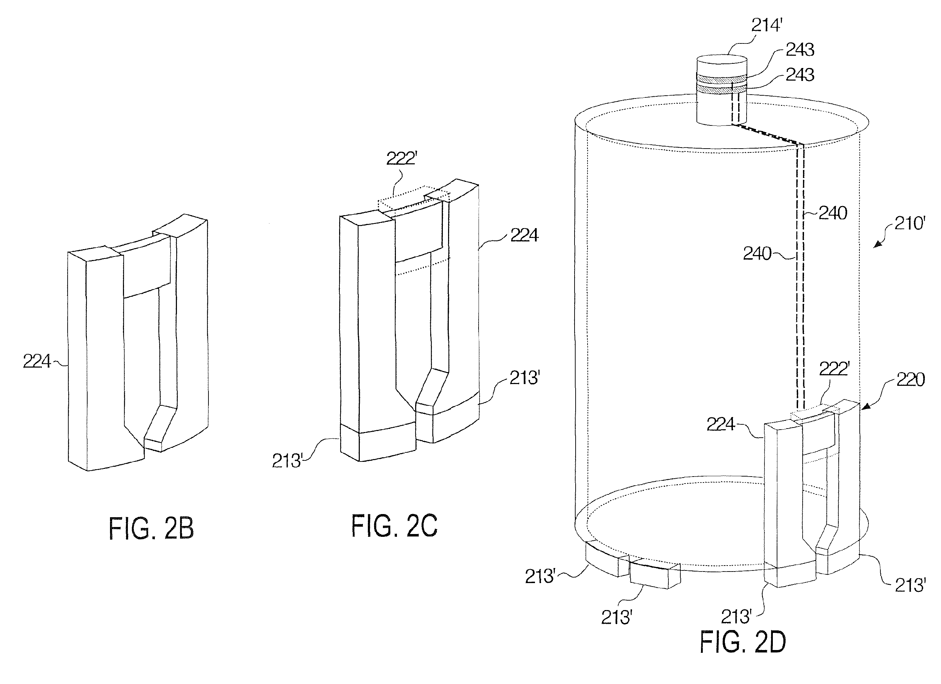

Die Figuren 2B und 2C zeigen jeweilige Ausführungsbeispiele eines induktiven Elements, das in einer Bohrkrone als Sensorvorrichtung verwendet werden kann. Gezeigt wird ein U-förmiges Joch 224, das zwei Jochschenkel sowie ein die Jochschenkel verbindendes Verbindungsstück aufweist. Das Joch ist aus einem Material hoher Permeabilität, insbesondere aus einem ferromagnetischen Metall, gefertigt und weist am offenen Ende seine U-Form einen Luftspalt auf, der schmaler ist, als die Distanz zwischen den Jochschenkeln. Eine Spule 222' wird um das Joch 224, vorzugsweise um das Verbindungsstück, gewickelt, um eine Spule 222' hoher Güte zu realisieren. Beim Ausführungsbeispiel der Figur 2C sind abbauende Elemente 213' am jeweiligen Jochschenkelende neben dem Luftspalt angeordnet. Auch die abbauenden Elemente 213' sind vorzugsweise aus einem Material hoher Permeabilität, insbesondere aus einem ferromagnetischen Metall, gefertigt. Auf diese Wiese verursacht ein Gegenstand hoher Permeabilität wie zum Beispiel ein Armierungseisen in der Nähe der abbauenden Elementen 213' effektiv einen leicht detektierbaren, magnetischen Kurzschluß der Spule 222' über das Joch 224 verlängert durch die abbauenden Elemente 213'.
Figur 2D zeigt ein Ausführungsbeispiel einer Bohrkrone 210' mit einer Sensorvorrichtung in Form einer gemäß dem Ausführungsbeispiel der Figur 2C gebildeten Joch-Spulen-Kombination.

Die Wicklungen der Spule 222' sind über Leitungen 240 mit jeweiligen am Umfang eines Befestigungsteils 214' der Bohrkrone 210' angeordneten Schleifringen 243. Über die Schleifringe 243 läßt sich ein Stromkreis zwischen der an der rotierenden Bohrkrone 210' montierten Spule 222' und einem quasi-stationären Meßvorrichtung herstellen.

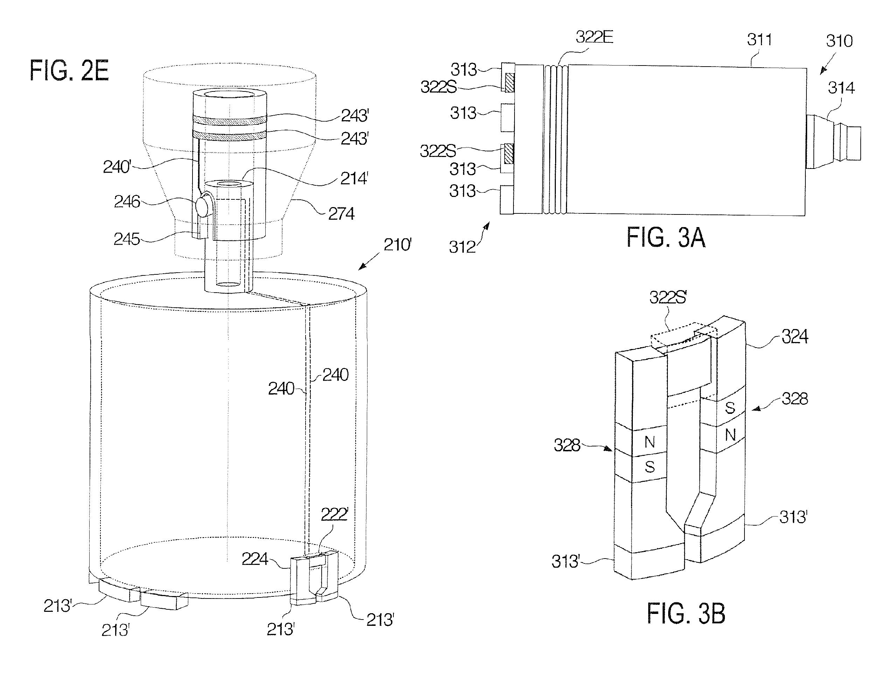

Die Schleifringe 243 müssen nicht notwendigerweise am Befestigungsteil 214' der Bohrkrone 210' angeordnet sein. Figur 2E zeigt eine Abwandlung des Ausführungsbeispiels der Figur 2D, bei der die Schleifringe 243' von einer Werkzeugaufnahme 274 einer zum Antrieb einer Bohrkrone geeigneten Antriebsmaschine umfaßt sind. Ein ohmscher Signalpfad zwischen Wicklungsenden der Spule 222' und den jeweiligen Schleifringen 243' kann über in oder an der Bohrkrone 210' angeordneten Leitungen 240 sowie über in oder an der Werkzeugaufnahme angeordneten Leitungen 240' hergestellt werden. Eine kostengünstige trennbare ohmsche Verbindung der Leitungen 240' der Werkzeugaufnahme mit jeweiligen Leitungen 240 der Bohrkrone kann, wie gezeigt, beispielsweise über jeweilige, mit entsprechenden leitenden und isolierenden Bereichen ausgeführte Stifte 246 am Befestigungsteil 214' der Bohrkrone 210' erfolgen, die jeweilige Kontaktflächen 245 der Werkzeugaufnahme kontaktieren. Auf diese Weise wird eine einfache Austauschbarkeit von Bohrkronen mit unterschiedlichen Sensorvorrichtungen gewährleistet. Zudem können die Stifte 246 zur Kraftübertragung von der Werkzeugaufnahme 274 zur Bohrkrone beitragen.

Figur 3A zeigt ein weiteres Ausführungsbeispiel der Erfindung, bei dem eine Bohrkrone 310 analog der in Figur 1 gezeigten Bohrkrone 110 einen Hauptkronenteil 311, einen abbauenden Bereich 312, mehrere abbauende Elementen 313 und einen Befestigungsteil 314 aufweist. Gemäß dem dargestellten Ausführungsbeispiel ist die Bohrkrone 310 sowohl mit einer Erregerspule 322E als auch mit mehreren im abbauenden Bereich 312 der Bohrkrone 310 angeordneten Sensorspulen 322S ausgestattet, wobei letztere als erfindungsgemäße Sensorvorrichtung fungieren.

Analog dem Ausführungsbeispiel der Figur 2A induziert die Erregerspule 322E ein Magnetfeld, dessen Form und Stärke die Impedanz der Sensorspulen 322S beeinflußt, was eine Auskunft über das elektromagnetische Umfeld der Bohrkrone 310 liefern kann. Durch die dargestellte Anordnung der Sensorspulen 322S im abbauenden Bereich 312 der Bohrkrone 310 kann insbesondere das elektromagnetische Umfeld der Bohrkrone 310, das sich in unmittelbarer Nähe des abbauenden Bereichs 312 der Bohrkrone 310 befindet, untersucht bzw. ausgewertet werden.

Figur 3B zeigt ein Ausführungsbeispiel eines induktiven Elements, das sowohl als Magnetfelderreger als auch als Magnetfeldsensor im Sinne einer erfindungsgemäßen Sensorvorrichtung fungieren kann.

Das gezeigte induktive Element umfaßt ein U-förmiges Joch 324, das zwei Jochschenkel sowie ein die Jochschenkel verbindendes Verbindungsstück aufweist. Die Jochschenkel sind jeweils als Permanentmagnet 328 unterschiedlicher Polarität ausgeführt, so daß das Joch 324 ein einheitliches magnetisches Feld aufbaut. Das Joch ist aus einem Material hoher Permeabilität, insbesondere aus einem ferromagnetischen Metall, gefertigt. Die Jochschenkel oder Abschnitte der Jochschenkel können allerdings aus einer Seltenen Erde gefertigt sein, die ausgeprägte permanentmagnetische Eigenschaften aufweist. Eine Sensorspule 322S' wird um das Joch 224, vorzugsweise um das Verbindungsstück, gewickelt. Das Joch weist am offenen Ende seine U-Form einen Luftspalt auf, der schmaler ist, als die Distanz zwischen den Jochschenkeln, was zusammen mit der hohen Permeabilität des Jochmaterials zu einer Sensorspule 322S' hoher Güte führt. Beim gezeigten Ausführungsbeispiel sind abbauende Elemente 313 am jeweiligen Jochschenkelende (Polschuhe) neben dem Luftspalt angeordnet. Die Polschuhe können jedoch selbst die Schneidsegmente, d.h. die abbauenden Elemente der Bohrkrone, bilden, und wären dann vorzugsweise aus entsprechenden Materialien wie Ni-Matrix oder Industriediamanten zu fertigen.

Auch die abbauenden Elemente 313' sind vorzugsweise aus einem Material hoher Permeabilität, insbesondere aus einem ferromagnetischen Metall, gefertigt. Auf diese Wiese verursacht ein Gegenstand hoher Permeabilität wie zum Beispiel ein Armierungseisen in der Nähe der abbauenden Elementen 313' effektiv einen leicht detektierbaren, magnetischen Kurzschluß der Sensorspule 322S' über das Joch 324 verlängert durch die abbauenden Elemente 313'.

Das induktive Element der Figur 3B läßt sich analog den Ausführungsbeispielen der Figuren 2D und 2E als Teil einer erfindungsgemäßen Bohrkrone ausführen. Durch die Rotation der Bohrkrone beim Bohren wird in dem vom Joch 324 gebildeten, magnetischen Kreis, der durch die zwei Permanentmagneten 328 vorgespannt ist, jedesmal eine Spannung induziert, wenn sich der Luftspalt des Jochs an einem ferromagnetischen Gegenstand, z.B. an einem Armierungseisen, vorbeibewegt. Dabei verringert das Armierungseisen den effektiven Luftspalt des magnetischen Kreises des Jochs, was zu einer Flußänderung und damit nach dem Induktionsgesetz zu einer induzierten Spannung führt. Da die Schnittgeschwindigkeit immer etwa dieselbe ist, ist die induzierte Spannung über verschiedene Bohrkronendruchmesser vergleichbar.

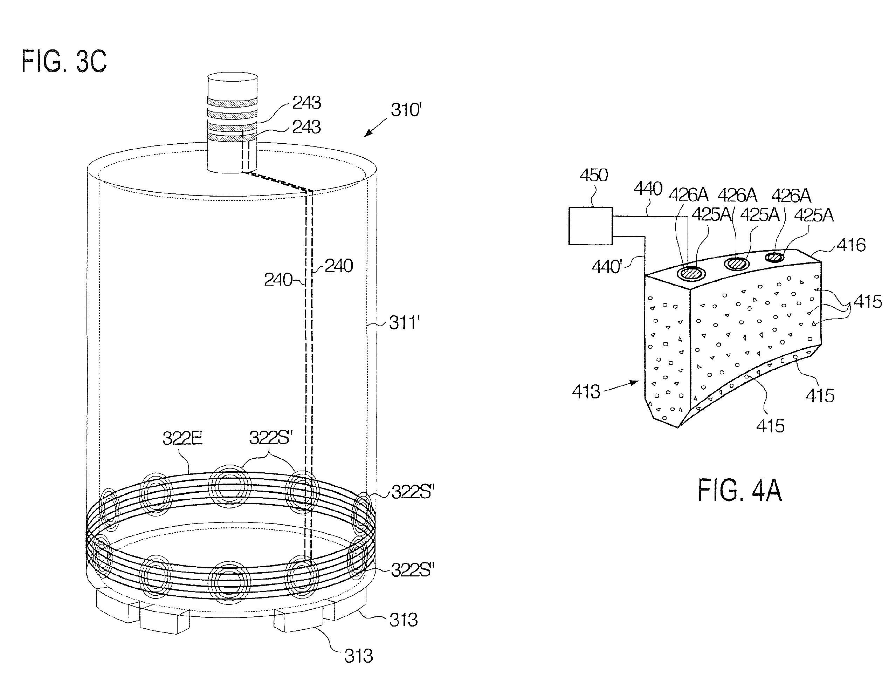

Figur 3C zeigt ein weiteres Ausführungsbeispiel einer erfindungsgemäßen Bohrkrone 310' mit einer um die Rotationsachse der Bohrkrone 310' gewickelte Erregerspule 322E' sowie mehreren parallel zur Mantelfläche des Hauptkronenteils 311' der Bohrkrone 310' gewickelten Sensorspulen 322S", die in oder an der Bohrkrone so angeordnet sind, daß die Erregerspule 322E' und die Sensorspulen 322S" orthogonal zu einander stehen.

Bei diesem Ausführungsbeispiel ist die Bohrkrone vorzugsweise aus nicht-ferromagnetischem und/oder schlecht leitendem Material, insbesondere aus nicht-ferromagnetischem Stahl, gefertigt, um Wirbelstromeffekte beim bevorzugten, wechselstrom-basierten Meßverfahren einzudämmen. Um diese noch zusätzlich zu verringern kann die Bohrkrone an geeigneter Stelle geschlitzt werden.

Die Sensorspulen 322S" können in herkömmlicher Mehrlagen-Leiterplattentechnologie auf flexiblen, organischen Substraten (z.B. Polyamid) gefertigt werden, sodaß sie einfach als Band gesamthaft auf die Bohrkrone 310' aufgeklebt werden können. Die Verbindung der Spulen 322 an einer Meß- und Auswerteelektronik kann dann ebenfalls mit einem Flachbandkabel, das entsprechende Leitungen 340 aufweist, und über einen Koppler oder Schleifringe 343 realisiert werden.

Um weniger rotatorische Verbindungen zwischen den Spulen 322 und einer entsprechenden Meß- und Auswertevorrichtung realisieren zu müssen, was sehr aufwendig, teuer und anfällig ist, können alle Sensorspulen 322S" in Reihe miteinander verschaltet werden. Alternativ kann ein Meßverstärker in die Bohrkrone 310' integriert werden, der beispielsweise mittels eines seriellen Protokolls mit einer entsprechenden Auswertevorrichtung kommuniziert, die z. B. in einer Antriebsmaschine gehaust wird.

Die in Figur 3C gezeigte Bohrkrone 310' eignet sich besonders für Meßverfahren, bei dem, durch die axial auf die Bohrkrone 310' aufgebrachte Erregerspule 322E' ein magnetisches Wechselfeld beispielsweise im kHz-Frequenzbereich erzeugt und die Verzerrung dieses Feldes, die beispielsweise durch die Nähe eines Armierungseisens den Spulen 322 verursacht werden kann, mittels der parallel zur Mantelfläche der Bohrkrone aufgebrachten Sensorspulen 322S" erfaßt wird. Ist kein ferromagnetisches Target in der Nähe, so ist die in den Sensorspulen 322S" induzierte Spannung aufgrund der orthogonalen Anordnung der Spulen 322 praktisch null, denn die Feldlinien der Erregerspule 322E' sind parallel zur Windungsebene der Sensorspulen 322S". Es findet keine Durchflutung und damit auch keine Induktion statt. Befindet sich aber ein Armierungseisen in der Nähe, so wird das Feld verzerrt. Folglich bilden sich eine kleine radiale Komponente aus, die mit den Sensorspulen 322S" erfaßt werden kann.

Der beschriebene Einsatz eines Flachbandkabels als Verbindungsleitung sowie die Anwendung einer auf der Bohrkrone angeordneten Meßvorrichtung in Verbindung mit einer seriellen Kommunikationsvorrichtung zur Reduzierung der Anzahl der notwendigen rotatorischen Verbindungen kann erfindungsgemäß auch in den anderen Ausführungsformen der Erfindung sinnvoll eingesetzt werden.

### 1.3. leitende Elemente

Figur 4A zeigt Details eines Bohrsystems gemäß einem weiteren Ausführungsbeispiel der Erfindung. Zu sehen ist ein Ausschnitt eines beispielsweise einstückig und elektrisch leitend ausgeführten abbauenden Elements 413, in das viele abrasive Körner 415 eingebettet sind. Durch das abbauende Element 413, beispielsweise eine leitende Matrix 416 mit Diamantkörnern, verlaufen mehrere elektrisch leitende Bereiche 425, die durch einen jeweiligen elektrisch isolierenden Bereich 426 von dem elektrisch leitenden Material des Elements 13 elektrisch isoliert sind. Ein elektrisch leitender Bereich 425 ist über eine erste Leitung 440 mit einer Meß- und Auswerteeinrichtung 450 verbunden. Ebenfalls ist das Element 413 über eine zweite elektrische Leitung 440' mit der Meß- und Auswerteeinrichtung 50 verbunden.

Obwohl Figur 4A exemplarisch lediglich die Verbindung eines der elektrisch leitende Bereiche 425 mit der Meß- und Auswerteeinrichtung 450 darstellt, wären typischerweise alle elektrisch leitende Bereiche 425 jeweils individuell oder gruppenweise in Reihe- oder Parallelschaltung mit entsprechenden Ein- bzw. Ausgangstore der Meß- und Auswerteeinrichtung 450 verbunden.

Mittels Widerstandsmessung über die elektrisch leitenden Bereiche 425 sowie das elektrisch leitende Element 413 kann die Meß- und Auswerteeinrichtung 450, die vorzugsweise über eine Signalverarbeitung und eine entsprechende Anzeige verfügt, Auskunft über das elektromagnetische Umfeld der Bohrkrone liefern.

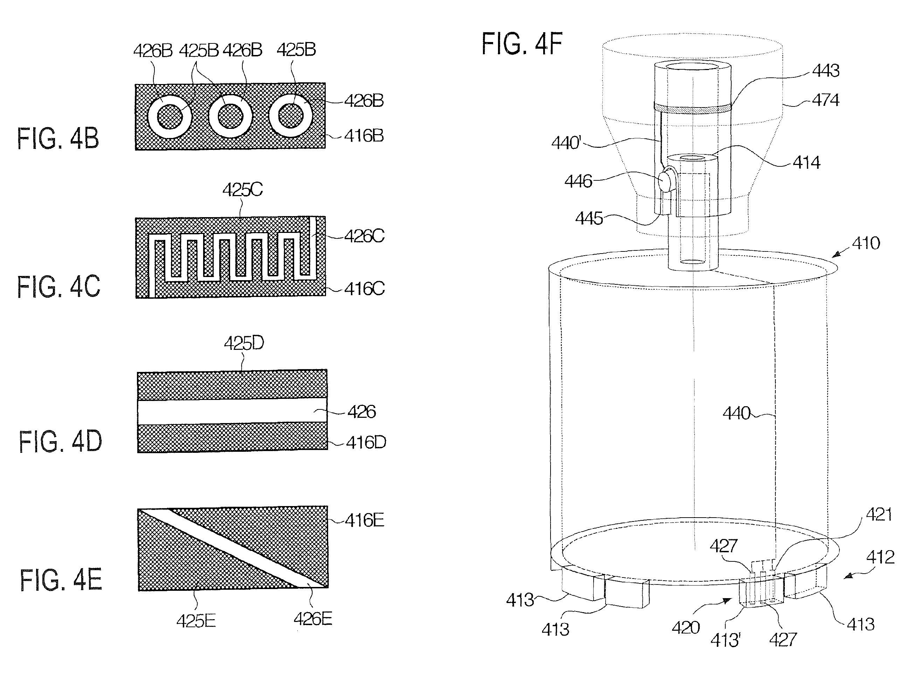

Die Figuren 4B bis 4E zeigen verschiedene mögliche Ausführungsformen eines abbauenden Elements, insbesondere eines abbauenden Elements zur Verwendung in einem Bohrsystem analog dem Ausführungsbeispiel der Figur 4A. Gezeigt ist jeweils ein Querschnitt eines vorzugsweise ringförmig und einstückig ausgeführten abbauenden Elements parallel zur einer Abbau- bzw. Abriebsebene dieses Elements, die typischerweise senkrecht zur Rotationsachse der Bohrkrone entsteht. Vorzugsweise verläuft das jeweils dargestellte, durch elektrisch leitende Bereiche und elektrisch leitende Elemente entstehende Elektrodenmuster parallel zu Rotationsachse der Bohrkrone durch das abbauende Element oder mindestens teilweise auch durch die Bohrkrone selbst hindurch. Somit kann gewährleistet werden, daß die elektrisch leitenden Bereiche und/oder die elektrisch leitenden Elemente auch bei einer Abnutzung des abtragenden Bereichs der Bohrkrone voneinander elektrisch isoliert bleiben.

Figur 4B zeigt ein abbauendes Element einer Bohrkrone gemäß einem weiteren Ausführungsbeispiel der Erfindung, wobei die elektrisch leitenden Bereiche 425B ähnlich dem in Figur 4A dargestellten Ausführungsbeispiel kreiszylinderförmig ausgebildet und von jeweiligen ringzylinderförmigen elektrisch isolierenden Bereichen 426B umgeben sind. Die elektrisch leitenden Bereiche 425B und die elektrisch isolierenden Bereiche 426B verlaufen durch eine elektrisch leitende Matrix 416B als primäres abbauendes Element. Die zylinderförmigen Bereiche müssen nicht die Form eines Kreiszylinders aufweisen.

Figur 4C zeigt ein abbauendes Element einer Bohrkrone gemäß einem weiteren Ausführungsbeispiel der Erfindung, wobei ein elektrisch leitender Bereich 425C und eine elektrisch leitende Matrix 416C als primäres abbauendes Element durch einen elektrisch isolierenden Bereich 426C voneinander isoliert sind. Der elektrisch isolierende Bereich 426C weist einen Verlauf auf, der der Form eines Rechtecksignals ähnelt. In dem abgebildeten Ausführungsbeispiel verläuft ein erstes Ende des elektrisch isolierenden Bereichs 426C in eine Querrichtung zu einer Seite des abbauenden Elements, während ein zweites Ende des elektrisch isolierenden Bereichs 426C in eine entgegengesetzte Querrichtung zu einer gegenüberliegenden Seite des abbauenden Elements verläuft. Abwandlungen des Verlaufs des elektrisch isolierenden Bereichs 426C sind selbstverständlich gleichermaßen sinnvoll. Zum Beispiel könnte der Verlauf geschwungen anstatt rechteckig ausgebildet sein oder auf der gleichen Seite des abbauenden Elements enden oder auch ringförmig gestaltet sein.

Figur 4D zeigt ein abbauendes Element einer Bohrkrone gemäß einem weiteren Ausführungsbeispiel der Erfindung, wobei ein elektrisch leitender Bereich 425D und ein elektrisch leitender Matrix 416D als primäres abbauendes Element durch einen streifenförmigen elektrisch isolierenden Bereich 426D voneinander isoliert sind, der parallel zu zwei Seiten des abbauenden Elements verläuft.

Figur 4E zeigt ein abbauendes Element einer Bohrkrone gemäß einem weiteren Ausführungsbeispiel der Erfindung, wobei ein elektrisch leitender Bereich 425E und ein elektrisch leitender Matrix 416E als primäres abbauendes Element durch einen streifenförmigen elektrisch isolierenden Bereich 426E voneinander isoliert sind, der schräg von einer Seite des abbauenden Elements zu einer gegenüberliegenden Seite des abbauenden Elements verläuft. Der Winkel, mit dem der elektrisch isolierende Bereich 426E das abbauende Element durchquert, kann, sofern die mechanische Stabilität des abbauenden Elements nicht dadurch beeinträchtigt wird, frei gewählt werden.

Figur 4F zeigt ein Ausführungsbeispiel einer Bohrkrone 410, die mit mehreren, als ohmsche Kontakte 427 ausgeführten leitenden Bereichen versehen ist. Diese sind mittels einer Leitung 440 parallel geschaltet. Die ohmschen Kontakte 427, die als erfindungsgemäße Sensorvorrichtung 420 fungieren, sind am einem dem abbauenden Bereich 412 bildenden Bereich der Bohrkrone 410 angeordnet und sind dabei von einem abbauenden Element 413' umgeben, das in seiner äußeren Form von anderen abbauenden Elemente 413 der Bohrkrone 410 nicht zu unterscheiden ist.

Analog dem Ausführungsbeispiel der Figur 2E sind die ohmschen Kontakte 427 über eine oder mehrere in oder an der Bohrkrone 410 angeordneten Leitungen 540 mit einer Meßvorrichtung verbindbar. In dem gezeigten Ausführungsbeispiel kontaktiert die Leitung 440 der Bohrkrone 410 eine entsprechende Leitung 440' sowie einen Schleifring 443 einer Werkzeugaufnahme 474 einer nicht gezeigten Antriebsmaschine mittels eines an einem Befestigungsteil 414 der Bohrkrone 410 angeordneten Stifts 446 und einer entsprechenden, an der Werkzeugaufnahme 474 versehenen Kontaktfläche 445.

In den obigen Ausführungsbeispielen kann die leitende Matrix 416 ebenfalls die Rolle eines leitenden Bereichs 425 annehmen und umgekehrt. Eine Unterscheidung zwischen leitender Matrix 416 und leitender Bereich 425 kann jedoch darin gesehen werden, wenn die Matrix eine größere Rolle in der tragenden Struktur der Bohrkrone bzw. des jeweiligen abbauenden Elements spielt.

### 1.4. Wirbelstromsensor

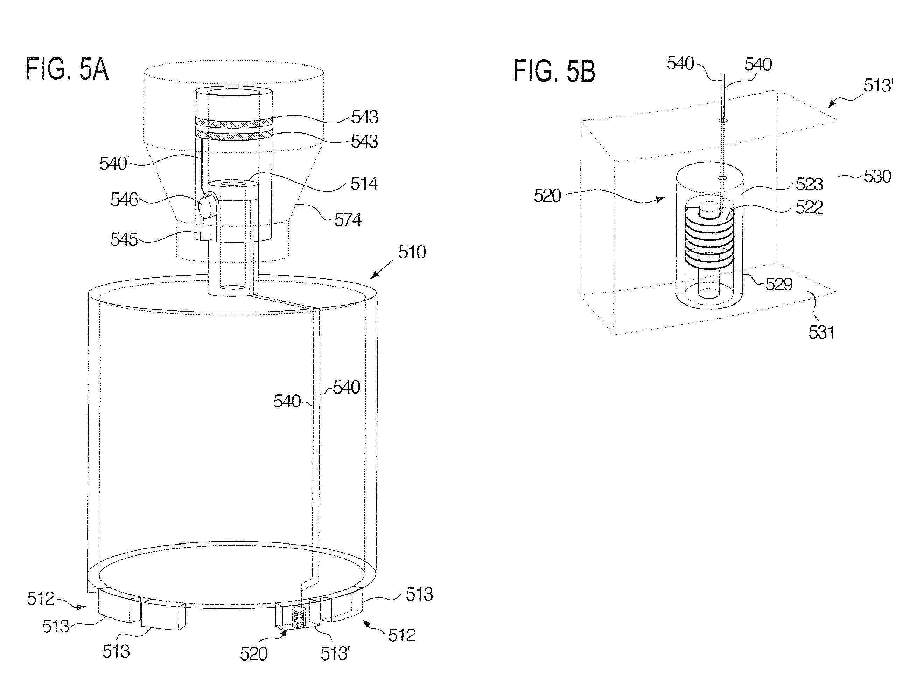

Figur 5A zeigt in schematischer Darstellung ein weiteres Ausführungsbeispiel der Erfindung, bei dem eine Bohrkrone 510 mit einem als Sensorvorrichtung 520 fungierenden Wirbelstrom-Sensorelement 523. Figur 5B stellt eine Detailansicht der Sensorvorrichtung 520 ebenfalls schematisch dar. Das als Beispiel eines Wirbelstromsensors gezeigte Wirbelstrom-Sensorelement 523 umfaßt einen Ferritkern 529 sowie eine um den Kern gewickelte Spule 522. Diese sind in Kunststoff oder Metall zum Wirbelstrom-Sensorelement 523 verkapselt.

Vorzugsweise wird das Wirbelstrom-Sensorelement 523 in eine Vergußmasse 530 aus Kunststoff oder in ein Metall eingebettet, so daß das Wirbelstrom-Sensorelement 523 als abbauendes Element 513' eingesetzt werden kann. Dabei hat die Verpackung des Wirbelstrom-Sensorelements 523 die Form eines abbauenden Elements 513, d.h. die Dicke und die Krümmungsradien des eingebetteten Wirbelstrom-Sensorelements 523 sind identisch mit den anderen abbauenden Elementen 513, d.h. Schneidelementen, der Bohrkrone.

Das dargestellte Wirbelstrom-Sensorelement 523 könnte beispielsweise für die Detektion von Armierungseisen an Diamantbohrkronen verwendet werden.

Das Wirbelstrom-Sensorelement 523 besteht vorzugsweise aus einem länglichen Ferrit-Topfkern und einer Cu-Backlack-Drahtwicklung mit einigen 100 bis einigen 1000 Windungen. Die offene Seite des Ferritkerns zeigt einer Verschleißfläche 531, d.h. zur Schnittfläche, des abbauenden Elements 513' hin und ist bündig zu dieser. Die Spulenlänge ist kürzer als der Wickelraum des Ferrittopfkerns, d.h. die Spule wird nur um einen kurzen, von der Verschleißfläche entfernten Abschnitt des Ferritkerns 529 gewickelt, denn der Ferritkern 529 wird durch den Verschleiß des abbauenden Bereichs 512 der Bohrkrone, d.h. der Diamantsegmente, ebenfalls kürzer. Auf diese Weise kann der Luftspalt zwischen Wirbelstromsensor und Armierungseisen über die Lebensdauer der Krone konstant gehalten werden.

Analog dem Ausführungsbeispiel der Figur 2E sind die Spulenwicklungen der Spule 522 über in oder an der Bohrkrone 510 angeordnete Leitungen 540 mit einer Meßvorrichtung verbindbar. In dem gezeigten Ausführungsbeispiel kontaktieren die Leitungen 540 der Bohrkrone 510 entsprechende Leitungen 540' sowie Schleifringe 543 einer Werkzeugaufnahme 574 einer nicht gezeigten Antriebsmaschine mittels eines an einem Befestigungsteil 514 der Bohrkrone 510 angeordneten Stifts 546 und einer entsprechenden, an der Werkzeugaufnahme 574 versehenen Kontaktfläche 545.

## 2. SIGNALGEBER

Bisher sind beispielsweise Spulen, andere induktiven Elemente sowie leitende Elemente primär als Sensorvorrichtungen vorgestellt worden. In diesem Abschnitt soll deshalb die erfindungsgemäße Möglichkeit explizit zum Ausdruck kommen, Spulen, andere induktive Elemente sowie leitende Elemente, insbesondere der oben beschriebenen Art, als signalgebende Vorrichtungen einzusetzen. Dabei können die signalgebenden Vorrichtungen separat von den Sensorvorrichtungen ausgeführt sein oder auch eine Bifunktionalität aufweisen, d.h. gleichzeitig oder sequentiell sowohl als signalgebende Vorrichtung als auch als Sensorvorrichtung fungieren.

Neben den oben genannten Vorrichtungen können beispielsweise auch Permanentmagneten wie auch Elektromagneten als erfindungsgemäße Signalgeber Verwendung finden. Die Bevorzugung der expliziten Benennung dieser signalgebenden Vorrichtungen ist keinesfalls beschränkend zu interpretieren. Selbstverständlich können auch andere Signalgeber wie beispielsweise elektroakustische, kapazitive, etc. Signalgeber in Rahmen der Erfindung sinnvoll eingesetzt werden.

## 3. MESS- UND AUSWERTESCHALTUNGEN

### 3.1. Allgemeines

*Lokale Meßmethoden:* Wird der Sensor nahe an den Schneidelementen der Krone befestigt, so wird primär lokal detektiert. Dies bedeutet, daß ein Sensor beim Bohren auf einem Armierungseisen dieses nur zeitweise detektiert. Pro Umdrehung der Krone wird er ein gerades Armierungseisen maximal zweimal ‚zu sehen' bekommen. Je nachdem wie das Armierungseisen relativ zur Bohrkrone liegt und je nach Dicke und Abstand des Armierungseisens, wird der Sensor kürzere oder längere, höhere oder kleinere Signale liefern. Wird ein Armierungseisen gestreift, so ergeben sich längere Pulse, als wenn das Armierungseisen zentrisch geschnitten wird. Ist das Armierungseisen noch weit weg, so ist das Signal im Falle von berührungslos messenden Sensoren wie Hall-Sensoren oder Spulen geringer als wenn die Bohrkrone das Armierungseisen bereits berührt. Jedoch ist eines gewiß: Die Signale sind periodisch mit dem Drehwinkel der Bohrkrone und haben pulsartigen Charakter. Im Falle eines Hall-Elements am vorderen Ende der Krone sind es Spannungspulse, im Falle einer Spule können es kurze Frequenzänderungen sein. Diese Frequenzänderungen können aber genauso in Spannungspulse umgewandelt werden und genauso wie Spannungspulse beispielsweise mittels eines Zählers detektiert werden. Daher wird in nachstehenden Erläuterungen davon ausgegangen, daß es sich um Spannungspulse handelt.

*Globale Meßmethoden:* Um eine globale Meßmethode handelt es sich beispielsweise dann, wenn nicht (nur) lokal an einem Punkt am vorderen Ende der Krone, sondern verteilt über den ganzen Umfang der Krone detektiert wird. Eine solche Meßmethode besteht zum Beispiel darin, daß die gesamte Bohrkrone als Wirbelstromsensor oder als Metalldetektor agiert. In diesem Fall kann am vorderen Ende der Krone axial um die Bohrkrone herum eine vorzugsweise feinlagige Spule gewickelt werden. Durch entsprechende Anregung generiert diese Spule ein hochfrequentes Wechselfeld, das durch die Anwesenheit von Armierungseisen verändert wird. Dies bewirkt eine Impedanzänderung der Spule, die mittels einer Oszillatorschaltung detektiert werden kann. Die Bohrkrone ist vorteilhafterweise in diesem Fall aus nicht-ferromagnetischen, hochohmigem Stahl oder besser noch aus nicht-leitenden Faserverbundstoffen gefertigt. Im letzen Fall ist es möglich, die Bohrkrone wie ein hochsensibler Metalldetektor auszuführen. Bezüglich einer Auswertung der Meßsignale wird erneut auf die auf dem Gebiet der Metalldetektoren einschlägige Literatur verwiesen.

### 3.2. Induktive Sensor

Ein induktiver Sensor stellt eine bevorzugte Sensorvorrichtung der Erfindung dar. Eine entsprechende Bohrkrone bzw. ein entsprechendes Bohrsystem sowie eine entsprechende Meß- und Auswertevorrichtung lassen sich mittels der nachstehenden Merkmale in bevorzugter Weise realisieren.

**Sensorprinzip und physikalischer Effekt:** Änderung der Induktivität L oder allgemeiner Impedanz Z einer Spule durch Annäherung an ein Armierungseisen, dadurch nur Detektion von ferromagnetischen Materialien (Eisen) möglich.

**Koppler, Übertragung auf die rotierende Bohrkrone**: Koppeltransformator oder kapazitiver Übertrager.

**Meßelektronik:** LRC-Schwingkreis mit hochfrequenter (5-50kHz) Konstantstromquelle.

**Meßsignal(e):** Für die Auswertung der Impedanz: Spannung (und eventuell Phase relativ zum Strom) über der primären Koppelspule. Für die Auswertung der Resonanzfrequenz: Spannung über der Primärspule des Koppeltransformators über einen Frequenz-Spannungswandler. Zusätzlich: Motordrehzahl über einen Hallsensor am Rotor des Gerätes.

**Signalauswertung:** Auswertung der Meßspannung synchron zur Motordrehzahl: Darstellung des Meßsignals als Funktion des Bohrkronenwinkels und Kumulierung der Meßsignale, Wegmitteln des DC-Untergrundes und des Rauschens, Festlegen einer Schwelle und Anzeige.

Entsprechende Ausführungsbeispiele sind im folgenden näher beschrieben.

### 3.2.1. Parallelschwingkreis mit transformatorischem Übertrager

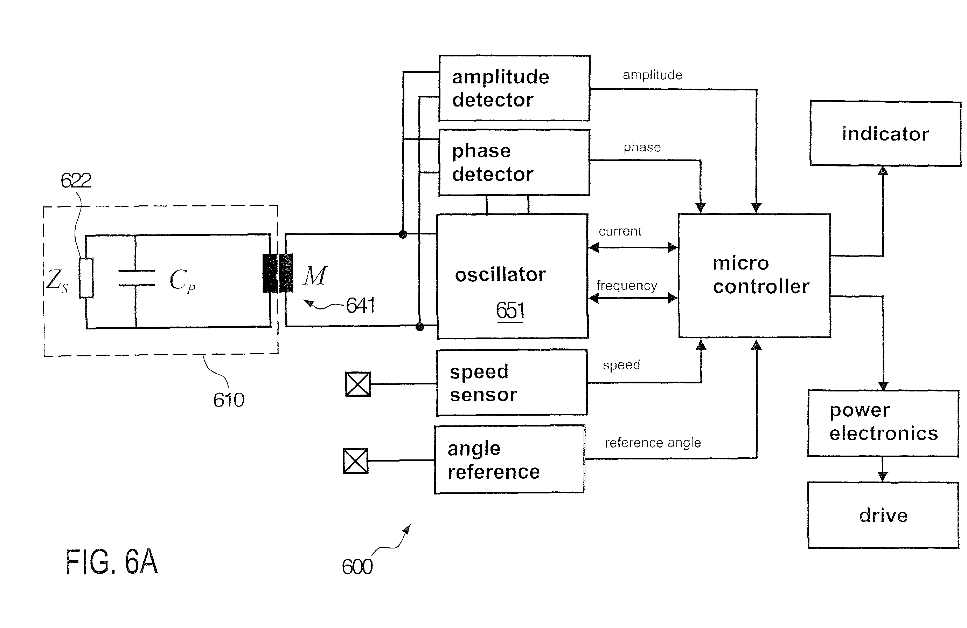

Das in Figur 6A abgebildete Blockschaltbild zeigt eine exemplarische Realisierung eines mit einer induktiven Sensor- sowie einer entsprechenden Auswertevorrichtung ausgestatteten Bohrsystems 600. Dabei wird eine Spule 622, die eine erfindungsgemäße, von einer Bohrkrone 610 umfaßte Sensorvorrichtung darstellt, über einen transformatorischen Übertrager 641, die eine Signalübertragung beispielsweise von der Bohrkrone 610 zur Antriebsmaschine oder umgekehrt ermöglicht, durch einen Oszillator 620 in Resonanz angeregt. Dies kann zum Beispiel durch einen einfachen RLC-Oszillator, der automatisch in Resonanz schwingt oder durch Anregung eines Schwingkreises mit einer konstanten Frequenz $\omega_0$ beispielsweise mit einem Rechteckstrom erfolgen. Um den Kreis in diesem Fall in Resonanz anzuregen, wird die Phase zwischen Strom und Spannung auf Null geregelt.

Kennzeichnend für die Realisierung der Figur 6A ist, daß eine Kapazität $C_P$ parallel zur Übertragerinduktivität M und zur Sensorinduktivität $Z_s$ geschaltet ist, so daß ein Parallelschwingkreis über den transformatorischen Übertrager 741 gebildet wird.

Das Blockschaltbild der Figur 6A stellt eine aufwendige Variante dar, bei der die Impedanz des Systems bei jeder Oszillatorfrequenz bestimmt werden kann. Hierzu stehen folgende Meßsignale zur Verfügung:

- Resonanzfrequenz
- Realteil der Impedanz ($R_{eq}$)
- Imaginärteil der Impedanz ($L_{eq}$)
- Drehzahl
- Drehwinkel-Referenz der Bohrkrone

Dabei stellen die Erfassung der (Motor-)Drehzahl sowie die Ermittlung des Drehwinkels der Bohrkrone optionale Merkmale der Erfindung.

Der aktuelle Drehwinkel der Bohrkrone wird vorzugsweise über eine Messung der Rotordrehzahl sowie durch einen Referenzgeber an der Spindel oder der Bohrkrone bestimmt. Die Motordrehzahl wird bei heutigen Bohrgeräten üblicherweise für eine Drehzahlregelung bereits erfaßt. Was hinzukommt, ist ein digitaler Hall-Sensor, d.h. ein Hall-Schalter, in der Nähe der Werkzeugaufnahme oder Spindel, der den Drehwinkel der Spindel und damit der Bohrkrone einmal pro Umgang erfaßt. Dies kann eine einfache Kerbe oder Noppe an der Abtriebswelle oder an einer geeigneten Stelle im Getriebe sein. In diesem Fall muß ein durch einen Permanentmagneten vorgespannter Hall-Sensor verwendet werden. Es ist auch möglich, ein Permanentmagnet an die Abtriebswelle anzubringen. In diesem Fall muß der Hall-Schalter nicht vorgespannt sein.

Diese aufwendige Variante kommt einer Impedanzmeßbrücke gleich. In anderen Worten hat diese Variante die Grundfunktion einer Impedanzbrücke, ist jedoch bezüglich Genauigkeit, Linearität und absolutem Meßfehler nicht mit einem Laborinstrument wie dem bekannten Precision Impedance Analyzer, Agilent 4294A, der Firma Agilent Technologies Co. Ltd. vergleichbar. Hier sind allerdings die Meßwerte als solche nicht so wichtig, wie die Sensitivität der Meßschaltung. Die Meßschaltung ist deshalb vorzugsweise auf hohe Empfindlichkeit getrimmt.

Durch die zur Verfügung stehenden Meßsignale lassen sich sowohl eine Änderung der Impedanz als auch eine Änderung der Resonanzfrequenz feststellen, die jeweils Rückschluß auf die Anwesenheit eines Armierungseisens oder eines sonstigen ferromagnetischen Gegenstands ermöglichen.

### 3.2.1.1. Messung der Änderung der Impedanz

Bei Anregung mit einer von der Resonanzfrequenz unterschiedlichen, fixen Frequenz ändert sich die Impedanz des Gesamtsystems, d.h. der Sensorvorrichtung mit dem Übertrager, gemäß der folgenden Formel, wenn sich ein ferromagnetischer Gegenstand dem Sensor nähert.

$$|Z|_{tot} = \sqrt{\text{Re}(Z)^2 + \text{Im}(Z)^2} = \sqrt{\frac{M^2\omega^2 \cdot \left(\left(R_S(x)\right)^2 + \omega^2\left(L_S(x)\right)^2\right)}{\left(R_S(x)\right)^2 \cdot \left(\omega^2 C_P M - 1\right)^2 + \left[\left(L_S(x) + M\right)\omega - C_P L_S(x) M\omega^3\right]^2}}$$

Entsprechend läßt sich ein Armierungseisen über eine Messung der Spannungsamplitude detektieren, wenn das Gesamtsystem mit konstantem Strom und konstanter Erregerfrequenz $\omega_0$ durch den Oszillator als Stromquelle betrieben wird. Die Spannungsamplitude ist dann gegeben durch:

$$U(\omega_0) = |Z(\omega_0)| \cdot I(\omega_0)$$

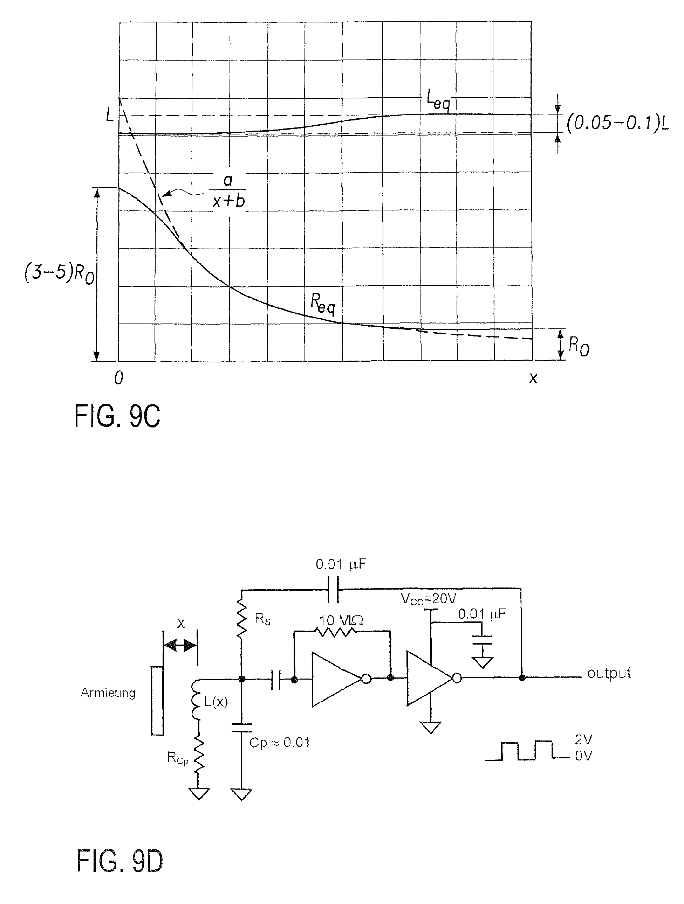

Diese ändert sich als Funktion des Abstandes zum Armierungseisen. Vor allem macht sich die Abstandsabhängigkeit in einer Änderung des äquivalenten Serienwiderstandes und der Sensorinduktivität bemerkbar, wie in der Figur 9C graphisch dargestellt und in der abschließenden Formel des Abschnitts 8.8 ausgedrückt wird.

Bei Anregung bei der Resonanzfrequenz ist die Impedanz des gesamten Schwingkreises, d.h. der Sensorvorrichtung mit dem Übertrager, rein ohmsch. Der Imaginärteil fällt weg. Wird der Schwingkreis mit einer konstanten Stromamplitude betrieben, kann über eine Messung der Spannungsamplitude über dem Koppeltransformator ohne weiteres auf die Impedanz geschlossen werden.

Die folgende Tabelle zeigt die Vor- und Nachteile einiger Impedanzmeßverfahren auf, die für die Messung der Impedanz einer in einer Bohrkrone angeordneten Sensorspule, welche sich beispielsweise durch Annäherung an ein Eisen ändert, anwendbar sind. Weitere Angabe zu den aufgezeigten Impedanzmeßverfahren sind in "The Impedance Measurement Handbook: A Guide to Measurement Technologies and Techniques" zu finden, das von der Firma Agilent Technologies Co. Ltd. beispielsweise unter http://cp.literature.agilent.com/litweb/pdf/5950-3000.pdf veröffentlicht wurde.

| Verfahren | Vorteile | Nachteile | anwendbarer Frequenzbereich |
|---|---|---|---|
| Brückenverfahren | Hohe Genauigkeit (0,1% typ.). Breite Frequenzabdeckung durch Verwendung verschiedener Brückenarten. Geringe Kosten. | Muß manuell abgeglichen werden. Schmale Frequenzabdeckung mit einem Instrument. | DC bis 300 MHz |
| Resonanzverfahren | Gute Güte-Genauigkeit bis zu hohen Gütewerten. | Muß mit der Resonanzfrequenz abgestimmt sein. Geringe Impedanzmeßgenauigkeit. | 10 kHz bis 70 MHz |

(fortgesetzt)

| Verfahren | Vorteile | Nachteile | anwendbarer Frequenz-bereich |
|---|---|---|---|
| I-V-Verfahren | Geerdete Vorrichtungs messungen. Geeignet für die Bedürfnisse sonden artiger Prüfungen. | Betriebsfrequenzbereich ist durch den in der Sonde verwendeten Transformator beschränkt. | 10 kHz bis 100 MHz |
| RF I-V-Verfahren | Hohe Genauigkeit (1% typ.) und breiter Impedanzbereich bei hohen Frequenzen. | Betriebsfrequenzbereich ist durch den im Prüfkopf verwendeten Transformator beschränkt. | 1 MHz bis 3 MHz |
| Netzwerkanalyse-Verfahren | Hoher Frequenzbereich. Gute Genauigkeit, wenn die unbekannte Impedanz nahe der charakteristischen Impedanz liegt. | Neukalibrierung notwendig, wenn die Meßfrequenz geändert wird. Schmaler Impedanzmeßbereich. | 300 kHz und darüber |
| selbstabgleichende Brückeverfahren | Breite Frequenzabdeckung von LF bis HF. Hohe Genauigkeit über einen breiten Impedanzmeßbereich. Geerdete Vorrichtungsmessungen. | Höhere Frequenzbereiche nicht zugänglich. | 110 kHz bis 70 MHz |

### 3.2.1.2. Messung der Änderung der Resonanzfrequenz

Die Nähe eines ferromagnetischen Gegenstands läßt sich auch über die Änderung der Resonanzfrequenz des aus der Sensorvorrichtung und dem Übertrager bestehenden Gesamtsystems ermitteln. Da eine lineare Abhängigkeit zwischen dem Meß- bzw. Auswertesignal und dem Abstand zwischen Eisen und Spule nicht notwendig ist, wenn primär eine möglichst frühe Detektion eines Armierungseisen zum Ziel gesetzt wird, ist die Resonanzfrequenz eine sinnvolle und empfindliche Meßgröße

Im dargestellten Ausführungsbeispiel der Figur 6A wird die Resonanzfrequenz mittels eines f/V-Konverters (f/V = "frequency to voltage", d.h. Frequenz-Spannung-Wandlers) über einen A/D-Wandler eines Mikrokontrollers oder über einen direkten Zählereingang (Counter) des Mikrokontrollers gemessen. Eine Absenkung der Resonanzfrequenz deutet auf ein Armierungseisen hin.

Der Signalwert, der schlußendlich ausgewertet wird, ist die Differenz der Resonanzfrequenz ohne Kopplung durch ein Armierungseisen (Offset, Anfangsfrequenz) und der Resonanzfrequenz bei Anwesenheit eines Armierungseisens.

$$S = k \cdot [f_{res}(L_{S0}) - f_{res}(L_S(x))]$$

Zu den mathematischen Hintergründen des Ausführungsbeispiels der Figur 6A findet sich Näheres im Abschnitt "Gleichungen".

### 3.2.2. Serienschwingkreis mit transformatorischem Übertrager

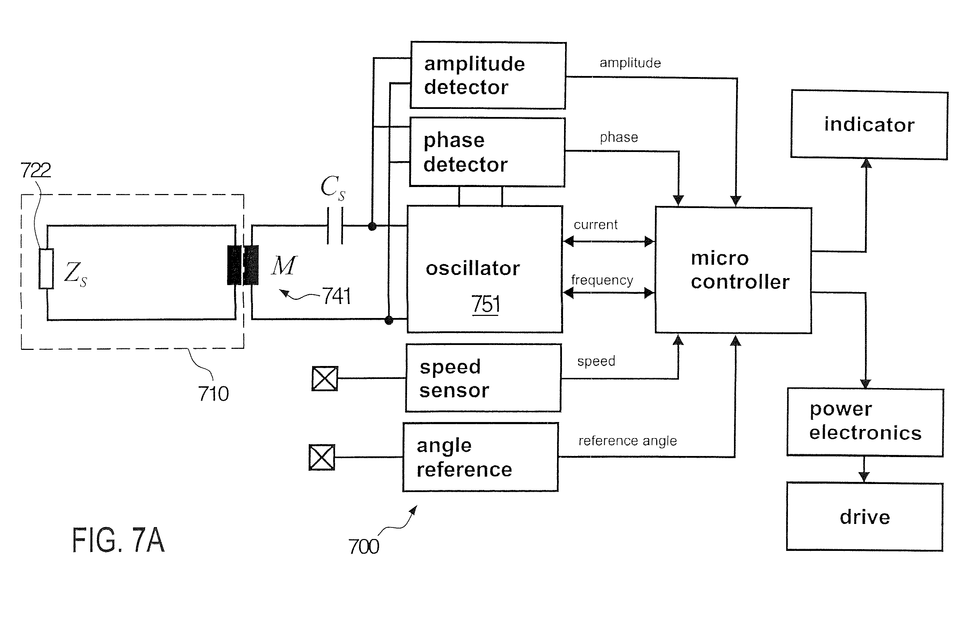

Analog dem in Figur 6A abgebildeten Blockschaltbild zeigt das in Figur 7A abgebildete Blockschaltbild eine exemplarische Realisierung eines mit einer induktiven Sensor- sowie einer entsprechenden Auswertevorrichtung ausgestatteten Bohrsystems 700. Dabei wird eine Spule 722, die eine erfindungsgemäße, von einer Bohrkrone 710 umfaßte Sensorvorrichtung darstellt, über einen transformatorischen Übertrager 741, die eine Signalübertragung beispielsweise von der Bohrkrone 710 zur Antriebsmaschine oder umgekehrt ermöglicht, durch einen Oszillator 720 in Resonanz angeregt. Dies kann zum Beispiel durch einen einfachen RLC-Oszillator, der automatisch in Resonanz schwingt oder durch Anregung eines Schwingkreises mit einer konstanten Frequenz $\omega_0$ beispielsweise mit einem Rechteckstrom erfolgen. Um den Kreis in diesem Fall in Resonanz anzuregen, wird die Phase zwischen Strom und Spannung auf Null geregelt.

Kennzeichnend für die Realisierung der Figur 7A ist, daß eine Kapazität $C_P$ in Reihe mit der Übertragerinduktivität M und der Sensorinduktivität $Z_S$ geschaltet ist, so daß ein Serienschwingkreis 752 über den transformatorischen Übertrager 741 gebildet wird.

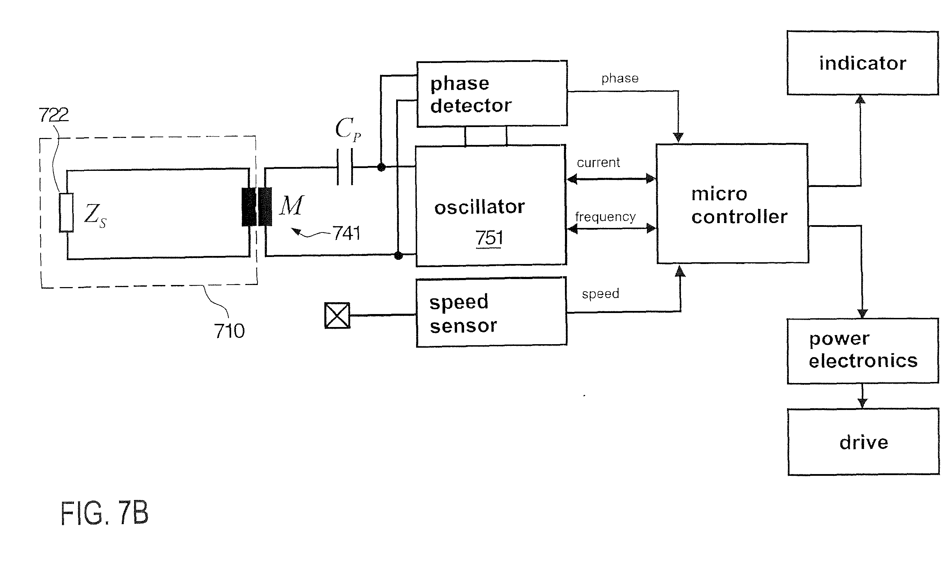

Während das Blockschaltbild der Figur 7A eine aufwendige Variante darstellt, die sogar eine winkeltreue Auswertung der Meßsignale ermöglicht, zeigt Figur 7B eine vereinfachte Variante, bei der als Beispiel lediglich die Amplitude und die Frequenz des Oszillatorsignals sowie die Motor- bzw. Antriebsdrehzahl erfaßt werden. Auch im Ausführungsbeispiel der Figur 7B wird ein Serienschwingkreis 752 über den transformatorischen Übertrager 741 gebildet.

Näheres zu den mathematischen Hintergründen des Ausführungsbeispiels der Figuren 7A und 7B findet sich im Abschnitt "Gleichungen".

**3.2.3.** Serienschwingkreis mit kapazitivem Übertrager

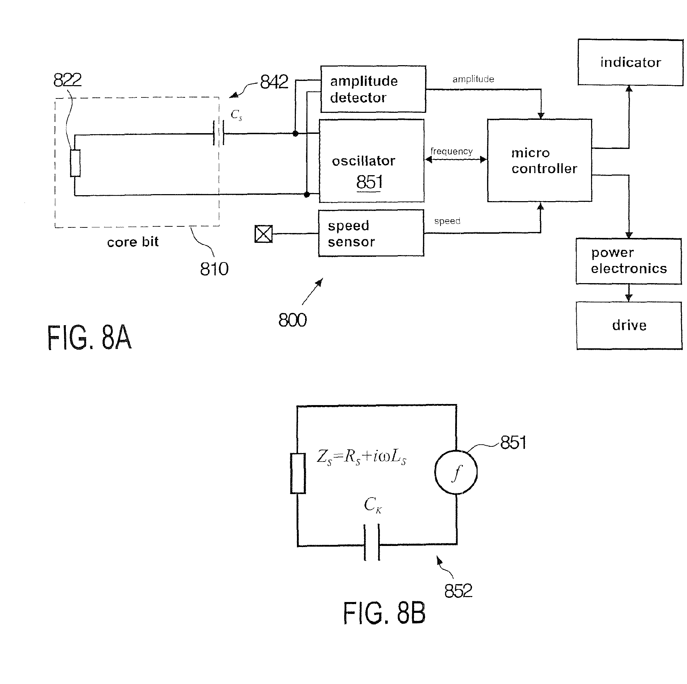

Figur 8A zeigt ein den Figuren 6A, 7A und 7B analoges Ausführungsbeispiel der Erfindung, bei dem allerdings der Signalweg zwischen der als Sensorvorrichtung agierende Sensorspule 822 und einer Meß- und Auswerteschaltung über einen kapazitiven Übertrager 842 verläuft.

Wie ein transformatorischer Übertrager ermöglicht ein kapazitiver Übertrager 842 eine Signalübertragung zwischen einer Antriebsmaschine und einer relativ zur Antriebsmaschine rotierenden Bohrkrone. Zum Beispiel läßt sich das kapazitive Kopplungselement in der Werkzeugaufnahme in Form eines Zylinderkondensators als radiale Ausführungsform oder Plattenkondensators als axiale Ausführungsform unterbringen. Um die Einflüsse von Verschmutzungen gering zu halten, kann z.B. Kühlwasser als Material mit hoher Dielektrizitätskonstante als Dielektrikum zwischen den Platten verwendet werden.

Näheres zu den mathematischen Hintergründen des Ausführungsbeispiels der Figur 8A findet sich im Abschnitt "Gleichungen".

**3.3. Wirbelstromsensor**

Wirbelstromsensoren sind ein Standard-Werkzeug für NDT (non-destructive testing, zu deutsch: zerstörungsfreie Prüfung) von elektrisch leitenden, insbesondere metallischen Strukturen. Damit werden z.B. im Flugzeugbau die tragenden Elemente auf Risse untersucht. Ein Wirbelstromsensor reagiert sowohl auf die Permeabilität als auch auf die Induktivität des Targets. Näheres zum Thema Wirbelstrommessung kann beispielsweise in Scott D. Welsby and Tim Hitz. Nov. 1997, "True Position Measurement with Eddy Current Technology," Sensors, Vol. 14, No. 11:30-40 gefunden werden.

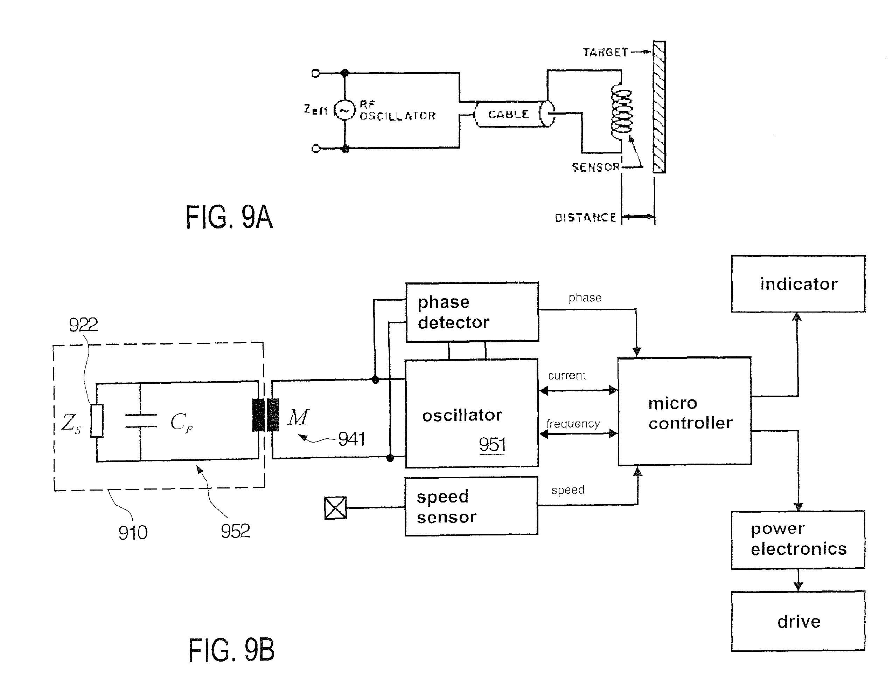

Figur 9A zeigt eine allgemeine Anordnung zur Wirbelstrommessung.

Ein Wirbelstromsensor stellt eine bevorzugte Sensorvorrichtung der Erfindung dar. Eine entsprechende Bohrkrone bzw. ein entsprechendes Bohrsystem sowie eine entsprechende Meß- und Auswertevorrichtung lassen sich mittels der nachstehenden Merkmale in bevorzugter Weise realisieren.

**Sensorprinzip und physikalischer Effekt:** Änderung der Impedanz Z einer Spule durch Bildung von Wirbelströmen in der Nähe der Sensorspule, vor allem der Realteil des Spulen-Target-Systems ändert, Detektion von elektrisch leitenden Materialien möglich.

**Koppler, Übertragung auf die rotierende Bohrkrone:** Koppeltransformator.

**Meßelektronik:** LRC-Schwingkreis mit hochfrequenter (5-50kHz) Konstantstromquelle.

**Meßsignal(e):** Für die Auswertung der Impedanz: Spannung (und eventuell Phase relativ zum Strom) über der primären Koppelspule. Für die Auswertung der Resonanzfrequenz: Spannung über der Primärspule des Koppeltransformators über einen Frequenz-Spannungswandler. Zusätzlich: Motordrehzahl über einen Hallsensor am Rotor des Gerätes.

**Signalauswertung:** Auswertung der Meßspannung synchron zur Motordrehzahl: Darstellung des Meßsignals als Funktion des Bohrkronenwinkels und Kumulierung der Meßsignale, Wegmitteln des DC-Untergrundes und des Rauschens, Festlegen einer Schwelle und Anzeige.

Das in Figur 9B dargestellte Blockschaltbild zeigt eine Realisierungsmöglichkeit einer erfindungsgemäßen Bohrkrone 910 mit Wirbelstromsensor als Sensorvorrichtung im Rahmen eines Bohrsystems mit einer entsprechenden Meß- und Auswertevorrichtung.

Die Hauptkomponente des Wirbelstromsensors bildet eine Sensorspule 922, deren hauptsächlich induktive Impedanz $Z_S$ beispielsweise zusammen mit der ebenfalls hauptsächlich induktiven Impedanz M eines transformatorischen Übertragers 941 und einer Kapazität Cp einen LRC-Schwingkreis 952 bildet.

Die Meßvorrichtung umfaßt einen herkömmlichen Oszillator 920, der den LRC-Schwingkreis 952 mit einer gegebenen Frequenz $f_0$ und mit konstanter Stromamplitude $I_0$ anregt. Die Schwingfrequenz ist entweder durch die Resonanzfrequenz des LRC-Schwingkreises 952 bestimmt, oder wird als erzwungene Schwingung durch den Mikrokontroller vorgegeben. Beispielsweise über einen Gleichrichter mit nachgeschaltetem Tiefpaßfilter wird die Spannungsamplitude der resultierenden Schwingung des LRC-Schwingkreises 952 gemessen. In einem als Auswertevorrichtung fungierenden Mikrokontroller wird dann die Impedanz berechnet:

$$Z(x)\frac{\overline{U}}{\overline{I_0}} \approx \frac{Z_0^2}{a} \cdot (x+b)$$

Um eine winkeltreue Auswertung und entsprechende Anzeige zu ermöglichen kann gleichzeitig ein Drehzahlsignal gemessen werden, das numerisch im Mikrocontroller zum aktuellen Drehwinkel integriert wird. Ausgewertet wird also:

$$Z(x, \varphi_{drill})$$

$$\varphi_{drill}(t) = \frac{1}{\ddot{u}} \int \omega_{rot}(t) dt$$

Dabei repräsentieren:

$\varphi_{drill}$    Drehwinkel der Bohrkrone

$\omega_{rot}$    Winkelgeschwindigkeit des Rotors

$\ddot{u}$:    Übersetzungsverhältnis zwischen Rotor und Bohrkrone, hängt vom gewählten Gang ab

Näheres zu den mathematischen Hintergründen des Ausführungsbeispiels der Figur 9B findet sich im Abschnitt "Gleichungen".
Für Messungen mittels des Wirbelstromsensors der Figuren 5A und 5B eignet sich insbesondere die kostengünstige Treiberschaltung der Figur 9D nach Steven D. Roach, "Designing and Building an Eddy Current Position Sensor", Sensor Magazine, Sept. 1998, welche Veröffentlichungsstelle Näheres zu dieser Treiberschaltung enthält.
Eine einfache und kostengünstige Oszillatorschaltung für eine solche Treiberschaltung ist ein LC-Logik-Gate-Oszillator, der CMOS-Logikgatter verwendet. Dieser kann, wie gezeigt, auf der Basis zweier Inverter realisiert werden. Die beiden Inverter produzieren eine starke positive Spannungsverstärkung. Daher oszilliert die Schaltung bei einer Frequenz, bei der die Phasenverschiebung des resonanten Sensors gerade verschwindet. Die Ausgangsspannung ist eine Rechtecksspannung, deren Frequenz eine Funktion des Abstandes x zwischen der Spule und dem Armierungseisen ist. Der Frequenzhub dieser Schaltung beträgt ungefähr 2.1 über den die verschiedenen Abstände zwischen Spule und Armierungseisen. Dies läßt sich mathematisch ausdrücken als:

$$f(x=0)=2,1 \cdot f(x=\infty)$$

Zwecks Auswertung dieses Meßsignals, d.h. dieser Ausgangsspannung, kann beispielsweise ein Mikrocontroller als Auswertevorrichtung die Frequenz der Ausgangsspannung über einen Zählereingang, einen sogenannten Counter-Eingang, digitalisieren, der die Ausgangspulse pro Zeiteinheit zählt.
Die Resonanzfrequenz der Treiberschaltung inklusive Sensorvorrichtung ist gegeben durch:

$$f(x) = \frac{1}{2\pi \sqrt{L(x) \cdot (C_{cable} + C_{IWC} + C_p)}}$$

Dabei bedeuten:

L(x): Induktivität der Spule als Funktion des Abstandes x vom Armierungseisen
$C_{cable}$: Kabelkapazität

$C_{IWC}$: Zwischenwindungskapazität
$C_p$: parallele Kapazität (zur Sensorspule)
$R_S$: Scheinwiderstand (zur Spule und zum Kondensator)

Der Scheinwiderstand $R_s$ bestimmt die Amplitude des Signals am Eingang des ersten Inverters und damit auch die Leistungsaufnahme der Treiberschaltung. Um das Rauschen zu minimieren, ist es sinnvoll, die Treiberschaltung so zu gestalten, daß dieses Signal am Eingang des ersten Inverters so groß wie möglich ist. Je kleiner der Wert von $R_S$ ist, desto größer ist dieses Signal, desto größer ist aber auch die Leistungsaufnahme. In Resonanz ist die Impedanz des LC-Speicherkreises rein ohmsch:

$$R_{res} = \omega L \cdot \sqrt{Q^2 + 1}$$

$R_s$ und $R_{res}$ bilden einen Spannungsteiler. Somit ist die Amplitude gegeben durch:

$$V_{pp} = \frac{4}{\pi} \cdot V_{DD} \cdot \frac{R_{res}}{R_{res} + R_s}$$

$V_{pp}$ ist die Amplitude der fundamentalen Harmonischen des Rechtecksignals am Ausgang. Es genügt, nur diese erste Harmonische zu betrachten, da $R_S$ und der LC-Kreis einen Bandpaßfilter um die Oszillationsfrequenz bilden. Dieser Filter dämpft alle Komponenten außer der fundamentalen Komponente. Sinnvoll ist, die Scheitel-zum-Scheitel-Amplitude (Peak-to-Peak-Amplitude) Vpp mindestens so groß wie die halbe Versorgungsspannung $V_{DD}$ zu wählen, wenn die Spule unbelastet ist, d.h. wenn kein Armierungseisen in der Nähe ist. Diese Regel bedingt, daß $R_S$ ≈ $R_{res}$, wobei $R_{res}$ im unbelasteten Zustand bestimmt wird, d.h. ohne Armierungseisen in der Nähe. Je höher der Widerstand bei Resonanz ist, desto weniger Leistung ist für den Betrieb des Sensors notwendig. Der Widerstand steigt mit wachsender Frequenz, wachsender Induktivität und höherer Güte Q.
Die Frequenzantwort eines Wirbelstromsensors hängt sowohl von der Leitfähigkeit als auch von der Permeabilität der Umgebung es Sensors, insbesondere eines zu detektierenden Targets ab.
Eine alternative Meß- und Auswerteschaltung stellen die Näherungsschalter der OM-Typenreihe der Firma Philips dar.

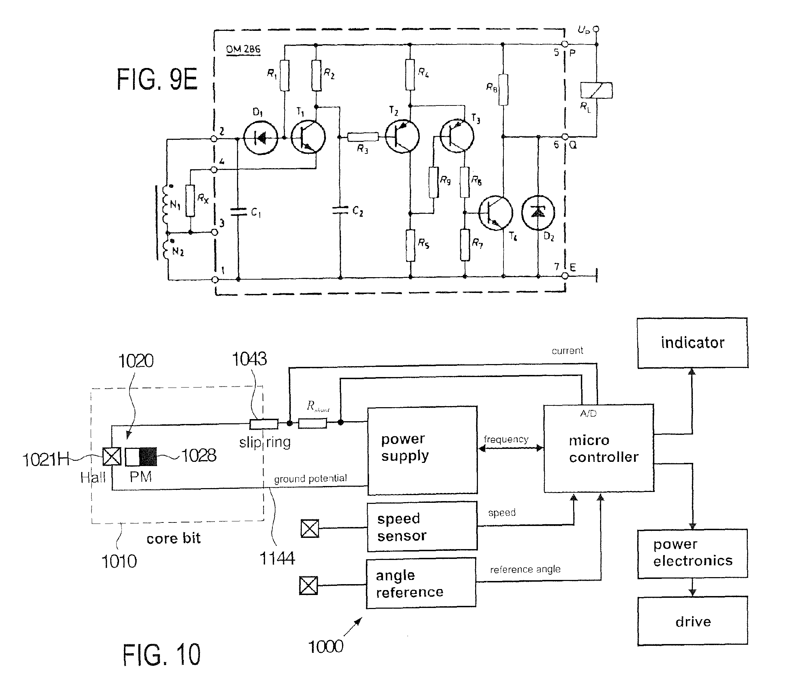

Figur 9E zeigt als Beispiel dieser Typenreihe den Näherungsschalter OM 286. Der mit T1, D1 arbeitende Oszillator schwingt auf einer Frequenz, die durch C1 und die Spule N1, N2 gegeben ist. Wird die Spule beispielsweise durch Annäherung eines Armierungseisens gedämpft, reißen die Schwingungen ab, der Arbeitspunkt von T1 verschiebt sich, und der aus T2, T3 bestehende Schmitt-Trigger schaltet. Über die Leistungsstufe (T4) kann dann z.B. ein Relais geschaltet oder eine LED betrieben. Über den Widerstand R läßt sich die Empfindlichkeit des Näherungssensors einstellen.

### 3.4. Zwei-Draht-Hall-Sensor

Ein Zwei-Draht-Hall-Sensor stellt eine bevorzugte Sensorvorrichtung der Erfindung dar. Eine entsprechende Bohrkrone bzw. ein entsprechendes Bohrsystem sowie eine entsprechende Meß- und Auswertevorrichtung lassen sich mittels der nachstehenden Merkmale in bevorzugter Weise realisieren.
**Sensorprinzip und physikalischer Effekt:** Änderung der Hallspannung in einem Hall-Element durch Änderung der Flußdichte.
**Koppler, Übertragung auf die rotierende Bohrkrone:** Schleifring, Erdpotential.
**Meß- und Auswerteelektronik:** Über einen Shuntwiderstand wird die Stromaufnahme des Hall-Elements gemessen, nachfolgend ein Tiefpaßfilter, Verstärker und A/D-Wandler, Mikroprozessor.
**Meßsignal(e):** Hallspannung. Zusätzlich: Motordrehzahl über einen Hallsensor am Rotor des Gerätes.
**Signalauswertung:** Auswertung der Meß spannung synchron zur Motordrehzahl: Darstellung des Meßsignals als Funktion des Bohrkronenwinkels und Kumulierung der Meßsignale, Wegmitteln des DC-Untergrundes und des Rauschens, Festlegen einer Schwelle und Anzeige.
Zwei-Draht-Hall-Sensoren liefern ein Meßsignal in Form eines Stromverbrauchs. Sie verwenden eine interne Stromquelle, die je nach Stärke des Magnetfeldes verändert wird. Über einen Serienwiderstand kann der Strom und damit das Magnetfeld als Spannung gemessen werden. In anderen Worten ändert eine integrierte Hall-Sensor-Schaltung ihre Stromaufnahme, d.h. ihren DC-Widerstand über der Quelle. Ändert sich die magnetische Flußdichte in der Nähe des Sensors, so ändert auch seine Stromaufnahme. Diese kann beispielsweise mit einem Serienwiderstand gemessen werden.

Figur 10 zeigt eine exemplarische Realisierung einer erfindungsgemäßen Bohrkrone 1010 mit einer Sensorvorrichtung 1020 auf der Basis eines Zwei-Draht-Hall-Sensors 1021H, wobei die Bohrkrone 1010 Teil eines mit einer entsprechenden Auswertevorrichtung ausgestatteten Bohrsystems 1000 bildet. Die Sensorvorrichtung 1020 umfaßt auch einen Permanentmagneten 1028, der als Magnetfeldquelle für den Hall-Sensor 1021H fungiert.

Als sinnvolle Art der Signalübertragung zwischen der mit der Bohrkrone 1010 rotierenden Sensorvorrichtung 1020 und der beispielsweise in einer Antriebsmaschine angeordneten Meßvorrichtung, sieht das Ausführungsbeispiel die Verwendung eines Schleifrings 1043 vor. Dafür kann am oberen Schaft der Bohrkrone 1010 ein isolierter Kollektor, d.h. ein Schleifring 1043, angebracht werden, der mit dem positiven Potential des Hall-Sensors 1021H isoliert verbunden ist. Das Erdpotential 1144 für die Versorgung des Hall-Sensors 1021H wird über die Gerätemasse und über die Bohrkrone 1010 selbst geführt. Dies erspart einen Schleifring. Der Schleifring 1043 wird beispielsweise mittels Bürsten in der Werkzeugaufnahme der Antriebsmaschine abgegriffen.

Erfindungsgemäß kann anstelle des Schleifrings 1043 ein Koppeltransformator zusammen mit einem Gleichrichter auf der Sekundärseite, d.h. auf der an der Bohrkrone montierten Seite des Trafos, Verwendung finden. Der Gleichrichter versorgt den Hall-Sensor mit Strom. Die Stromaufnahme des Hall-Sensors hängt von der magnetischen Flußdichte ab. Die Stromaufnahme kann über die Leistungsaufnahme (oder auch über den Strom) auf der Primärseite des Übertragers gemessen werden.

### 3.5. Ohmsche Kontaktelemente

Ohmsche Kontaktelemente stellen eine bevorzugte Sensorvorrichtung der Erfindung dar. Eine entsprechende Bohrkrone bzw. ein entsprechendes Bohrsystem sowie eine entsprechende Meß- und Auswertevorrichtung lassen sich mittels der nachstehenden Merkmale in bevorzugter Weise realisieren.

**Sensorprinzip und physikalischer Effekt:** Änderung des Widerstandes oder Überbrückung von leitenden Kontakten an den Bohrsegmenten.

**Koppler, Übertragung auf die rotierende Bohrkrone:** Schleifring, Erdpotential.

**Meß- und Auswerteelektronik:** Über einen Shuntwiderstand wird die Stromaufnahme gemessen, nachfolgend ein Tiefpaßfilter, Verstärker und A/D-Wandler, Mikroprozessor.

**Meßsignal(e):** Widerstandsänderung an den Bohrsegmenten.

**Signalauswertung:** Auswertung der Meßspannung synchron zur Motordrehzahl: Darstellung des Meßsignals als Funktion des Bohrkronenwinkels und Kumulierung der Meßsignale, Wegmitteln des DC-Untergrundes und des Rauschens, Festlegen einer Schwelle und Anzeige.

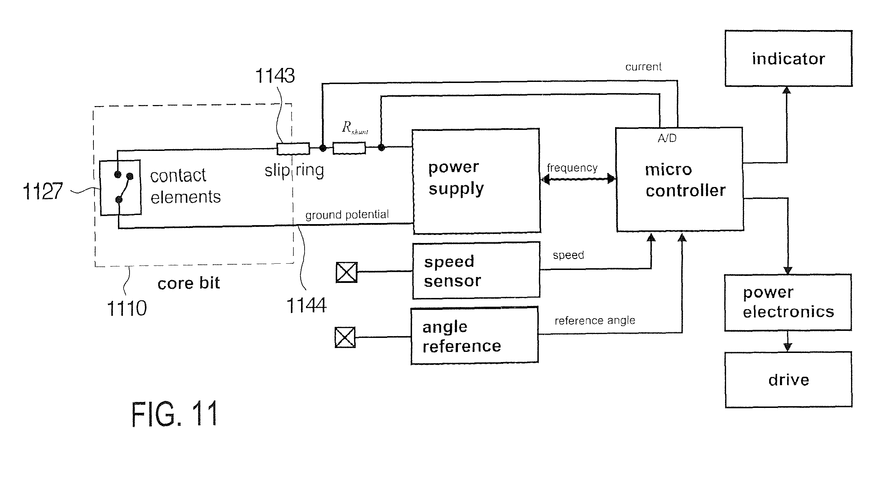

Figur 11 zeigt eine exemplarische Realisierung einer erfindungsgemäßen Bohrkrone 1110 mit einer Sensorvorrichtung auf der Basis von ohmschen Kontaktelementen 1127. Solche Kontaktelemente 1127 können beispielsweise durch in einer abbauenden Matrix 416 der Bohrkrone 1110 angeordnete, leitende Elemente 425 realisiert werden, wie in den Figuren 4A bis 4F gezeigt wird.

Die Verwendung ohmscher Kontaktelemente stellt eine einfache und robuste Möglichkeit für die Eisendetektion dar. Ein Nachteil der Methode ist, daß eine Detektion des Eisens erst beim Anbohren erfolgen kann. Will man das Eisen nicht verletzen, so muß beispielsweise auf eine induktive (Spule), magnetische (Hall) oder Wirbelstrommethode zurückgegriffen werden.

Da ein wie beschriebener ohmscher Kontakt beispielsweise auf der Basis von in abbauenden Elementen der Bohrkrone versehenen leitenden Bereichen in der Praxis nicht mit einem idealer Schalter vergleichbar ist, ist es sinnvoll, das Meßsignal einer Signalaufbereitung, zum Beispiel einer Filterung, insbesondere einer Bandpaßfilterung, zu unterziehen.

Analog der Figur 10 zeigt Figur 11 ein Ausführungsbeispiel, bei dem eine Signalübertragung zwischen der mit der Bohrkrone 1010 rotierenden Sensorvorrichtung und einer beispielsweise in einer Antriebsmaschine angeordneten Meßvorrichtung über einen Schleifring 1143 erfolgt. Schutzelemente gegen Überspannung beim Anbohren an ein Spannungsführendes Kabel sind nicht gezeichnet.

Ein Stromkreis von der Meß- und Auswertevorrichtung beispielsweise in der Antriebsmaschine zu den ohmschen Kontaktelementen in der Bohrkrone kann über zwei Schleifringe erfolgen, die jeweils einen Signalpfad zur bzw. von der Bohrkrone ermöglichen. Um auf einen zweiten Schleifring verzichten zu können, kann der Stromkreis jedoch, wie dargestellt, über das Erdpotential des Untergrunds 1144 geschlossen werden.

Erfindungsgemäß kann anstelle des Schleifrings 1143 ein Koppeltransformator verwendet werden. Der Transformator wird je nach dem Widerstand der Kontaktelemente belastet oder auf der Sekundärseite sogar kurzgeschlossen. Diese Änderung des Widerstands kann über die Stromaufnahme auf der Primärseite gemessen werden.

## 4. SIGNALAUSWERTUNG

### 4.1. Signalauswertung für lokale Meßmethoden

#### 4.1.1. Signalverläufe

Jede lokale Meßmethode, d.h. jede lokale Meßsonde, die an einem Punkt des vorderen Endes der Bohrkrone angebracht ist, erzeugt ein zum Drehwinkel der Bohrkrone periodisches, pulsartiges Signal. Ob es sich nun um einen Hall-Sensor oder um einen induktiven Näherungssensor handelt, spielt dabei eigentlich keine Rolle. Im ersten Fall werden tatsächlich Spannungspulse erzeugt, im zweiten Fall sind es eher pulsartige Frequenzänderungen, die detektiert werden müssen. Im Falle eines ohmschen Kontaktes, d.h. eines Schalters, sind es Widerstandsänderungen, die wiederum beispielsweise als Spannungsänderung detektiert werden können. Die Signalauswertung - geschehe sie nun digital in einem Mikrokontroller oder analog mit einer diskreten Filter- und Verstärkerschaltung - ist im wesentlichen also eine Peak-Detektion, d.h. eine Signalscheitel-Detektion. Je nachdem an welcher Stelle und unter welchem Winkel die Bohrkrone ein Target nähert, d.h. z.B. je nachdem an welcher Stelle und unter welchem Winkel ein oder mehrere Armierungseisen durch die Bohrkrone angeschnitten werden, ergeben sich unterschiedlich lange Pulsbreiten.

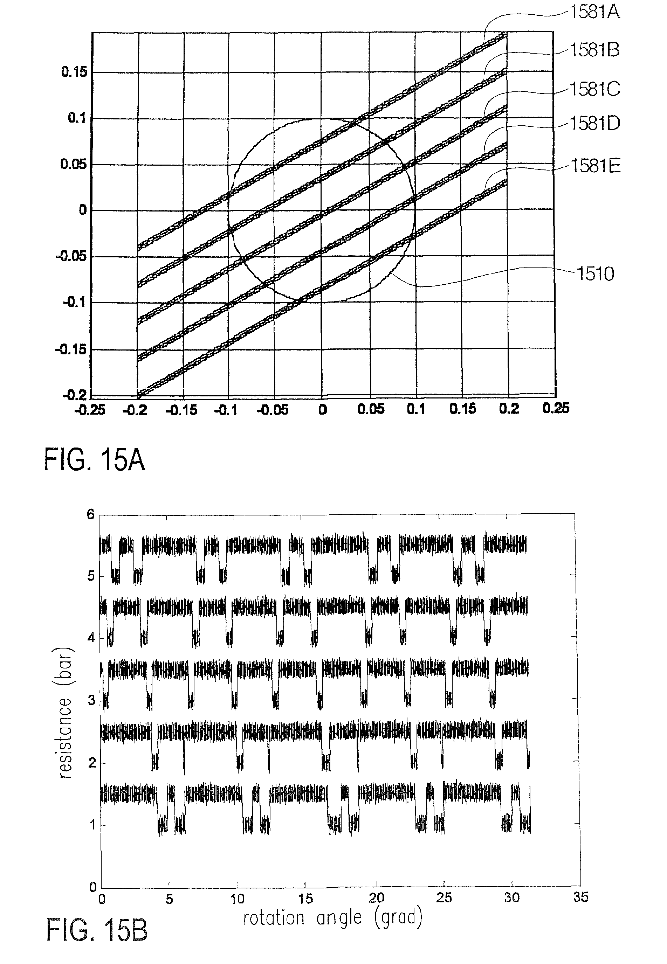

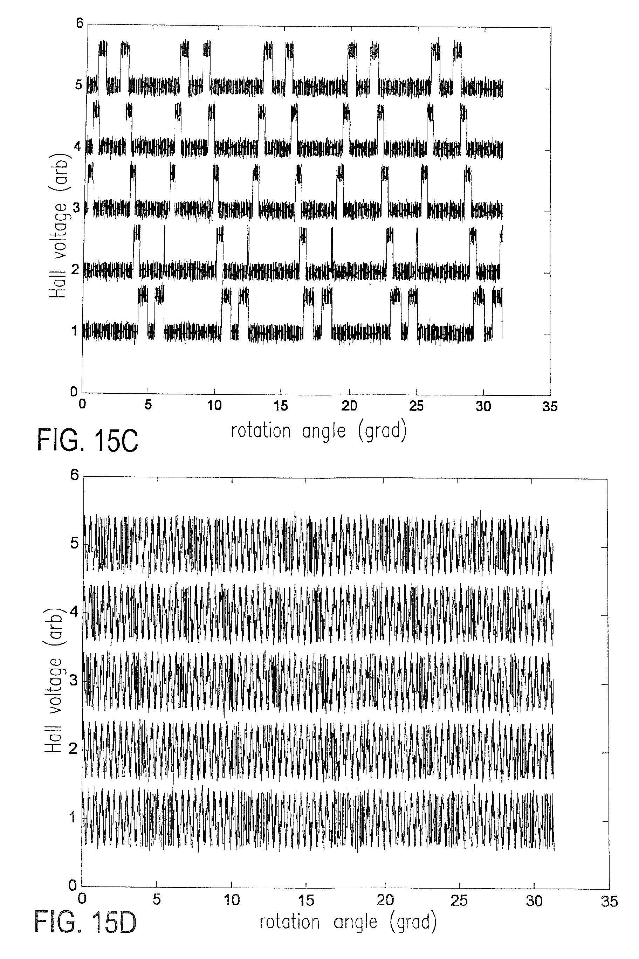

Im Folgenden wird unter Bezugnahme der Figuren 15A-15D eine Simulation fünf unterschiedlicher Situationen diskutiert. Dabei wird angenommen, daß ein Armierungseisen an fünf verschiedenen Stellen relativ zum Zentrum einer Bohrkrone angebohrt wird. Figur 15A zeigt diese Simulationsannahme. Dargestellt wird der Umriß einer Bohrkrone 1510 sowie fünf Armierungseisen 1581A-1581E. Die Schnittpunkte eines jeweiligen Armierungseisens 1581 durch die Bohrkrone 1510 sind durch Punkte gekennzeichnet.

Figur 15B zeigt die simulierte, normierte Widerstandsänderung eines mittels ohmscher Kontakte gewonnenen Meßsignals als Funktion des Drehwinkels der Bohrkrone 1510 in rad. Um die simulierten Signalverläufe der jeweiligen Armierungseisenpositionen klar voneinander darstellen zu können, sind sie unterschiedlich normiert. Somit entsprechen die dargestellten Meßsignalverläufe von oben nach unten dem durch Detektion des jeweiligen Armierungseisen 1581A bis 1581E zu erwartenden Meßsignalverlauf. Die unterste Kurve entspricht somit einer Detektion des Armierungseisens 1581E. Die im Meßsignalverlauf auftretenden Pulse sind breit und relativ nahe beieinander. Je näher das Armierungseisen zum Zentrum der Bohrkrone hin verschoben wird, desto symmetrischer wird die Pulsverteilung, und desto kürzer werden die Pulse.

Figur 15C stellt eine analoge Situation dar, bei der keine Widerstandswerte, sondern (normierte) Spannungswerte eines (digitalen, d.h. analoger Hall-Sensor mit Schmitt-Trigger) Hall-Sensors simuliert werden. Die Pulse sind vergleichbar, nur ist das Vorzeichen umgekehrt.

Analog zu den Figuren 15B und 15C zeigt Figur 15D in schematischer Darstellung die simulierte Frequenzänderung eines beispielsweise in einem abbauenden Element der Bohrkrone 1510 angeordneten, induktiven Näherungssensors. Um die Frequenzänderung visualisieren zu können, wurde die Frequenz sehr tief gewählt, was nicht der Realität entspricht. Wie oben näher beschrieben, kann die Frequenz über einen Counter-Eingang eines Mikrokontrollers direkt digitalisiert und damit in einen numerischen Wert übersetzt werden. Für eine analoge Pulsdetektion bietet sich ein Frequenz-Spannungs-Wandler (f/V-Converter) an.

### 4.1.2. Allgemeine Signalauswertung

Aus den obigen Überlegungen und Simulationen ist ersichtlich, daß die Signalauswertung für eine lokale Meßmethode in einer zuverlässigen Peak- oder Pulsdetektion bestehen kann.

Eine Pulsdetektion geschieht vorzugsweise in einem Mikrokontroller. Sobald ein Peak detektiert wird, d.h. sobald die Spannung am Eingang eines A/D-Wandlers des Mikrokontrollers eine gewisse Schwelle überschritten $U_{thr}$ hat, und die Länge des Pulses nicht länger als eine Viertelumdrehung Bohrkrone entspricht, gilt der Puls als detektiert. Zur Sicherheit kann noch ein zweiter Puls abgewartet werden, der ebenfalls diese Bedingungen erfüllt. Erst dann gilt das Armierungseisen als detektiert.

Im Falle von sehr kleinen Bohrkronen beispielsweise mit einem Durchmesser von etwa 10-20mm kann es zu Volltreffern von Armierungseisen kommen. In diesem Falle wird das Sensorsignal nicht mehr moduliert. Sollte also die Pulslänge mehr als einer halben Umdrehung der Bohrkrone entsprechen, so kann das Armierungseisen ebenfalls als detektiert gelten. Es wird in diesem Fall kein zweiter Puls abgewartet, sondern es wird direkt auf die Anwesenheit eines Armierungseisens geschlossen.

Ist ein Target detektiert worden, kann dieser Umstand dem Anwender angezeigt werden und/oder können entsprechende Aktionen einleitet werden (z.B. Motor abschalten, Vorschubmotor stoppen). Um die Pulsdauer als Funktion des Drehwinkels der Bohrkrone zu beurteilen, ist es notwendig, die Drehzahl des Motors zu kennen, was im Allgemeinen vorausgesetzt werden kann. Denn wenn ein Mikrokontroller in ein Bohrwerkzeug integriert ist, wird dieser im allgemeinen für eine Drehzahlregelung verwendet.

### 4.1.3. Winkelauswertung

Ein robustes und bevorzugtes Auswerteverfahren für alle lokale Meßverfahren beruht auf einer synchronen Messung des Drehwinkels der Bohrkrone. Werden die Meßsignale (ob es nun eine Impedanzänderung, eine Änderung der Resonanzfrequenz oder eine Änderung des Widerstandes ist) als Funktion des Drehwinkels modulo $2\pi$ dargestellt, so werden sich immer an dem Winkel, wo beispielsweise ein Eisen detektiert wird, Signale kumulieren. Wird der Winkelbereich in z.B. zehn Sektoren ä 36° (Sektor-Klassen) eingeteilt und die mittleren Signalamplituden innerhalb eines jeweiligen Sektors summiert, so werden in Bereichen, wo sich tatsächlich ein Armierungseisen befindet, die Signale kumulieren, während das Rauschen in den übrigen Bereichen weggemittelt wird. Ein durch den Untergrund verursachten, auch "DC-Offset" genannten Gleichspannungsversatz kann einfach ermittelt und subtrahiert werden. Übersteigen die in den Sektoren aufsummierten Signale einen gewissen Schwellenwert, so wird dies beispielsweise angezeigt oder aber der Antrieb wird gestoppt.

Steht die Maschine, so werden die aufsummierten Klassen auf Null zurückgesetzt. Das Reset kann auch per Hand durch den Anwender ausgelöst werden. Eine Alternative ist, daß die aufsummierten Signale innerhalb der Klassen mittels eines sehr langsamen Hochpaßfilters (Grenzfrequenz z.B. 15-30 sec) mitgeschleppt werden. Somit klingen die Daten automatisch nach einer gewissen Zeit ab, und es werden nur die Signaländerungen gemessen.

Erschwerend für diese Methode kommt hinzu, daß sich das Gerät während des Arbeitens bewegt, d.h. nach links und rechts ausschwenkt. Dies bewirkt, daß die Klassen ein wenig verschmiert werden. Daher ist es sinnvoll, nicht zu schmale Winkelbereiche zu wählen.

Sinnvoll ist ebenfalls eine Anzeige in Form eines Ringes aus LED um die Werkzeugaufnahme. In den Winkelbereichen, wo Eisen detektiert wurde, können die LED je nach Stärke der Detektion aktiviert werden. Dies zeigt dem Anwender nicht nur an, *daß* auf ein Armierungseisen gestoßen worden ist oder bald stoßen wird, sondern auch an welchem Ort sich das Armierungseisen (ungefähr) befindet.

Selbstverständlich sind neben dem oben beschrieben, bevorzugten Winkelauswertungsverfahren auch andere, dem Fachmann bekannte Verfahren zur Winkelauswertung im Rahmen der Erfindung sinnvoll anwendbar. Hier wird auf die einschlägige Literatur zur winkelabhängigen Signalauswertung verwiesen.

### 4.2. Signalverläufe und Signalauswertung für globale Meßmethoden

Der Fall, daß die Spule nicht lokal an der Stelle eines Schleifelements der Bohrkrone angebracht ist, sondern beispielsweise axial um die Bohrkrone gewickelt ist, ist vergleichbar mit einem Metalldetektor. Hierbei soll die Spule möglicht weit am vorderen Ende der Bohrkrone angebracht sein, kurz hinter den Schleifelementen. Zudem ist es vorteilhaft, wenn die Mantelfläche der Bohrkrone aus nichtmetallischem Material gefertigt ist. Faserverstärkte Verbundstoffe stellen hier eine bevorzugte Lösung dar. Dabei können die Diamantsegmente am Ende der Bohrkrone nach wie vor an einem einen metallischen Ring befestigt werden.

Die Signalauswertung besteht in diesem Fall aus der Festlegung einer gewissen Mindestschwelle, die das Ausgangssignal des Metalldetektors erreichen muß, damit ein Armierungseisen als mit Sicherheit detektiert worden gilt. Metalldetektoren können ebenfalls mit Oszillatorschaltungen realisiert werden, welche mit einer Güte- oder Frequenzänderung auf die Anwesenheit von Eisen reagieren. (siehe den Abschnitt "Wirbelstromsensoren")

### 4.3. Allgemeines

Erfindungsgemäß kann die Auswertung eines von der Sensorvorrichtung direkt oder indirekt über eine vorgeschaltete Meßvorrichtung gelieferten Meßsignals in einer Meßvorrichtung oder in einer besonders für diesen Zweck vorgesehenen Auswertevorrichtung erfolgen. Die Auswertung kann allein auf der Basis des o.g. Meßsignals oder in Zusammenhang mit weiteren Parametern, insbesondere in Zusammenhang mit weiteren Bohrparametern wie Schnittgeschwindigkeit, Anpreßkraft, Wasserzufuhr, Drehmoment, etc., erfolgen. Zum Beispiel könnte die Auswertung in Abhängigkeit von vorbestimmten, gemessenen und/oder von einem Benutzer eines erfindungsgemäßen Bohrsystems gelieferten Parametern erfolgen. Das Auswertungsergebnis und/oder eines oder mehrerer der weiteren Parametern können der Meßvorrichtung und/oder der Sensorvorrichtung zurückgeführt werden, um ein besseres, insbesondere ein den Anforderungen des Benutzers angepaßtes, Auswerteergebnis zu erzielen. Zum Beispiels könnte der Benutzer über eine entsprechende Eingabevorrichtung bestimmen, ob eher eine hohe Detektionsempfindlichkeit, bei der ein Target früh, d.h. auch aus großer Entfernung, erkannt wird, oder eher eine hohe Detektionsgenauigkeit, bei der wenig "Fehlmeldungen" auftreten, erwünscht ist. Ebenfalls könnte beispielsweise die Schnittgeschwindigkeit als Parameter zur Wahl zwischen Detektionsgenauigkeit und Detektionsempfindlichkeit eingesetzt werden, wobei wenn schnell durch den Bohruntergrund gebohrt wird, eher die Empfindlichkeit der Detektion betont wird, aber wenn langsam durch den Untergrund gebohrt wird, größerer Wert auf die Detektionsgenauigkeit gelegt werden darf.

Eine größere Detektionsempfindlichkeit könnte beispielsweise dadurch erreicht werden, daß mehrere im abbauenden Bereich der Bohrkrone angeordneten Sensorvorrichtungen zugeschaltet werden, während beispielsweise eine größere Detektionswinkelgenauigkeit dadurch erzielt werden könnte, daß lediglich eine in einem begrenzten Umfang der Bohrkrone detektierende Sensorvorrichtung zugeschaltet wird.

Die Meß- und Auswertevorrichtung können sowohl analoge als auch digitale Komponenten umfassen. Ebenfalls können sie in Form einer programmierbaren Hardware ausgeführt sein, deren Funktionsweise über eine entsprechende Programmsoftware bestimmt wird.

Für die Auswertung und für eine Anpassung der Auswertung ergeben sich gemäß der obigen Lehre unzählige Kombinationsmöglichkeiten, die sich im Einzelnen nicht auflisten lassen. Der Fachmann auf dem Gebiet der Meß- und Auswertevorrichtung weiß jedoch aus dieser Lehre, wie die Sensorvorrichtung sowie die Meß- und Auswertevorrichtungen der Erfindung auch außerhalb der explizit beschriebenen Lehre abgeändert werden können.

## 5. SIGNALISIERUNG

Vorzugsweise umfaßt das Bohrsystem eine Signalisierungsvorrichtung, die in Abhängigkeit von dem Meß- und/oder Auswertesignal eine Anpassung eines oder mehreren Bohrparameters automatisch vornimmt, und/oder einem Nutzer eine Anpassung eines oder mehrerer Bohrparameters wahrnehmbar signalisiert, und/oder einem Nutzer einen Austausch der Bohrkrone wahrnehmbar signalisiert, und/oder einem Nutzer die Detektion eines Targets wahrnehmbar, insbesondere visuell und winkeltreu, signalisiert, und/oder den Bohrvorgang automatisch abbricht. Vorzugsweise umfaßt die Anpassung eines oder mehreren Bohrparameters eine Anpassung des Drehmoments, der Schnittgeschwindigkeit, der Wasserzufuhr, der Anpreßkraft und/oder der Bohrleistung.

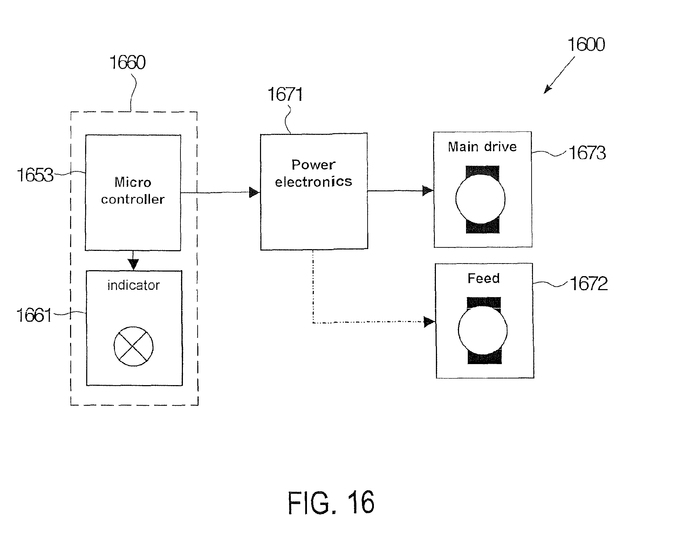

Figur 16 zeigt in schematischer Darstellung eine Signalisierungsvorrichtung 1660 eines erfindungsgemäßen Bohrsystems 1660 gemäß einem weiteren Ausführungsbeispiel. Die dargestellte Signalisierungsvorrichtung 1660 umfaßt einen Mikrokontroller 1653 sowie eine damit verbundene Anzeigevorrichtung 1661. Der Mikrokontroller 1653 ist zudem mit einer Leistungselektronik 1671 verbunden, über die der Mikrokontroller 1653 eine dem Antrieb der Bohrkrone dienende Antriebsvorrichtung 1673 und einen dem Vorschub der Bohrkrone dienenden Vorschubvorrichtung 1672 regeln kann.

Vorzugsweise ist die Anzeigevorrichtung 1661 in Form eines Ringes ausgeführt, an dessen äußeren Umfang LEDs in regelmäßigen Abständen angebracht sind. Der Ring weist beispielsweise ein Kontaktierungs- und Befestigungselement auf, das eine Signalübertragung zwischen der Anzeigevorrichtung 1661 und dem Mikrokontroller 1653 über ein entsprechendes Kontaktelement am Gehäuse der Antriebsmaschine ermöglicht, und das den Ring in eindeutiger Position im Verhältnis zur Antriebsmaschine befestigt. Vorzugsweise ist die Anzeigevorrichtung um die Werkzeugaufnahme befestigbar.

Mittels der Signalübertragung zwischen dem Ring und dem Mikrokontroller sowie durch die eindeutige Position des Rings gegenüber der Antriebsmaschine ist es beispielsweise möglich, in den Winkelbereichen, in denen Eisen detektiert wurde, eine LED je nach Stärke der Detektion zu aktivieren. So kann dem Anwender nicht nur angezeigt werden, *daß* auf ein Armierungseisen gestoßen worden ist oder bald stoßen wird, sondern auch an *welchem Ort* sich das Armierungseisen (ungefähr) befindet.

## 6. GESTALTUNG DER SENSORVORRICHTUNGEN UND SIGNALGEBER

Eine erfindungsgemäße Bohrkrone wie auch ein erfindungsgemäßes Bohrsystem kann eine oder mehrere Sensorvorrichtungen und/oder Signalgebervorrichungen aufweisen. Diese sind vorzugsweise in einer Art und Weise auszurichten, die eine optimale Targetdetektion, vorzugsweise eine optimale Detektionsempfindlichkeit, oder anderes bevorzugtes Auswerteergebnis in eine bevorzugte Detektionsrichtung, vorzugsweise in Bohrrichtung, gewährleistet.

Zur Erzielung der optimalen Targetdetektion bzw. des bevorzugten Auswerteergebnisses können die Sensorvorrichtungen und/oder Signalgebervorrichungen rotationssymmetrisch oder rotationsasymmetrisch zur Rotationsachse der Bohrkrone in oder an der Bohrkrone oder in oder an einer Antriebsmaschine angeordnet sein.

Insbesondere in oder an der Bohrkrone angeordneten Sensorvorrichtungen und/oder Signalgebervorrichungen sind mechanisch und/oder elektrisch zu schützen, um eine lange Lebensdauer dieser Vorrichtungen zu gewährleisten. Dieser Schutz kann dadurch realisiert werden, daß die Sensorvorrichtungen und/oder Signalgebervorrichungen in einer der mechanischen und elektrischen Belastung entsprechenden Vergußmasse, einem entsprechenden Metall oder in entsprechenden Aussparungen der Bohrkrone verkapselt werden. Ebenfalls sind zwischen den Sensorvorrichtungen und/oder Signalgebervorrichungen und einer Meß- und Auswertevorrichtung verlaufenden Signalleitungen vorzugsweise zu schützen.

Die oben beschriebenen Ausführungsbeispiele haben gezeigt, daß eine Anwendung von Sensorvorrichtungen und/oder Signalgebervorrichungen in einer zum Bohrsystem gehörenden Antriebsmaschine ebenfalls zweckmäßig sein kann, um ein bevorzugtes Auswertungsergebnis, beispielsweise eine winkeltreue Detektionsanzeige, zu erzielen.

**7. VERBINDUNG BOHRKRONE-ANTRIEBSMASCHINE**

Die oben beschriebenen Ausführungsbeispiele haben gezeigt, daß die Herstellung einer signalübertragenden Verbindung zwischen in oder an der rotierenden Bohrkrone angeordneten Sensorvorrichtungen und/oder Signalgebervorrichungen und einer außerhalb der Bohrkrone quasi-statisch, beispielsweise in einer zum Bohrsystem gehörenden Antriebsmaschine, angeordneten Meß- und Auswertevorrichtung besondere Maßnahmen erfordert.

Ausführungsbeispiele einer geeigneten, rotatorischen Signalübertragungsverbindung wurden beispielsweise in Zusammenhang mit den Ausführungsbeispielen der Figuren 2E, 8A, 4F und 5A ausführlich beschrieben, weshalb an dieser Stelle auf eine Wiederholung der dortigen Ausführungen verzichtet wird.

**8. GLEICHUNGEN**

**8.1. Parallelschwingkreis mit transformatorischem Übertrager**

Die folgenden Überlegungen und Berechnungen zeigen, daß es möglich ist, eine kleine Impedanzänderung $\delta Z$ in der Sensorspule über einen Koppeltransformator zu messen, der eine Signalübertragung vom fixen Gerät zur rotierenden Bohrkrone ermöglicht. Alternativ könnten Schleifringe verwendet werde. Jedoch sind diese unzuverlässig, wenig robust, verschmutzungsanfällig und stellen außerdem eine zusätzliche Rauschquelle dar.

Das Prinzip, das hier vorschlagen wird, verwendet den Effekt der Verstimmung eines (nicht unbedingt resonanten) Schwingkreises durch eine Änderung der Sensorspulen-Impedanz.

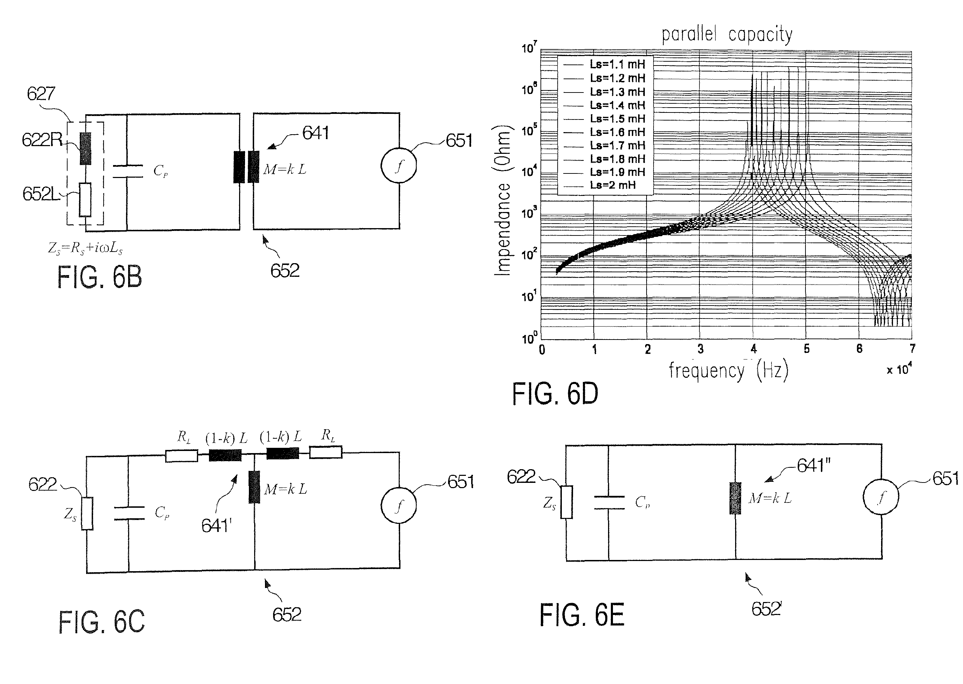

Figur 6B zeigt eine Kopplung eines Oszillators 620 an einen Parallelschwingkreis 652 mittels eines Übertragers in Form eines Koppeltransformators 641 in schematischer Darstellung. Dabei wird der Schwingkreis 652 beispielsweise aus der Sensorspule 622, einer Kapazität $C_P$ und der Induktivität M des Koppeltransformators 641, d.h. der Übertragerinduktivität M, gebildet. Die Impedanz $Z_S$ der Sensorspule 622 umfaßt sowohl einen induktiven 622L ($L_s$) als auch einen reellen 622R ($R_s$) Anteil; die Kapazität $C_P$ ist parallel zur Übertragerinduktivität M geschaltet.

Für die Berechnung der Impedanz und der Resonanzfrequenz wird ein T-Ersatzschaltbild 641' gemäß Figur 6C für den Übertrager 641 mit einem Koppelungsfaktor $k$ ($k$=0.9-1.0) verwendet.

Die Figur 6D zeigt den Frequenzverlauf der Impedanz, die als Belastung für den Oszillator 620 aus der Schaltungsanordnung der Figur 6C resultiert, als Funktion der Sensorinduktivität $L_S$ für verschiedene Werte der Sensorinduktivität im Bereich 1-2 mH. Ansonsten gelten die folgenden Werte:

| | |
|---|---|
| $R_S$ = 1 Ohm | $L_M$ = 100e-3 H |
| $L_S$ = 1e-3 H | $R_L$ = 1 Ohm |
| $C$ = 1e-8 F | $R_M$ = 1 Ohm |
| $L_L$ = 1e-3 H | |

Daraus ist ersichtlich, daß die Resonanzfrequenz des Systems stark von der Sensorinduktivität abhängt. Die Resonanzfrequenz hängt ziemlich linear von der Sensorinduktivität ab.

Berechnung der Resonanzfrequenz

In erster Näherung können die Streuinduktivitäten vernachlässigt werden. Das heißt, es wird ein idealer, verlustfreier ($R_L$=0) Koppeltransformator 641" mit Koppelungsfaktor k=1 angenommen. Danach ergibt sich das vereinfachte Ersatzschaltbild der Figur 6E.

Die Induktivität der Sensorspule 622 sowie die Induktivität des Koppeltransformators 641 sind nun parallel zur Kapazität $C_P$ verschaltet.

Wird der Seriewiderstand des Sensors in einen äquivalenten Parallelwiderstand $R_P$ verwandeln, und werden außerdem die beiden parallelen Induktivitäten $L_S$ und M zu einer einzigen Induktivität zusammenfassen, so ergibt sich ein reiner Parallelschwingkreis 652' mit folgenden äquivalenten Komponenten:

$$R_P = \frac{R_S^2 + \omega^2 L_S^2}{R_S}$$

$$L_P = \frac{R_S^2 + \omega^2 L_S^2}{\omega^2 L_S^2}$$

Diese Parallelinduktivität wird nun noch parallel zur Koppelinduktivität gerechnet:

$$L_{PP} = L_P \mathbin{/\!/} M = \frac{M \cdot \left(R_S^2 + \omega^2 L_S^2\right)}{R_S^2 + \omega^2 L_S \cdot \left(L_S + M\right)}$$

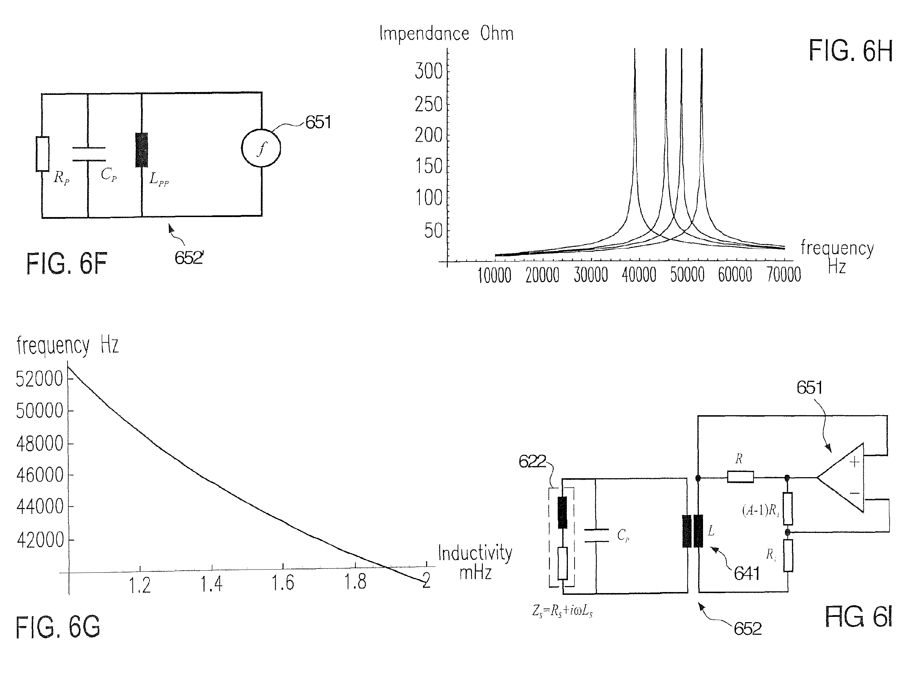

Das Ersatzschaltbild wurde nun zu einem echten Parallelschwingkreis gemäß Figur 6F mit den Komponenten $R_P$, $C$ und $L_{PP}$ reduziert. Die Resonanz eines Parallelschwingkreises ist gegeben durch:

$$\frac{1}{\omega_{res}^2} = L_{PP} \cdot C$$

Wird $L_{PP}$ in obige Gleichung eingesetzt und nach $\omega_{res}$ aufgelöst, so ergibt sich für die Resonanzfrequenz:

$$f_{res} = \frac{\omega_{res}}{2\pi} = \frac{1}{2\pi} \sqrt{-\frac{-L_S^2 - L_S M + CMR_S^2 - \sqrt{4CL_S^2 MR_S^2 + (L_S^2 + L_S M - CMR_S^2)^2}}{2CL_S^2 M}}$$

Bei einer Änderung der Sensorinduktivität $L_S$ von beispielsweise 1mH auf 2 mH ergibt sich ein Frequenzhub von etwa 13 kHz. In anderen Worten, die Resonanzfrequenz $f_{res}$ fällt bei Verwendung der gleichen Werte wie oben gemäß der in Figur 6G dargestellten Funktion von 53 kHz auf 40 kHz. Dies zeigt, daß der Resonanzkreis nicht von der Übertragerinduktivität dominiert ist, sondern durchaus auf eine kleine Änderung der Sensorinduktivität $L_S$ empfindlich ist.

Berechnung der Impedanz

Die Impedanz des in Figur 6F gezeigten, reinen RLC-Parallelschwingkreises ist gegeben durch:

$$Z = \frac{1}{\sqrt{\frac{1}{R_P} + \left(\omega C - \frac{1}{\omega L}\right)}}$$

Werden $L = L_{PP}$ und $R_P$ aus den obigen Gleichungen eingesetzt, so ergibt sich für die gesuchte Impedanz:

$$|Z|(\omega) = \frac{1}{\sqrt{\left|\omega C + \frac{R_S^2}{\left(R_S^2 + \omega^2 L_S^2\right)^2} - \frac{R_S^2 + \omega^2 L_S\left(L_S + M\right)}{\omega M\left(R_S^2 + \omega^2 L_S^2\right)}\right|}}$$

Figur 6H zeigt das Verhalten der Impedanz gemäß obiger Gleichung für verschiedene Sensorinduktivitätswerte.
Die Impedanz kann auch auf direktem Weg berechnet werden, ohne äquivalente Parallelinduktivitäten und Parallelwiderstände zu berechnen. Dabei sind die einzelnen Impedanzen von Sensor, Kapazität und Transformator gegeben durch:

$$Z_S = R_S + i\omega L_S$$

$$Z_C = \frac{1}{i\omega C} = \frac{-i}{\omega C}$$

$$Z_M = i\omega M$$

Die Impedanz dieses Systems ist gegeben durch eine Parallelschaltung dieser drei Impedanzen.

$$Z_{tot} = Z_S \,/\!/ Z_C /\!/ Z_M = \frac{Z_S \cdot Z_C \cdot Z_M}{Z_S \cdot Z_M + Z_S \cdot Z_C + Z_C \cdot Z_M}$$

$$Z_{tot} = \frac{M\omega \cdot (-iR_S + \omega L_S)}{R_S \cdot (C_P \cdot M \cdot \omega^2 - 1) + i\omega \cdot [L_S \cdot (C_P \cdot M \cdot \omega^2 - 1) - M]}$$

$$\left| Z \right|_{tot} = \sqrt{\mathrm{Re}(Z)^2 + \mathrm{Im}(Z)^2} = \sqrt{\frac{M^2\omega^2 \cdot \left(R_S^2 + \omega^2 L_S^2\right)}{R_S^2 \cdot \left(\omega^2 C_P M - 1\right)^2 + \left[\left(L_S + M\right)\omega - C_P L_S M \omega^3\right]^2}}$$

LC-Oszillator

Die einfachste Methode zur Erzeugung einer Sinusschwingung besteht in der Entdärnpfung eines LC-Schwingkreises mit Hilfe eines Verstärkers. Die Figur 6I zeigt, wie eine Bohrkrone 610 mit einem Sensorelement 622 ($Z_S$) an einen LC-Oszillator 620, der vorzugsweise in oder an einer nicht dargestellten Antriebsmaschine für die Bohrkrone ausgebildet wird, über einen Koppeltransformator 641 gekoppelt werden kann. Die Parallelkapazität $C_P$ eines Parallelschwingkreises 652 kann auf der Bohrkrone selbst angeordnet sein.

Das in Figur 6J dargestellte, reduzierte Ersatzschaltbild zeigt, daß es sich tatsächlich um einen klassischen Parallelschwingkreis 652 mit den Komponenten $L_{PP}$ und $C_P$ handelt. Dabei ist $L_{PP}$ gegeben durch:

$$L_{PP} = L_P \,/\!/ M = \frac{M \cdot \left(R_S^2 + \omega^2 L_S^2\right)}{R_S^2 + \omega^2 L_S \cdot \left(L_S + M\right)}$$

und die Resonanzfrequenz ist gegeben durch:

$$f_{res} = \frac{\omega_{res}}{2\pi} = \frac{1}{2\pi}\sqrt{-\frac{-L_S^2 - L_S M + CMR_S^2 - \sqrt{4CL_S^2 MR_S^2 + (L_S^2 + L_S M - CMR_S^2)^2}}{2CL_S^2 M}}$$

### 8.2. Serienschwingkreis mit transformatorischem Übertrager

Auch ein Serienschwingkreis mit transformatorischem Übertrager läßt sich zur Signalmessung und -übertragung in einem erfindungsgemäßen Bohrsystem sinnvoll einsetzen. Dabei wird eine Kapazität auf der der Bohrkrone entgegengesetzten Seite des transformatorischen Übertragers in Reihe mit dem Transformator verschaltet. Dabei kann die Kapazität beispielsweise Teil einer Antriebsmaschine sein, die im Bohrsystem zum Antrieb der Bohrkrone Verwendung findet, oder auch Teil einer entsprechenden Meß- und/oder Auswerteschaltung bilden.

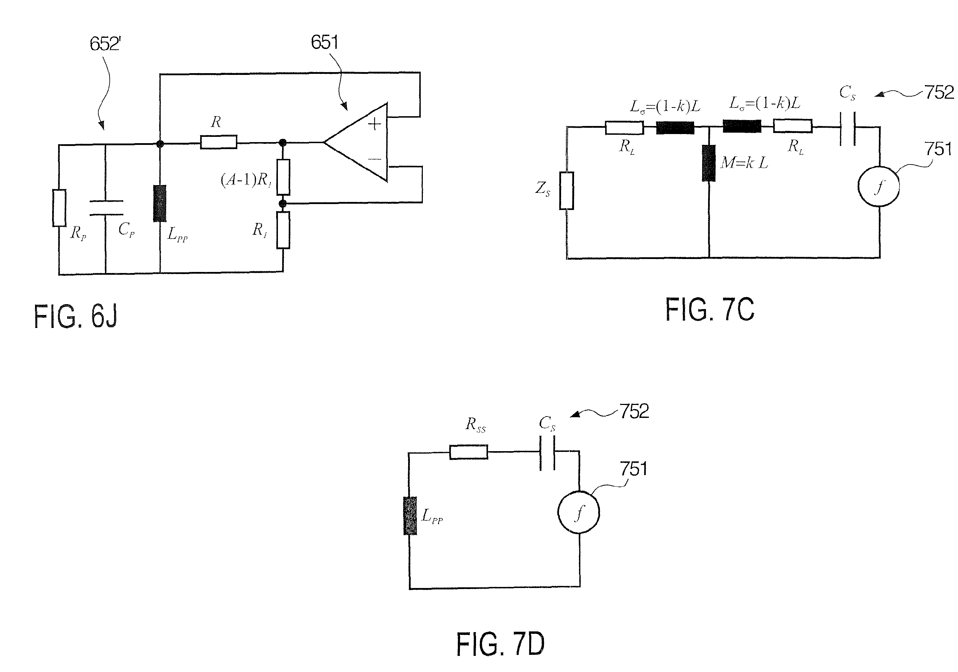

Figur 7C stellt einen Serienschwingkreis 752 mit transformatorischem Übertrager dar, bei dem das T-Ersatzschaltbild 741' des transformatorischen Übertragers analog der Figur 6C anstelle des transformatorischen Übertragers eingesetzt worden ist.

In erster Näherung können die Streuinduktivitäten des Übertragers vernachlässigt werden. Entsprechend wird in Figur 7D ein idealer, verlustfreier ($R_L$=0) Koppeltransformator mit Koppelungsfaktor k=1 angenommen. Unter weiterer Vernachlässigung des Sensorwiderstands $R_S$ stehen die Sensorinduktivität $L_S$ und die Übertragerinduktivität $M$ parallel zueinander. Nach Zusammenfassung dieser beiden Induktivitäten ergibt sich der reine Serienschwingkreis des reduzierten Ersatzschaltbilds der Figur 7D.

Die Gesamtinduktivität $L_{PP}$ ist gegeben durch:

$$L_{PP} = \frac{L_S \cdot M}{L_S + M}$$

Die Resonanzfrequenz des Serienschwingkreises ist gegeben durch:

$$\frac{1}{\omega_{res}^2} = L_{PP} \cdot C$$

Durch Einsetzen ergibt sich:

$$\omega_{res} = \sqrt{\frac{L_S + M}{L_S \cdot M \cdot C}}$$

Die Änderung der Resonanzfrequenz als Funktion der Änderung der Sensorinduktivität, d.h. die Sensorempfindlichkeit, ist gegeben durch:

$$\frac{\partial \omega_{res}}{\partial L_S} = - \frac{1}{2CL_S^2} \cdot \frac{1}{\omega_{res}}$$

Dies bedeutet, daß die Änderung um so größer ist, je kleiner die Sensorinduktivität.

Die Impedanz des RLC-Serienschwingkreises lautet allgemein:

$$Z(\omega) = \sqrt{R^2 + \left( \omega \cdot L - \frac{1}{\omega \cdot C} \right)^2}$$

Durch Einsetzen von $L_{PP}$ ergibt sich:

$$Z(\omega) = \sqrt{R^2 + \left( \omega \cdot \frac{L_S \cdot M}{L_S + M} - \frac{1}{\omega \cdot C} \right)^2}$$

Wird die Streuinduktivitäten $L_\sigma$ nicht vernachlässigt, so ergibt sich als Gesamt-Serieninduktivität:

$$L_{SS} = [(L_S + L_\sigma) // M] + L_L = \frac{(L_S + L_\sigma) \cdot M}{(L_S + L_\sigma) + M} + L_\sigma$$

Die Streuinduktivität ist mit der Hauptinduktivität $M$ über den Koppelungsfaktor $k$ (der nahe bei eins liegt) verknüpft:

$$L_\sigma = (1 - k) \cdot M$$

Damit wird die Resonanzfrequenz:

$$\frac{1}{\omega_{res}} = \sqrt{C \cdot \left[ \frac{(L_S + L_\sigma) \cdot M}{(L_S + L_\sigma) + M} + L_\sigma \right]}$$

oder:

$$\omega_{res} = \sqrt{\frac{L_S + L_\sigma + M}{C \cdot (L_\sigma^2 + L_S \cdot L_\sigma + 2M \cdot L_\sigma + L_S \cdot M)}}$$

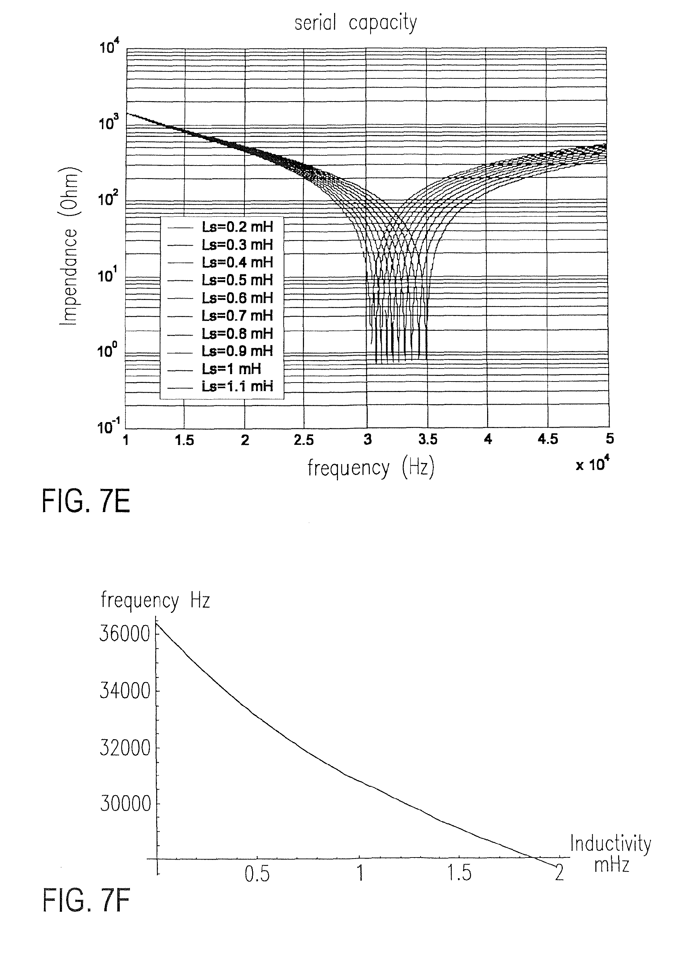

Figur 7E zeigt den Frequenzverlauf der Impedanz, die als Belastung für den Oszillator 720 aus der Schaltungsanordnung der Figur 7C resultiert, als Funktion der Sensorinduktivität $L_S$ für verschiedene Werte der Sensorinduktivität im Bereich 0,2 bis 1,1 mH. Ansonsten gelten die folgenden Werte:

| | |
|---|---|
| $R_S$ = 1 Ohm | $M$ = 10e-3 H |
| $L_S$ = 1e-4 H | $R_L$ = 1 Ohm |
| $C$ = 1e-8 F | $R_M$ = 1 Ohm |
| $L_\sigma$ = 1e-3 H | |

Aus der Figur 7F ist ersichtlich, daß die Resonanzfrequenz des Systems stark von der Sensorinduktivität abhängt.

Bei einer Änderung der Sensorinduktivität $L_S$ von beispielsweise 0,2 mH auf 1,1 mH ergibt sich ein Frequenzhub von etwa 4,5 kHz. In anderen Worten, die Resonanzfrequenz $f_{res}$ fällt bei Verwendung der gleichen Werte wie oben gemäß der in Figur 6G dargestellten Funktion von ca. 35 kHz auf 30,5 kHz. Dies zeigt, daß der Resonanzkreis nicht von der Übertragerinduktivität dominiert ist, sondern durchaus auf eine kleine Änderung der Sensorinduktivität $L_S$ empfindlich ist.

### 8.3. Serienschwingkreis mit kapazitivem Übertrager

Verwendet man ein kapazitives Koppelungselement anstelle eines induktiven Kopplungselements beispielsweise zwischen einer Antriebsmaschine und der Bohrkrone, so vereinfacht sich das Ersatzschaltbild, denn es handelt sich hier bereits um einen reinen Serienschwingkreis. Die Resonanzfrequenz ist direkt abhängig von der Sensorinduktivität und die Impedanz hängt direkt von der Sensorimpedanz ab. Figur 8B zeigt einen derartigen Schwingkreis.

Die Resonanzfrequenz ist gegeben durch:

$$f_{res} = \frac{1}{2\pi} \frac{1}{\sqrt{L_S \cdot C_K}}$$

und die Impedanz ist gegeben durch:

$$Z(\omega) = \sqrt{R_S^2 + \left( \omega \cdot L_S - \frac{1}{\omega \cdot C_K} \right)^2}$$

### 8.4. Wirbelstromsensor

Im Falle hoher Frequenzen (z.B. in der Größenordnung von 100kHz), ist das elektromagnetische System, das eine Sensorspule mit einem in der Nähe der Spule vorhandenen Armierungseisen bildet, äquivalent zu einem schwach gekoppelten Transformator. Durch Anlegen eines hochfrequenten Wechselstromes in der Sensorspule bilden sich Wirbelströme im Armierungseisen aus. Dieser zweite Strompfad im Armierungseisen kann wie die Sekundärspule eines Transformators behandelt werden, der über die Gegeninduktivität schwach an die Primärspule koppelt. Das System Sensorspule-Armierungseisen kann in ein äquivalentes Ersatzschaltbild umgewandelt werden, dessen Impedanz von der Gegeninduktivität M(x) zwischen Sensorspule und leitender Oberfläche des Armierungseisens und damit stark vom Abstand x zwischen Sensorspule und Eisenoberfläche abhängt.

Diese äquivalente Impedanz kann geschrieben werden als:

$$Z_{eq} = \left\{ R_0 + r(x) \cdot \left[ \frac{\omega^2 M^2(x)}{r^2(x) + \omega^2 l^2(x)} \right] \right\} + j\omega \cdot \left\{ L_0 - l(x) \cdot \left[ \frac{\omega^2 M^2(x)}{r^2(x) + \omega^2 l^2(x)} \right] \right\} = R_{eq} + j\omega L_{eq}$$

Dabei bedeuten:

$R_{eq}$: äquivalenter Serienwiderstand des Spulen-Target-Systems
$L_{eq}$: äquivalente Induktivität des Spulen-Target-Systems
$R_0$: Verlustwiderstand der Sensorspule selbst
$L_0$: Induktivität der Sensorspule äquivalenter Verlustwiderstand des Strompfades im Eisen
$r(x)$: (Sekundärspule), hängt nur schwach vom Abstand ab äquivalente Induktivität des Strompfades im Eisen (Sekundärspule),
$l(x)$: hängt nur schwach vom Abstand ab Gegeninduktivität zwischen Sensorspule und Strompfad im Eisen, stark
$M(x)$: vom Abstand abhängig
$x$: Abstand zwischen Sensorspule und Eisen

Eine exakte Berechnung von $M(x)$ ist nur in den seltensten Fällen analytisch möglich. Die Figur 9C zeigt den allgemeinen Verlauf der Induktivität und des äquivalenten Verlustwiderstandes als Funktion des Abstandes. Daraus ist ersichtlich, daß der Verlustwiderstand $R_{eq}$ für größere Abstande fast hyperbolisch verläuft, während er für kleine Werte bei einem gewissen maximalen Wert sättigt. Dies liegt darin, daß für geringe Abstände $x$ nicht mehr der gesamte Fluß die Sensorspule durchdringt. Während die Änderung des Ersatzwiderstandes fast eine Größenordnung ausmacht, beträgt die Änderung der Induktivität nur gerade 5-10%.

$$R_{eq}(x) \approx \frac{a}{x + b}$$

Dies bedeutet, daß die Auswerteschaltung vor allem auf den Realteil der äquivalenten Impedanz empfindlich sein sollte, da dieser größere Änderungen aufweist. Der Fachmann kennt verschiedene Möglichkeiten, um eine Meßschaltung für diesen Realteil zu realisieren.

Eine erste Möglichkeit ist die Verwendung eines LC-Oszillators mit konstantem Amplitudengang. Wirbelstromverluste durch die Nähe des Eisens bedämpfen diesen Oszillator, und die Amplitude der Oszillation nimmt ab. Nachteilig an diesem Ansatz ist, daß Nichtlinearitäten des Oszillators (z.B. als Funktion der Temperatur) selbst den Amplitudengang beeinflussen, und daß die Amplitudenänderung keine lineare Funktion des Abstandes x ist.

Eine Alternative liegt in der Verwendung eines LC-Parallelschwingkreises, der in Resonanz betrieben wird und mit einer hochfrequenten Konstantstromquelle angeregt wird.

In Resonanz ist die äquivalente Impedanz des Sensorspule-Armierungseisen-Systems rein reell und indirekt proportional zum Ersatz-Verlustwiderstand des Spulen-Eisen-Systems.

$$Z_{eq}(x) = \frac{Z_0^2}{R_{eq}(x)} = \frac{Z_0^2}{\frac{a}{x+b}} = \frac{Z_0^2}{a} \cdot = (x + b)$$

$$Z_0 = \sqrt{\frac{L_{eq}}{C}}$$

**8.5. Wechselstrom-Viertelbrücke**

Prinzipiell kann jeder asymmetrische, induktive Wegaufnehmer als seine mit Verlusten behaftete Spule dargestellt und mittels einer Brückenschaltung, beispielsweise einer Wechselstrom-Viertelbrücke mit einer Konstantstromquelle, gemessen werden. Da nur ein Viertel der Brücke seine Impedanz ändert, wird der Ausgang der Brücke nicht linear sein. Die Ausgangsspannung der Brücke ändert mit dem Abstand x in erster Ordnung wie:

$$U(x) = \frac{U_0}{4} \cdot \frac{ax}{1 + \frac{ax}{2}}$$

### 8.6. Wechselstrom-Spannungsteiler mit Konstantstromquelle

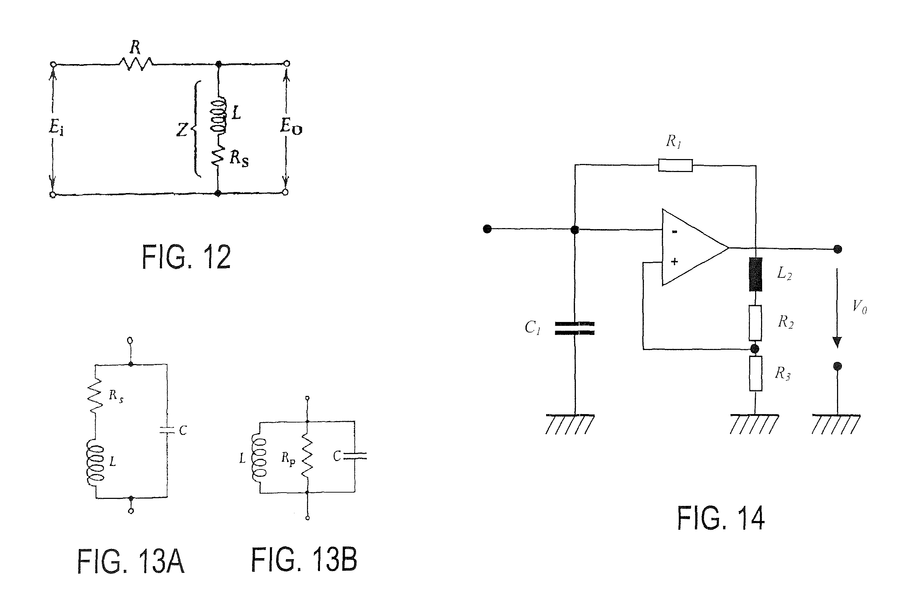

Wird eine Wechselspannung $E_i$ an einen wie in der Figur 12 gezeigten, einfachen Spannungsteiler angelegt, so wird die Spannung $E_0$ über die unbelastete Spule gemessen:

$$E_0 = E_i \frac{Z}{R+Z}$$

Die Spannungsänderung $\delta E_0$ als Funktion der Impedanzänderung $\delta Z$ der Spule läßt sich wie folgt darstellen:

$$\delta E_0 = E_i \frac{R/Z}{R/Z +1} \cdot \frac{\delta Z/Z}{R/Z + \delta Z/Z+1}$$

Der Zusammenhang zwischen $\delta E_0$ und $\delta Z/Z$ ist nicht linear. Wird jedoch der Serienwiderstand durch geeignete Wahl bzw. Ausbildung der als Sensorvorrichtung fungierende Spule groß gegenüber der Impedanz der Spule gemacht, so ergibt sich folgender linearer Zusammenhang:

$$\delta E_0 = E_i \frac{Z}{R} \frac{\delta Z}{Z}$$

Die Schlußfolgerung ist, daß ein Kompromiß zwischen Linearität ($R/Z \gg 1$) und Sensitivität ($R/Z < 1$). gefunden werden muß. Im Rahmen der vorliegenden Erfindung stellt die Linearität eine untergeordnete Rolle dar. Daher wird ein möglichst kleines Verhältnis $R/Z$ bevorzugt.

Die relative Spannungsänderung von $E_0$ ist gegeben durch:

$$\frac{\delta E_0}{E_0} = \frac{R}{Z} \frac{\delta Z/Z}{R/Z + \delta Z/Z+1}$$

Die Impedanzänderung der Spule mit Serienwiderstand $R_S$ und Gütefaktor Q als Funktion des Abstandes zum Armierungseisen ist gegeben durch:

$$\frac{\delta Z}{Z} = \sqrt{\frac{(\delta R_S/R_S)^2}{1+Q^2} + \frac{(\delta L/L)^2}{1+1/Q^2}}$$

Dies bedeutet, daß die Impedanzänderung einerseits durch die Änderung des äquivalenten Serienwiderstands, d.h. der Verluste, und andererseits durch die Änderung der Induktivität der Spule durch die Nähe von permeablem Material bewirkt wird. Der Beitrag der Verluste nimmt mit wachsender Spulengüte ab, wogegen der Anteil der Induktivitätsänderung mit wachsendem Gütefaktor bis zu einem Maximalwert zunimmt. Somit gilt für $Q^2 \gg 1$:

$$\frac{\delta Z}{Z} = \frac{\delta L}{L}$$

Da sowohl $Z$ als auch $dZ$ komplex-wertig sind, ergibt sich ein Phasenwinkel in der Ausgangsspannung:

$$\tan\phi = \frac{\delta L/L - \delta R_S/R_S}{(1/Q)(\delta R_S/R_S) + Q \cdot \delta L/L}$$

Dieser Phasenwinkel kann mittels eines phasensensitiven Gleichrichters detektiert und kompensiert werden.

### 8.7. LC-Oszillatorschaltung

Nicht nur die Impedanz $Z = R + i\omega L$ kann als Meßgröße verwendet werden, sondern auch der $Q$-Faktor:

$$Q = \frac{\text{Im}(Z)}{\text{Re}(Z)}$$

Die Theorie der Oszillatoren ist nicht-linear und daher recht kompliziert. Analytische Ausdrücke wurden für vereinfachte Annahmen gefunden, sind hier aber nicht sehr hilfreich. Für die hiesige Erläuterung genügt es zu wissen, daß in einem Schwingkreis eine gewisse Schwingenergie gespeichert werden muß, und daß nur ein geringer Teil dieser oszillierenden Energie in den Verlusten der Spule (äquivalenter Serienwiderstand) absorbiert werden darf. Experimentell wurde gefunden, daß die gespeicherte Spitzenenergie mindestens doppelt so groß sein sollte als die Energie, die pro Schwingperiode dissipiert wird, um einen guten Oszillator zu bekommen.

Grundsätzlich gibt es zwei Arten von LC-Schwingkreisen, den Parallel- und den Serienschwingkreis. Figur 13A zeigt einen Serienschwingkreis, während Figur 13B einen Parallelschwingkreis zeigt. In beiden Fällen repräsentiert der Widerstand die Verluste der Spule.

Aus der Resonanzbedingung ergibt sich die Größe der Kapazität C:

$$\omega^2 = \frac{1}{LC}$$

In erster Ordnung ist die Güte Q dann gegeben durch:

$$Q = \frac{\omega L}{R_S} = \frac{R_P}{\omega L} = \frac{1}{\omega C R_S} = \omega C R_P$$

Aus der experimentellen Feststellung kann geschlossen werden, daß die Güte mindestens $4\pi$ betragen sollte.

$$\frac{\omega L}{R_S} = Q > 4\pi$$

Aus der Resonanzbedingung läßt sich schließen, daß eine Änderung des Q-Faktors nur eine geringe Frequenzänderung bewirkt. Für kleine Änderungen von Q und L ist die relative Frequenzänderung gegeben durch:

$$\frac{\delta\omega}{\omega} = \frac{\delta Q/Q}{Q^2 - 1} - \frac{1}{2}\frac{\delta L}{L}$$

Daraus ist ersichtlich, daß die relative Induktivitätsänderung einen Faktor -1/2 beiträgt, da $\omega$ proportional zu $1/L^{1/2}$ ist. Jedoch wird der Beitrag der Güte vernachlässigbar, je höher die Güte Q ist. Ist die Güte 10, so beträgt der Anteil nur noch 1%.

Induktive Sensoren in Schwingkreisen bestehen typischerweise aus einer einzigen Spule. Aus diesem Grund ist die Abstandscharakteristik (die Induktivität L als Funktion des Abstandes des Armierungseisens) auch nicht linear. Aber da die Resonanzfrequenz proportional zu $1/(LC)^{1/2}$ ist, zeigt die Frequenz-AbstandsCharakteristik ein lineareres Verhalten.

Ein als erfindungsgemäße Meßschaltungskomponente bevorzugter Oszillator ist der relativ stabile PIERCE-Oszillator, wie er beispielsweise in "Systemtechnik induktiver Weg- und Kraftaufnehmer. Aufnehmer und Anschlußgeräte", von Horst R Loos, Erscheinungsdatum: 1992 ,ISBN: 3816905412 beschrieben wird. Er kann aus einer Transistorschaltung mit einer geerdeten Basis und einer kapazitiven Kopplung zwischen dem Emitter und dem Kollektor realisiert werden.

Die Spannung eines solchen PIERCE-Oszillators ist in einem weiten Bereich proportional zur Güte des Schwingkreises.

$$U \propto \frac{1}{\omega C} \cdot \sqrt{1 + Q^2} \approx \frac{Q}{\omega C}$$

Eine weiterer Oszillator, der sich als erfindungsgemäße Meßschaltungskomponente besonders eignet, ist der (differentielle) Relaxationsoszillator, wie er beispielsweise in Passeraub, Philippe A.: "An integrated inductive proximity sensor", Konstanz, Hartung-Gorre, 1999, Series in microsystems; Vol. 1, Dissertation EPFL Lausanne, ISBN 3-89649-430-9 beschrieben wird. Figur 14 zeigt einen solchen Relaxationsoszillator.

Die Resonanzfrequenz des in Figur 14 gezeigten Relaxationsoszillators ist gegeben durch die implizite Gleichung:

$$L_2 = T \cdot \frac{R_2 + R_3}{4} \cdot \frac{1}{a \tanh\left(\frac{R_2 + R_3}{R_3} \cdot \tanh\left(\frac{T}{4 R_1 C_1}\right)\right)}$$

wobei:

$$f_{res} = \frac{1}{T}$$

Ein Vorteil dieses Oszillators liegt darin, daß die Sensitivität über den Widerstand $R_2$ im Verstärker-Rückführungskreis und die Wahl der Induktivität $L_2$ im Verstärker-Rückführungskreis über weite Bereiche eingestellt werden kann. Mit wachsender Induktivität $L_2$ nimmt die Frequenz des Oszillators sehr steil zu und erreicht (theoretisch) am Punkt:

$$L_{2,max} = R_1 C_1 R_3$$

den Wert Unendlich. Für Induktivitätswerte größer als $L_{2,max}$ kann keine Oszillation gestartet oder erhalten werden. Für Induktivitätswerte $L_2$ knapp unterhalb von $L_{2,max}$ ist die Sensitivität am größten. Das heißt, die Induktivität der unbelasteten Spule soll unter $L_{2,max}$ gewählt werden. $L_{2,max}$ soll knapp größer als die maximale Induktivität bei Belastung, d.h. bei vollständiger Annäherung an eine Eisenplatte, gewählt werden.

Auch ein sogenannter Colpitts-Oszillator ist besonders zur Verwendung als erfindungsgemäße Meßschaltungskomponente geeignet. Bezüglich der Ausführung eines solchen Oszillators wird auf die einschlägige Literatur zur Oszillatoren verwiesen.

### 8.8. Änderung der Impedanz einer Spule bei Näherung an ein Eisen

Näheres über die Änderung der Impedanz einer Spule bei Näherung an ein Eisen kann in der einschlägigen Literatur, beispielsweise in J. Vine, Impedance of a Coil Placed near to a Conducting Sheet, 1963, gefunden werden.

Dort wird die Induktivität L und der Widerstand R einer Luftspule mit Durchmesser a im Abstand d zu einer unendlich dicken leitenden Platte ist gegeben durch:

$$\frac{R}{\omega L_0} = \frac{a}{d} \int_0^\infty e^{-x} \cdot J_1^2\left(\frac{ax}{2d}\right) \cdot \left(\frac{\lambda - 2}{k}\right) dx$$

$$\frac{L}{L_0} = -\frac{a}{d} \int_0^\infty e^{-x} \cdot J_1^2\left(\frac{ax}{2d}\right) \cdot \left(\frac{4k(k+v)}{\lambda^2(\lambda+2)^2}\right) dx$$

Dabei bedeuten:

$$k = \frac{4d^2 \mu_0 \sigma \omega}{x^2}$$

$$\frac{\lambda^2}{2} = \sqrt{1+k^2} + 1$$

$$\frac{v^2}{2} = \sqrt{1+k^2} - 1$$

und

$$L_0 = \frac{\pi a \mu_0}{2}$$

Im Grenzfall von sehr hohen Leitfähigkeiten oder Frequenzen vereinfacht sich obige Formel zu:

$$R = 0$$

$$L(d) = \frac{-2L_0}{\pi a \sqrt{a^2 + d^2}} \left\{ \left(2d^2 + a^2\right) K\left[\frac{a}{\sqrt{d^2 + a^2}}\right] - 2\left(d^2 + a^2\right) E\left[\frac{a}{\sqrt{d^2 + a^2}}\right] \right\}$$

In erster Näherung ändert sich der Realteil also nicht; einzig die Induktivität nimmt ab.

Obwohl die bevorzugten und alternativen Ausführungsformen der Erfindung in dieser Beschreibung detailliert offenbart und beschrieben worden sind, ist für den Fachmann klar, daß verschiedene Änderungen bezüglich der Konfiguration, der Arbeitsweise und der Gestalt der Erfindung vorgenommen werden können, ohne den erfinderischen Gedanke sowie den Schutzbereich dieser zu verlassen. Insbesondere wird darauf hingewiesen, daß die jeweiligen Merkmale der Erfindung, einschließlich derjenigen, die lediglich in Kombination mit anderen Merkmalen der Erfindung offenbart sind, in beliebiger Konfiguration kombinierbar sind, außer denjenigen, die der Fachmann als offensichtlich unsinnig erkennt. Darüber hinaus zeigt die Verwendung des Singulars oder des Plurals lediglich auf eine Bevorzugung hin und ist nicht als Einschränkung zu interpretieren. Außer den Fällen, wo das Gegenteil explizit vermerkt ist, darf das Plural durch das Singular ersetzt werden und umgekehrt.

**Bezugszeichenliste**

| | |
|---|---|
| 00 | Bohrsystem |
| 01 | Werkzeugaufnahme |
| | |
| 10 | Bohrkrone |
| 11 | Hauptkronenteil |
| 12 | abbauender Bereich |
| 13 | abbauende Elemente |
| 14 | Befestigungsteil |
| 15 | abrasive Körner |
| 16 | leitende Matrix |
| | |
| 20 | Sensorvorrichtung |
| 21 | Halbleitermagnetfeldsensor |
| 21H | Hall-Sensor |
| 22 | Spule |
| 22E | Erregerspule |
| 22S | Sensorspule |
| 23 | Wirbelstrom-Sensorelement |

24      Joch
25      elektrisch leitender Bereich
26      elektrisch isolierender Bereich
27      ohmsche Kontakte
28      Permanentmagnet
29      Ferritkern

30      Vergußmasse
31      Verschleißfläche

40      Leitung
41      transformatorischer Übertrager
42      kapazitiver Übertrager
43      Schleifring
44      Erdpotential (des Untergrunds)
45      Kontaktfläche
46      Stift

50      Meß- und Auswertevorrichtung
51      Oszillator
52      Schwingkreis
53      Mikrokontroller

60      Signalisierungsvorrichtung
61      Anzeigevorrichtung

70      Antriebsmaschine
71      Leistungselektronik
72      Vorschubvorrichtung
73      Antriebvorrichtung
74      Werkzeugaufnahme

81      Armierungseisen
82      induziertes Magnetfeld

**Glossar der in den Figuren verwendeten fremdsprachlichen Begriffe**

arb. = beliebig
amplitude = Amplitude
amplitude detector = Amplitudendetektor
angle reference = Winkelreferenz
cable = Kabel
contact elements = Kontaktelemente
core bit = Kernbohrer
current = Strom
distance = Abstand
drive = Antrieb
feed = Vorschub
frequency = Frequenz
ground potential = Erdpotential
Hall voltage = Hall-Spannung
impedance = Impedanz
indicator = Indikator
main = Hauptantrieb
micro controller = Mikrokontroller
Ohm = Ohm

oscillator = Oszillator
output = Ausgangssignal
parallel capacity = Parallelkapazität
phase = Phase
phase detektor = Phasendetektor
power electronics = Leistungselektronik
reference angle = Bezugswinkel
resistance = Widerstand
RF-oscillator = Hochfrequenzoszillator
rotation angle = Rotationswinkel
sensor = Sensor
serial capacity = Serienkapazität
slip ring = Schleifring
speed = (Dreh-)Geschwindigkeit
speed sensor = (Dreh-)Geschwindigkeitssensor
target = zu detektierender Gegenstand

**Patentansprüche**

1. Bohrkrone,
   **gekennzeichnet durch**
   eine Sensorvorrichtung, deren physikalische Kenngröße(n) vom elektromagnetischen Umfeld der Bohrkrone abhängt bzw. abhängen.

2. Bohrkrone nach Anspruch 1,
   **dadurch gekennzeichnet, daß**
   die Sensorvorrichtung mindestens einen Magnetfeldsensor, insbesondere einen Halbleitermagnetfeldsensor, aufweist.

3. Bohrkrone nach Anspruch 2,
   **dadurch gekennzeichnet, daß**
   die Bohrkrone einen Permanentmagneten oder einen Elektromagneten aufweist, dessen Magnetfeld vom elektromagnetischen Umfeld der Bohrkrone beeinflußt und von der Sensorvorrichtung erfaßt wird.

4. Bohrkrone nach einem der vorhergehenden Ansprüche,
   **dadurch gekennzeichnet, daß**
   die Sensorvorrichtung mindestens eine Spule aufweist.

5. Bohrkrone nach Anspruch 4,
   **dadurch gekennzeichnet, daß**
   die Sensorvorrichtung mindestens eine um die Rotationsachse der Bohrkrone gewickelte Spule sowie mindestens eine parallel zur Mantelfläche der Bohrkrone gewickelte Spule umfaßt, die in oder an der Bohrkrone angeordnet sind, wobei
   die Bohrkrone aus nicht-ferromagnetischem Material, insbesondere aus nicht-ferromagnetischem Stahl, gefertigt ist.

6. Bohrkrone nach Anspruch 5,
   **dadurch gekennzeichnet, daß**
   die Bohrkrone aus einem Material mit schlechter Leitfähigkeit, insbesondere mit einer spezifischer Widerstand größer als $8 \times 10^{-7}$ Ωm gefertigt ist.

7. Bohrkrone nach einem der vorhergehenden Ansprüche,
   **dadurch gekennzeichnet, daß**
   die Sensorvorrichtung mindestens eine um die Rotationsachse der Bohrkrone gewickelte Spule umfaßt, die in oder an der Bohrkrone angeordnet ist, wobei
   die Bohrkrone ferromagnetisches Material enthält.

8. Bohrkrone nach einem der vorhergehenden Ansprüche,
    **dadurch gekennzeichnet, daß**
    die Sensorvorrichtung mindestens eine kapazitive Elektrode aufweist.

9. Bohrkrone einem der vorhergehenden Ansprüche, mit
    einem abtragenden Bereich,
    **dadurch gekennzeichnet, daß**
    die Sensorvorrichtung mindestens zwei elektrisch leitende Bereiche im abtragenden Bereich aufweist, die gegeneinander elektrisch isoliert sind.

10. Bohrkrone nach Anspruch 9,
    **dadurch gekennzeichnet, daß**
    die elektrisch leitenden Bereiche derart im abtragenden Bereich angeordnet sind, daß sie auch bei einer Abnutzung des abtragenden Bereichs voneinander elektrisch isoliert bleiben.

11. Bohrkrone nach einem der vorhergehenden Ansprüche, mit
    abtragenden Elementen
    **dadurch gekennzeichnet, daß**
    die Sensorvorrichtung mindestens zwei elektrisch leitende Elemente aufweist, die, elektrisch gegeneinander getrennt, in Höhe der abtragenden Elemente federnd oder beweglich gelagert sind.

12. Bohrkrone nach einem der vorhergehenden Ansprüche,
    **gekennzeichnet durch**
    eine Kommunikationsvorrichtung, die Sensorsignale von der Sensorvorrichtung direkt oder indirekt erhält, und diese in serielle Signale umwandelt, die über eine einzige Signalleitung kommunizierbar sind.

13. Bohrkrone nach einem der vorhergehenden Ansprüche,
    **gekennzeichnet durch**
    eine Meßvorrichtung, die Sensorsignale von der Sensorvorrichtung direkt oder indirekt erhält, und diese in Meßsignale umwandelt.

14. Bohrkrone nach Anspruch 13,
    **dadurch gekennzeichnet, daß**
    die Umwandlung der Sensorsignale in Meßsignale eine Verstärkung und/oder eine Meßgrößenumwandlung umfaßt.

15. Bohrkrone nach einem der vorhergehenden Ansprüche,
    **gekennzeichnet durch**
    eine Spannungsversorgungsvorrichtung, die allein aus der rotatorischen Bewegung der Bohrkrone Energie gewinnt, die zur Stromversorgung der Kommunikationsvorrichtung und/oder der Meßvorrichtung und/oder der Sensorvorrichtung dient.

16. Bohrsystem
    **gekennzeichnet durch**
    eine Bohrkrone nach einem der vorhergehenden Ansprüche, und
    eine Auswerteeinrichtung, die den Zustand der Sensorvorrichtung hinsichtlich der Erkennung ferromagnetischen Materials in der Nähe der Bohrkrone auswertet und ein entsprechendes Signal ausgibt.

17. Bohrsystem
    **gekennzeichnet durch**
    eine Bohrkrone nach einem der vorhergehenden Ansprüche einschließlich Anspruch 4;
    eine Erregerschaltung, welche die mindestens eine Spule derart erregt, daß Wirbelströme in dem die Spule umgebenden Material auftreten; und
    eine Auswerteeinrichtung, die Wirbelstromverluste der Spule derart auswertet, daß die Beschaffenheit des der Spule benachbarten Materials ermittelt und ein entsprechendes Signal ausgegeben wird.

18. Bohrsystem zur Bohrung eines geerdeten Gegenstands, insbesondere zum Abbau eines Untergrunds,
    **dadurch gekennzeichnet, daß**

dessen Bohrkrone mit einem Potential gegen Masse beaufschlagt und bei dem ein Leckstrom über die Bohrkrone und den umgebenden Untergrund gemessen werden.

19. Bohrsystem zum Abbau eines Untergrunds,
   **dadurch gekennzeichnet, daß**
   die Bohrkrone mit einer Wechselspannung oder Wechselstrom beaufschlagt und die von der Bohrkrone abgestrahlte Leistung gemessen wird.

20. Bohrsystem nach einem der Ansprüche 18-19,
   **gekennzeichnet durch**
   eine Auswerteeinrichtung, die den gemessenen Leckstrom bzw. die gemessene Abstrahlleistung derart auswertet, daß ferromagnetisches Material in der Nähe der Bohrkrone erkannt und ein entsprechendes Signal generiert wird.

21. Bohrsystem nach einem der Ansprüche 16, 17 oder 20,
   **gekennzeichnet durch**
   eine Signalisierungsvorrichtung, die in Abhängigkeit von dem erzeugten Signal
   eine Anpassung eines oder mehreren Bohrparameters automatisch vornimmt; und/oder
   einem Nutzer eine Anpassung eines oder mehreren Bohrparameters wahrnehmbar signalisiert; und/oder
   einem Nutzer die Detektion eines Targets wahrnehmbar, insbesondere visuell und winkeltreu, signalisiert; und/oder
   einem Nutzer einen Austausch der Bohrkrone wahrnehmbar signalisiert; und/oder
   den Bohrvorgang automatisch abbricht.

22. Bohrsystem nach Anspruch 21,
   **dadurch gekennzeichnet, daß**
   die Anpassung eines oder mehreren Bohrparameters eine Anpassung
   des Drehmoments;
   der Schnittgeschwindigkeit;
   der Wasserzufuhr;
   der Anpreßkraft; und/oder
   der Bohrleistung umfaßt.

23. Antriebsvorrichtung für eine Bohrkrone,
   **gekennzeichnet durch**
   Mittel zur Herstellung mindestens eines Signalübertragungspfads, vorzugsweise 2, 3 oder 4 Signalpfade, zur Bohrkrone.

24. Bohrsystem nach einem der Ansprüche 17-22,
   **gekennzeichnet durch**
   eine Antriebsvorrichtung gemäß Anspruch 23.

25. Verfahren zur Bestimmung eines von einer Bohrkrone abgebauten Untergrunds,
   **gekennzeichnet durch**
   ein Vorsehen der Bohrkrone mit einer Sensorvorrichtung, deren physikalische Kenngröße(n) vom elektromagnetischen Umfeld der Bohrkrone abhängt bzw. abhängen.

26. Verfahren nach Anspruch 25,
   **dadurch gekennzeichnet, daß**
   die Sensorvorrichtung mindestens einen Magnetfeldsensor, insbesondere einen Halbleitermagnetfeldsensor, aufweist.

27. Verfahren nach Anspruch 26,
   **dadurch gekennzeichnet, daß**
   die Bohrkrone einen Permanentmagneten oder einen Elektromagneten aufweist, dessen Magnetfeld vom elektromagnetischen Umfeld der Bohrkrone beeinflußt und von der Sensorvorrichtung erfaßt wird.

28. Verfahren nach einem der Ansprüche 25-27,

**dadurch gekennzeichnet, daß**
die Sensorvorrichtung mindestens eine Spule aufweist.

29. Verfahren nach Anspruch 28,
**dadurch gekennzeichnet, daß**
die Sensorvorrichtung mindestens eine um die Rotationsachse der Bohrkrone gewickelte Spule sowie mindestens eine parallel zur Mantelfläche der Bohrkrone gewickelte Spule umfaßt, die in oder an der Bohrkrone angeordnet sind, wobei
die Bohrkrone aus nicht-ferromagnetischem Material, insbesondere aus nicht-ferromagnetischem Stahl, gefertigt ist.

30. Verfahren nach Anspruch 29,
**dadurch gekennzeichnet, daß**
die Bohrkrone aus einem Material mit schlechter Leitfähigkeit, insbesondere mit einer spezifischer Widerstand größer als $8 \times 10^{-7}$ Ωm gefertigt ist.

31. Verfahren nach einem der Ansprüche 25-30,
**dadurch gekennzeichnet, daß**
die Sensorvorrichtung mindestens eine um die Rotationsachse der Bohrkrone gewickelte Spule umfaßt, die in oder an der Bohrkrone angeordnet ist, wobei
die Bohrkrone ferromagnetisches Material enthält.

32. Verfahren nach einem der Ansprüche 25-31,
**dadurch gekennzeichnet, daß**
die Sensorvorrichtung mindestens eine kapazitive Elektrode aufweist.

33. Verfahren nach einem der Ansprüche 25-32, wobei
die Bohrkrone einen abtragenden Bereich aufweist,
**dadurch gekennzeichnet, daß**
die Sensorvorrichtung mindestens zwei elektrisch leitende Bereiche im abtragenden Bereich aufweist, die gegeneinander elektrisch isoliert sind.

34. Verfahren nach Anspruch 33,
**dadurch gekennzeichnet, daß**
die elektrisch leitenden Bereiche derart im abtragenden Bereich angeordnet sind, daß sie auch bei einer Abnutzung des abtragenden Bereichs voneinander elektrisch isoliert bleiben.

35. Verfahren nach einem der Ansprüche 25-34, wobei
die Bohrkrone abtragende Elemente aufweist,
**dadurch gekennzeichnet, daß**
die Sensorvorrichtung mindestens zwei elektrisch leitende Elemente aufweist, die, elektrisch gegeneinander getrennt, in Höhe der abtragenden Elemente federnd oder beweglich gelagert sind.

36. Verfahren nach einem der Ansprüche 25-35,
**gekennzeichnet durch**
eine Umwandlung von direkt oder indirekt von der Sensorvorrichtung stammenden Sensorsignalen in serielle Signale, die über eine einzige Signalleitung kommunizierbar sind.

37. Verfahren nach einem der Ansprüche 25-36,
**gekennzeichnet durch**
eine Umwandlung von direkt oder indirekt von der Sensorvorrichtung stammenden Sensorsignalen in Meßsignale.

38. Verfahren nach Anspruch 37,
**dadurch gekennzeichnet, daß**
die Umwandlung der Sensorsignale in Meßsignale eine Verstärkung und/oder eine Meßgrößenumwandlung umfaßt.

**39.** Verfahren nach einem der Ansprüche 25-38,
**gekennzeichnet durch**
eine zur Umwandlung der Sensorsignale dienende Energiegewinnung allein aus der rotatorischen Bewegung der Bohrkrone.

**40.** Verfahren nach einem der Ansprüche 25-39
**gekennzeichnet durch**
eine Auswertung des Zustands der Sensorvorrichtung hinsichtlich der Erkennung ferromagnetischen Materials in der Nähe der Bohrkrone; und
eine Ausgabe eines entsprechenden Signals.

**41.** Verfahren nach einem der Ansprüche 25-40 Ansprüche einschließlich Anspruch 28,
**gekennzeichnet durch**
ein Versehen eines die Bohrkrone umfassenden Bohrsystems mit einer Erregerschaltung, welche die mindestens eine Spule derart erregt, daß Wirbelströme in dem die Spule umgebenden Material auftreten; und
ein Versehen des Bohrsystems mit einer Auswerteeinrichtung, die Wirbelstromverluste der Spule derart auswertet, daß die Beschaffenheit des der Spule benachbarten Materials ermittelt und ein entsprechendes Signal ausgegeben wird.

**42.** Verfahren zur Bestimmung eines von einer Bohrkrone abgebauten, geerdeten Untergrunds,
**dadurch gekennzeichnet, daß**
die Bohrkrone mit einem Potential gegen Masse beaufschlagt und bei dem ein Leckstrom über die Bohrkrone und den umgebenden Untergrund gemessen werden.

**43.** Verfahren zur Bestimmung eines von einer Bohrkrone abgebauten Untergrunds,
**dadurch gekennzeichnet, daß**
die Bohrkrone mit einer Wechselspannung oder Wechselstrom beaufschlagt und die von der Bohrkrone abgestrahlte Leistung gemessen wird.

**44.** Verfahren nach einem der Ansprüche 42-43,
**gekennzeichnet durch**
eine Auswertung des gemessenen Leckstroms bzw. der gemessenen Abstrahlleistung derart, daß ferromagnetisches Material in der Nähe der Bohrkrone erkannt und ein entsprechendes Signal generiert wird.

**45.** Verfahren nach einem der Ansprüche 40, 41 oder 44,
**gekennzeichnet durch**
eine automatische Anpassung eines oder mehreren Bohrparameters; und/oder
eine einem Nutzer wahrnehmbare Signalisierung einer Anpassung eines oder mehreren Bohrparameters; und/oder
eine einem Nutzer wahrnehmbare, insbesondere visuelle und winkeltreue, Signalisierung einer Detektion eines Targets; und/oder
eine einem Nutzer wahrnehmbare Signalisierung eines Austausches der Bohrkrone; und/oder
eine automatische Abbrechung des Bohrvorgangs, wobei
die Anpassung, die Signalisierung und/oder die Abbrechung in Abhängigkeit von dem erzeugten Signal erfolgt.

**46.** Verfahren nach Anspruch 45,
**dadurch gekennzeichnet, daß**
die Anpassung eines oder mehreren Bohrparameters eine Anpassung
des Drehmoments;
der Schnittgeschwindigkeit;
der Wasserzufuhr;
der Anpreßkraft; und/oder
der Bohrleistung umfaßt.

**47.** Verfahren zum Antrieben einer Bohrkrone mittels einer Antriebsvorrichtung,
**gekennzeichnet durch**
ein Versehen der Antriebsvorrichtung mit Mitteln zur Herstellung mindestens eines Signalübertragungspfads, vorzugsweise 2, 3 oder 4 Signalpfade, zur Bohrkrone.

**48.** Bohrverfahren
   **gekennzeichnet durch**
   das Verfahren zur Bestimmung des Untergrunds einer Bohrkrone nach einem der Ansprüche 25-46; und
   das Verfahren zum Antrieben einer Bohrkrone mittels einer Antriebsvorrichtung gemäß Anspruch 47.

FIG. 1C

FIG. 1A

FIG. 1B

FIG. 2A

FIG. 2B

FIG. 2C

FIG. 2D

EP 1 591 182 A2

FIG. 2E

FIG. 3A

FIG. 3B

FIG. 4A

FIG. 3C

FIG. 4F

FIG. 4B

FIG. 4C

FIG. 4D

FIG. 4E

FIG. 5A

543
543
540'
514
546
574
545
510
540
540
512
513
513
513
520
513'
512

FIG. 5B

540    540
513'
520
523
530
522
529
531

FIG. 6A

EP 1 591 182 A2

FIG. 6D

FIG. 6E

FIG. 6B

FIG. 6C

FIG. 6F

FIG. 6H

$651$

$R_P$    $C_P$    $L_{PP}$    $f$

$652'$

FIG. 6G

FIG 6I

$651$

$622$    $R$    $(A-1)R_1$    $R_1$    $C_P$    $L$    $641$    $652$

$Z_S = R_s + i\omega L_s$

EP 1 591 182 A2

FIG. 7C

FIG. 7D

FIG. 6J

FIG. 7A

EP 1 591 182 A2

FIG. 7B

EP 1 591 182 A2

serial capacity

Impendance (Ohm)

Ls=0.2 mH
Ls=0.3 mH
Ls=0.4 mH
Ls=0.5 mH
Ls=0.6 mH
Ls=0.7 mH
Ls=0.8 mH
Ls=0.9 mH
Ls=1 mH
Ls=1.1 mH

frequency (Hz)

x 10⁴

## FIG. 7E

frequency Hz

Inductivity
mHz

## FIG. 7F

FIG. 8A

800

core bit

810

822

842

$C_s$

indicator

micro
controller

power
electronics

drive

amplitude

frequency

speed

amplitude
detector

oscillator
851

speed
sensor

FIG. 8B

851

852

$Z_s = R_s + i\omega L_s$

$C_K$

$f$

FIG. 9A

FIG. 9B

EP 1 591 182 A2

FIG. 9C

FIG. 9D

FIG. 9E

OM 286

$R_1$ $R_2$ $R_4$ $R_8$ $R_L$

$U_P$ 5 P

$D_1$ $T_1$ $T_2$ $T_3$

2

4

$R_3$ 6 Q

$N_1$ $R_X$ $R_9$ $R_6$

$C_1$ $C_2$

3

$R_5$ $R_7$ $T_4$ $D_2$

$N_2$

1 7 E

FIG. 10

1020 1043

current

indicator

1021H 1028

Hall PM

slip ring $R_{shunt}$

A/D

power supply

frequency

micro controller

ground potential

core bit 1144

1010

speed sensor

speed

angle reference

reference angle

1000

power electronics

drive

EP 1 591 182 A2

FIG. 11

FIG. 12

FIG. 13A    FIG. 13B

FIG. 14

EP 1 591 182 A2

FIG. 15A

FIG. 15B

FIG. 15C

FIG. 15D

FIG. 16